Europäisches Patentamt

European Patent Office

Office européen des brevets

(19)

(11) **EP 1 347 315 A1**

(12) **EUROPEAN PATENT APPLICATION**
published in accordance with Art. 158(3) EPC

(43) Date of publication:
**24.09.2003 Bulletin 2003/39**

(21) Application number: **01272891.1**

(22) Date of filing: **27.12.2001**

(51) Int Cl.7: **G02B 6/00**

(86) International application number:
**PCT/JP01/11513**

(87) International publication number:
**WO 02/054119 (11.07.2002 Gazette 2002/28)**

(84) Designated Contracting States:
**DE FR GB**

(30) Priority: **28.12.2000 JP 2000402128**
**21.05.2001 JP 2001151104**
**20.09.2001 JP 2001286059**

(71) Applicant: **FUJI ELECTRIC CO., LTD.**
**Kawasaki-shi, Kanagawa 210-0856 (JP)**

(72) Inventors:
• **TANAKA, Hideyuki,**
**c/o FUJI ELECTRIC CO., LTD.**
**Kawasaki-shi, Kanagawa 210-0856 (JP)**
• **KANNO, Toshiyuki,**
**c/o FUJI ELECTRIC CO., LTD.**
**Kawasaki-shi, Kanagawa 210-0856 (JP)**

• **KOBAYASHI, Takeshi,**
**c/o FUJI ELECTRIC CO., LTD.**
**Kawasaki-shi, Kanagawa 210-0856 (JP)**
• **FURUKAWA, Masaharu,**
**c/o FUJI ELECTRIC CO., LTD.**
**Kawasaki-shi, Kanagawa 210-0856 (JP)**
• **SAITO, Tetsuya, c/o FUJI ELECTRIC CO., LTD.**
**Kawasaki-shi, Kanagawa 210-0856 (JP)**
• **YOKOMORI, Noriharu,**
**c/o FUJI ELECTRIC CO., LTD.**
**Kawasaki-shi, Kanagawa 210-0856 (JP)**
• **SUZUKI, Yoshiyuki,**
**c/o FUJI ELECTRIC CO., LTD.**
**Kawasaki-shi, Kanagawa 210-0856 (JP)**

(74) Representative: **Lucas, Brian Ronald et al**
**Lucas & Co.**
**135 Westhall Road**
**Warlingham, Surrey CR6 9HJ (GB)**

(54) **LIGHT GUIDING PLATE AND LIQUID CRYSTAL DISPLAY DEVICE WITH THE LIGHT GUIDING PLATE**

(57)     A light guiding plate capable of extracting the polarized component of light that was not utilized effectively, reducing the number of parts such as light emitting elements, and reducing a power consumption and a liquid crystal display device having the light guiding plate; the light guiding plate (1), comprising a light guiding means (40) for guiding the light incident from a light source (2), a polarizing and splitting means (10) allowing the outgoing of only the polarization in one direction, a reflection means (30) for reflecting the light, and a light converting means (20) disposed between the polarizing and splitting means (10) and the reflection means (30) and converting the polarization direction of the light transmitted therethrough.

FIG. 1

## Description

## Technical Field

The present invention relates to a light guiding plate emitting polarized light in a predetermined direction such as the light for lighting of a liquid crystal panel and a liquid crystal display device using this guiding plate.

## Background Art

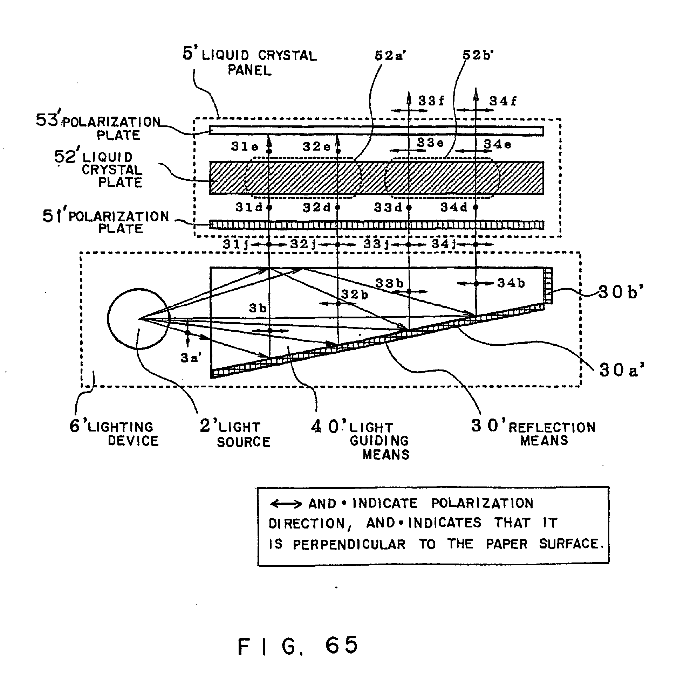

In a liquid crystal display device using a liquid crystal panel 5' used in the display device of a data terminal, etc., the liquid crystal panel 5'. is used, for example, together with the lighting device 6' shown in Fig. 65 since it itself does not emit light. The lighting device 6' shown in Fig. 65 comprises a light source 2', such as a cold cathode tube, a light guiding means 40' made of a transparent material and a reflection means 30' (30a' and 30b').

Light 3a' emitted from the light source 2' enters the light guiding means 40', advances through the light guiding means while being repeatedly reflected on the reflection means 30' and is emitted in the direction of the liquid crystal panel 5'. In this case, in order to uniformly light the liquid crystal panel 5', the light guiding means 40' is sometimes structured in such a way as to diffuse light or provide light with directivity, which is described in detail later.

In the liquid crystal panel 5', a liquid crystal plate 52' is held by polarization plates 51' and 53'. If linear polarized light having a prescribed direction is inputted in a part 52a' where a display signal is added (hereinafter called "a display part 52a'"), which is not shown in Fig. 65, the liquid crystal plate 52' lets the light transmit it. If the light is inputted in a part 52b' where there is no display signal (hereinafter called "a transmission part 52b'"), the liquid crystal plate 52' turns its polarization direction by 90 degrees and emits it. Such a function is put in practical use in a twist-nematic type liquid crystal panel. In an actual twist-nematic type liquid crystal panel 5', the direction of linear polarized light that transmits the polarization plate 51' and that of linearly polarized light that transmits the uncontrolled liquid crystal plate 52' are the same, and the direction of polarized light that transmits the polarization plate 53' and that of polarized light that transmits the polarization plate 51' are orthogonal to each other.

If in such a structure, light is emitted from the lighting device 6', only components that are perpendicular to the paper surface that transmit the polarization plate 51' of the polarized components (31d through 34d) of the unpolarized light (31j through 34j) that is inputted from the lighting device 6' to the polarization plate 51', transmit the polarization plate 51' due to the polarization splitting function of the polarization plate 51' of the liquid crystal panel 5'.

If linear polarized light 31d through 34d having a prescribed direction is inputted in the part 52a' displaying graphics, characters, etc. and the transmission part 52b' generating the entire backlight of the liquid crystal plate 52', 31e and 32e transmit the display part 52a' without changing its polarization direction, and 33e and 24e transmit the transmission part 52b' after their polarization directions are turned by 90°.

Therefore, as a whole, in an uncontrolled display part (transmission part 52b'), polarized light for lighting that transmits the polarization plate 51' (linear polarized light 33f and 34f) transmits the liquid crystal panel 5', lights up the entire surface of the. liquid crystal panel 5' and applies voltage only to a part displaying graphics, characters, etc., (display part 52a'). In a graphic/character pattern part (display part 52a'), light orthogonal to the polarization plate 53' transmits the liquid crystal panel 5'. However, since the polarization plate 53' absorbs the light, the part is displayed in black.

Thus, the polarization plate 51' absorbs light other than transmitted light 31d through 34d of light (31j through 34j) inputted from the lighting device (polarized components marked with a bi-directional arrow in parallel to the paper surface), that is, more than half of the total quality of light.

Next, examples of conventional liquid crystal display devices/lighting devices disclosed are described.

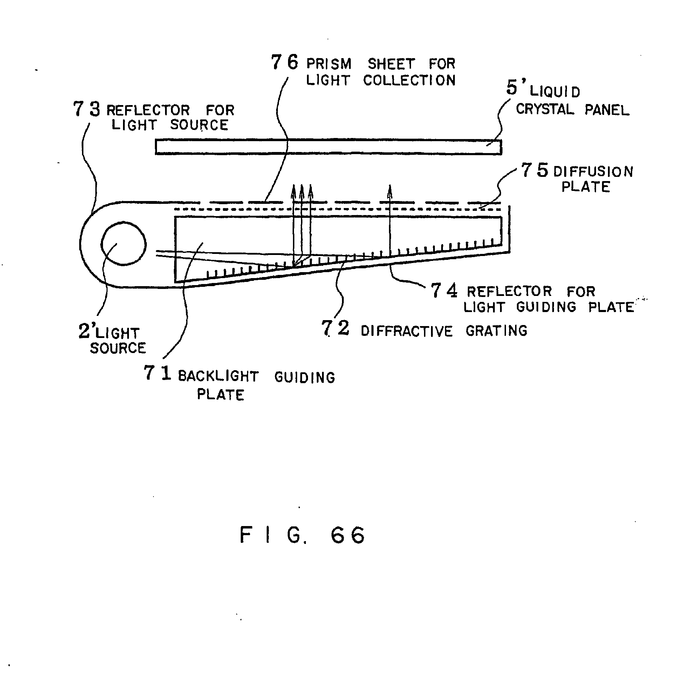

Fig. 66 shows the liquid crystal display device disclosed in a series of Japanese patents; Japanese Patent No. 2813131 "Backlight Guiding Plate using Diffractive Grating", Japanese Patent No. 2865618 "Light Guiding Plate and Light Guiding Plate Assembly" and Japanese Patent No. 2986773 "Light Guiding Plate for Point Light Source". The device aims at high and uniform luminance.

In Fig. 66, light inputted to a backlight guiding plate 71 from the light source 2' is diffracted by a diffractive grating, and light for lighting is generated through a diffusion plate 75 and a condensing prism sheet 76 as the backlight of the liquid crystal panel 5'. In this case, the diffractive grating 72 generates the light in periods of sub-micron to several tens of microns, and the light uniformly lights up the surface of the backlight guiding plate 71. The diffusion plate 75 can also solve chromatic aberration.

The diffractive grating 72 described in these examples is used to reflect/polarize light inputted to a light guiding plate from a light source in the direction of a liquid crystal panel. The Japanese patents disclose that the diffractive grating 72 is formed by repeating a single form, such as a sine wave, a sawtooth (blaze), rectangle, etc.

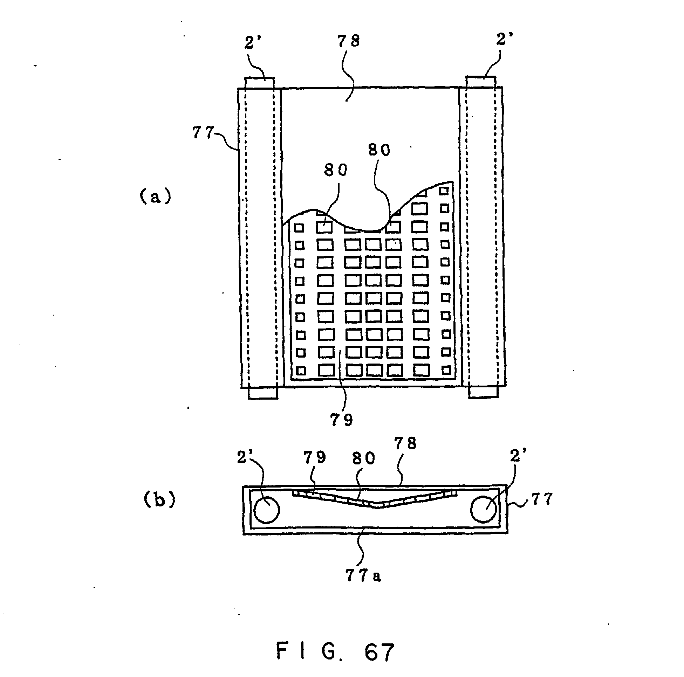

Fig. 67 shows the lighting device comprising a set of two light sources 2' set in a casing, a reflection plate 77a disposed facing space formed between the light sources 2' and the diffusion plate 78, which is disclosed in Japanese Patent Laid-open No. 5-142536 "Lighting Device". Furthermore, in the lighting device, the distance from the reflection plate 77a of space formed between the reflection plate 77a and the diffraction plate 78 decreases as the space gets away from the light source 2'. The lighting device is further provided with a light adjustment plate 79 having many holes 80, whose diameter increases as the hole gets away from the light source 2'.

Thus, a reflection surface and a diffraction surface are formed by the reflection plate 77a and the diffraction plate 78, respectively. The light adjustment plate 79 plays both roles of reflecting/diffracting light in the casing 77. By adjusting the diameter and distribution density of the holes 80, the weight of a lighting device can be reduced and light can be uniformly and efficiently distributed.

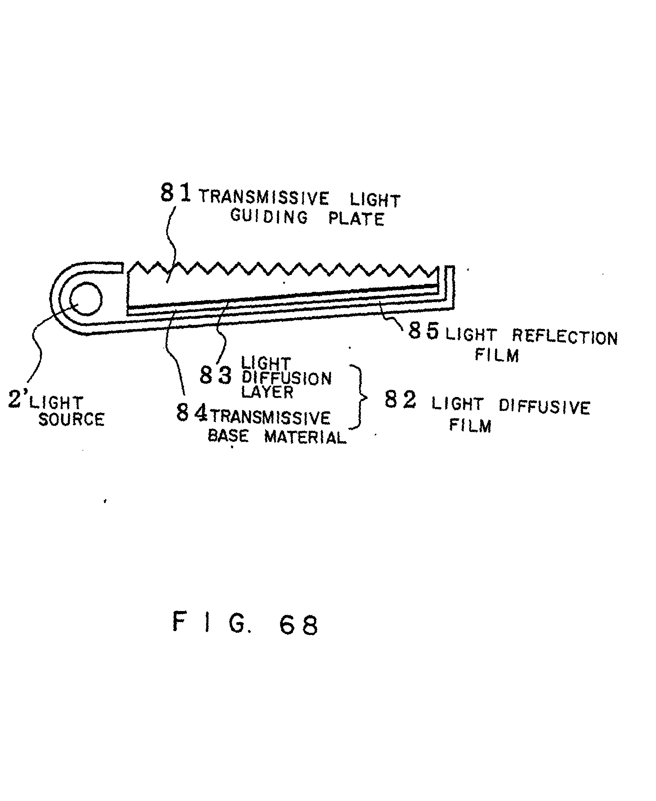

Fig. 68 shows the light guiding plate for lighting disclosed in Japanese Patent Laid-open No. 8-286043 "Light Guiding Plate of Liquid Crystal Display Device and Manufacturing Method thereof". In the light guiding plate, a light diffraction film 82 is formed all over the bottom surface of a transmissive light guiding plate 81, and a prism shape is formed on the other surface of the transmissive light guiding plate 81. Thus, light can be uniformly applied to a liquid crystal display device, the conventional dot pattern print on the bottom surface of the transmissive light guiding plate 81 can be eliminated, the troublesome backlight formation due to the installation of the diffraction plate 77 and the condensing prism sheet for 76 in order to hide this dot pattern that is described in Fig. 66, can be removed, and light using efficiency can be improved thanks to the installation of the diffraction plate 75.

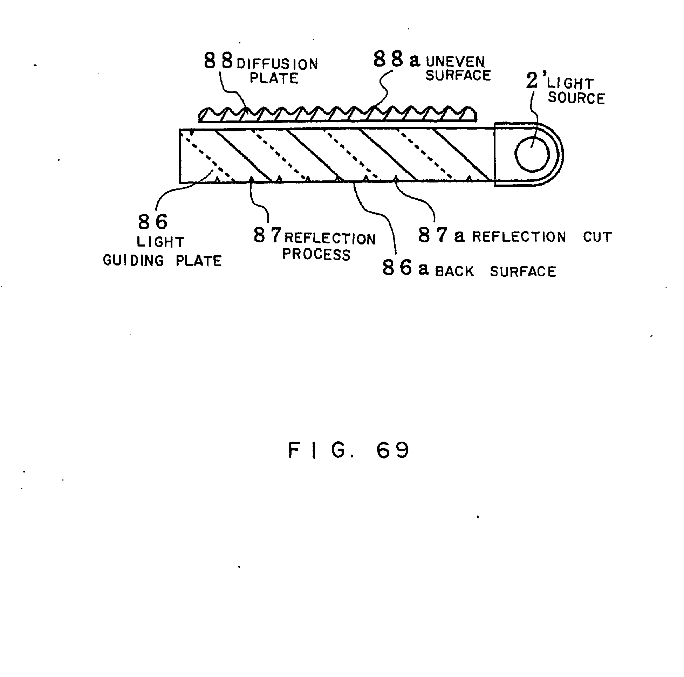

Fig. 69 shows the backlight lighting device disclosed in Japanese Patent Laid-open No. 9-306221 "Backlight Lighting Device". In the backlight lighting device, a line of reflection cut 87a along the axis of the light source 2'is formed for a reflection process 87 to be performed on the back surface 86a of a light guiding plate 86. An uneven surface 88a is formed in parallel to the axis of the light source 2' on the lighting side of a diffraction plate 88. Thus, light can be almost all reflected on the back surface 86a of the light guiding plate 86 by total reflection. Even if reflection cut 87a with high reflection efficiency is applied, diffraction effect greater than that of the conventional diffraction plate can be obtained using the uneven surface 88a formed on the diffraction plate 88. Accordingly, uneven luminance can be prevented and luminance can be improved.

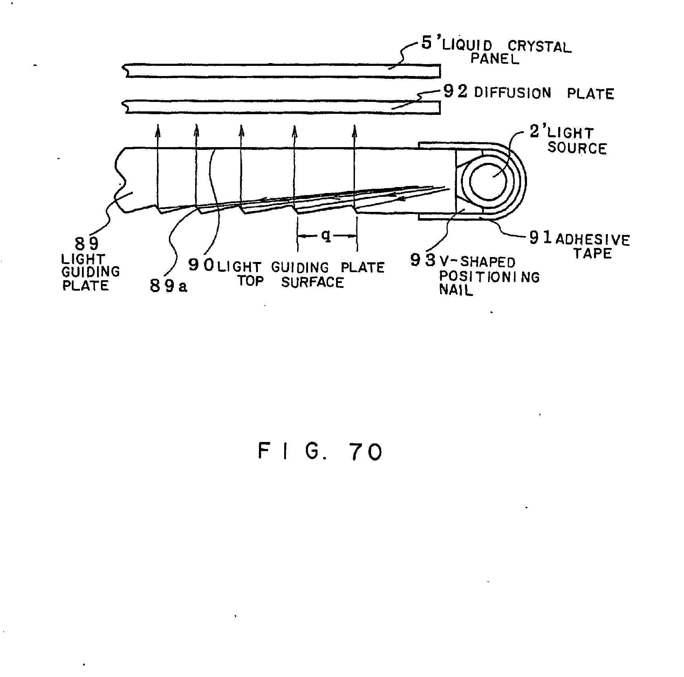

Fig. 70 shows the backlight guiding plate disclosed in Japanese Patent Laid-open No. 5-196820 "Backlight Guiding Plate". A light guiding plate 89 leading light to the back surface of the liquid crystal panel 5' is provided. A tube type light source 2' is further provided for one side or either ends on both sides of the light guiding plate. Thus, a very small reflection surface 89a reflecting light inputted to the back surface of this light guiding plate 89 from the sides to the front surface is formed. Furthermore, by providing a light source fixing position determining structure comprising of an adhesive tape 91 and a V-shaped positioning nail 93, a compact and bright screen can be realized, and backlight whose consumption power is low can be formed.

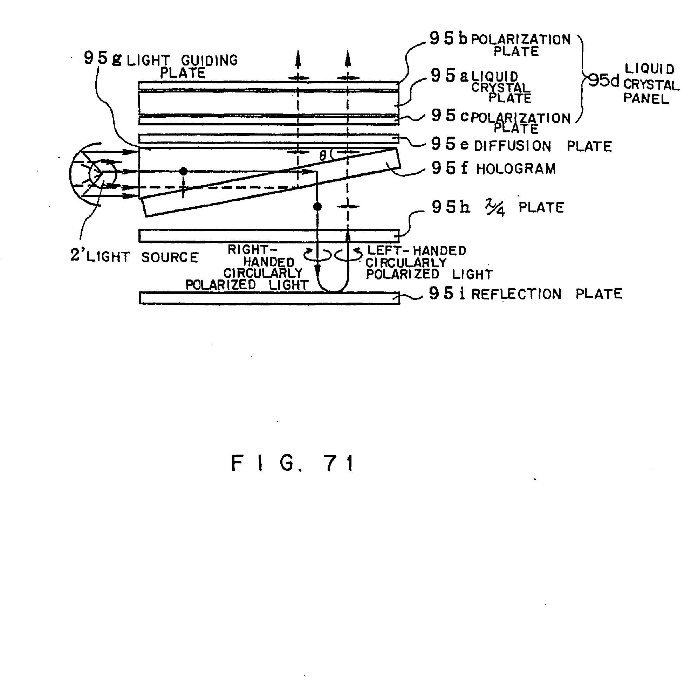

Fig. 71 shows the liquid crystal display device disclosed in Japanese Patent Laid-open No. 11-281978 "Backlight Manufacturing Method and Liquid Crystal Display Device". A diffusion plate 95e, a light guiding plate 95g with a hologram 95f, a $\lambda/4$ plate 95h and a reflection plate 95i are provided for the back of the screen of a liquid crystal panel 95d in which a liquid crystal plate 95a is inserted between polarization plates 95b and 95c. The hologram 95f polarizes/separates light to be reflected from light to be transmitted, based on the polarization direction of light inputted to the light guiding plate 95g from the light source 2' and improves light using efficiency by using both the reflected light and the transmitted light.

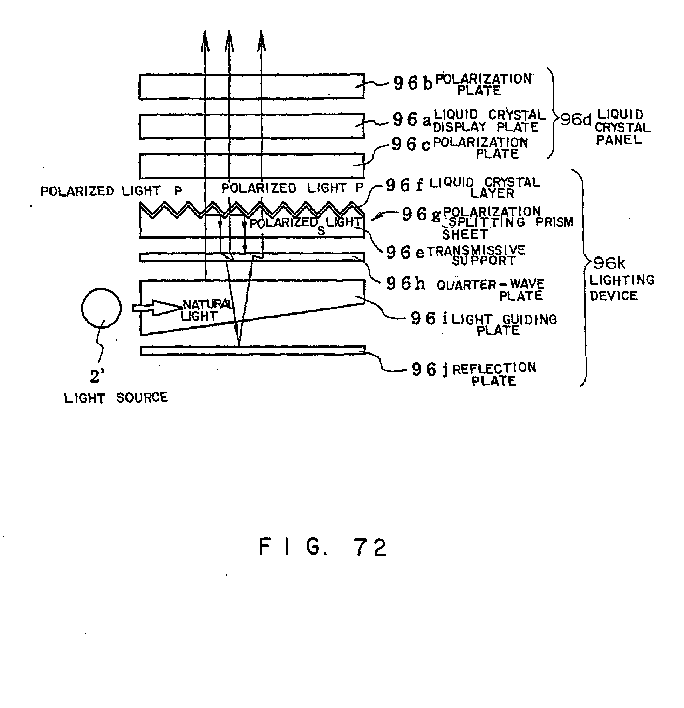

Fig. 72 shows the system disclosed in Japanese Patent Laid-open No. 2001-188126 "Polarization Splitting Prism Sheet and Lighting Device". The system comprises a liquid crystal panel 96d, in which a liquid crystal plate 96a is inserted between polarization plates 96b and 96c, and an lighting device 96k, which further comprises a polarization splitting prism sheet 96g with a liquid crystal layer 96f on the surface of its transmissive uneven support 96e, a quarter-wave plate 96h, a light guiding plate 96i and a reflection plate 96j. The lighting device 96k is provided for the back surface of the screen of the liquid crystal panel 96d. Light inputted to the light guiding plate 96i from the light source 2' is polarized/separated into reflected light and transmitted light, and by using both the reflected light and the transmitted light, light using efficiency can be improved.

Japanese Patent Laid-open Nos. 10-253830 and 11-149074 also disclose such a structure for improving light using efficiency by using both reflected light and transmitted light in the same way of thinking as that of Japanese Patent Laid-open No. 2001-188126.

Japanese Patent Laid-open No. 9-274109 "Sheet Polarization Device and Liquid Crystal Display Device using it" discloses a structure for polarization-splitting light inputted to a light guiding plate using a sheet prism and improving light using efficiency using both reflected light and transmitted light.

Furthermore, Japanese Patent Laid-open No. 10-253830 "Backlight Unit" discloses a backlight unit using a device having a polarization splitting function.

In these structures, light using efficiency can be improved by using a device having a polarization splitting function, and bright backlight whose consumption power is low, can be generated.

In the conventional liquid crystal display devices/lighting devices described in Figs. 65 through 70, attention is paid to the luminance and its uniformity of light on a phase light source, which is emitted to the entire back of a liquid crystal panel from a light source disposed on the edge of a light guiding plate. However, the liquid crystal panel itself is a device to be lit using polarized light having a prescribed direction, and half of the quantity of light inputted to the liquid crystal panel is eliminated by a polarization plate and is not used, which is a problem.

In the conventional liquid crystal display devices/lighting devices described in Figs. 71 and 72, a polarized component that does not conventionally contribute to the lighting is effectively used by using a polarization splitting device. However, since in these structures, a polarization splitting device and a phase plate are added as new parts. The addition of the new parts incurs the large size and high cost of the entire device, which is a problem.

The present invention is made in order to solve the problems described above, and an object of the present invention is to extract a polarized component to preventing it from entering a light guiding means, such as a liquid crystal panel, etc., as a polarized component to be inputted to the liquid crystal panel, by returning it by a polarization splitting means, which is a grating structure and is provided on the surface of the light guiding means, and inputting the component again to the polarization splitting means by a reflection means, which is a reflection plate, while changing linear polarization direction by a polarization converting means. Thus, the polarized component of light that is not conventionally effectively used can also be extracted. Therefore, alight guiding plate, whose number of parts, such as emitting devices, etc., and whose consumption power is reduced, and a liquid crystal display device with such a light guiding plate can be realized.

**Disclosure of Invention**

In order to solve the problems described above a light guiding plate is improved and a liquid crystal display device is realized using such a light guiding panel. Thus, a very thin liquid crystal display device, the reduction in the number of parts and the luminance improvement are all realized.

According to the light guiding plate of claim 1, a light guiding plate comprises

polarization splitting means for splitting input light into light to be transmitted and light to be reflected, based on its polarization direction;

reflection means for reflecting light;

polarization converting means for providing light to be transmitted with a phase difference in such a way as to meet the condition of $\theta_1 + n \cdot 180°$ ($30° \leq \theta_1 \leq 150°$, n: integer); and

light guiding means for holding the polarization converting means between the polarization splitting means and refection means and incorporating these means .

According to the light guiding plate of claim 2,

the light guiding plate of claim 1 provides transmission light with a phase difference in such a way as to meet the condition of $\theta_2 + n \cdot 180°$ ($45° \leq \theta_2 \leq 135°$, n: integer) preferably in 80% or more of the area of the polarization converting means.

According to the light guiding plate of claim 3,

the light guiding plate of claim 1 or 2 further provides transmission light with a phase difference in such a way as to meet the condition of $\theta_3 + n \cdot 180°$ ($60° \leq \theta_3 \leq 120°$, n: integer) more preferably in 60% or more of the area of the polarization converting means.

According to the light guiding plate of claim 4, in the light guiding plate of one of claims 1 through 3,

said polarization splitting means is a grating structure composed of dielectric gratings formed by periodically repeating a transparent dielectric material.

According to the light guiding plate of claim 5, in the light guiding plate of claim 4,

the cross section of the dielectric grating of the grating structure is formed by periodically repeating either a convex part whose cross section is a rectangle, a trapezoid, a triangle, a sine wave or a combination of a plurality of such convex parts.

According to the light guiding plate of claim 6, in the light guiding plate of claim 5,

the dielectric grating of the grating structure is formed by periodically repeating the convex part of a rectangle, a trapezoid, a triangle or a sine wave. The grating period and groove depth of grating are between 0.3 and 0.8μm, and between 0.2 and 0.5μm, respectively.

According to the light guiding plate of claim 7, in the light guiding plate of claim 6,

the convex part of the dielectric grating of the grating structure is composed of a plurality of shapes formed by combining a basic shape with a minute shape.

According to the light guiding plate of claim 8, in the light guiding plate of one of claims 1 through 3,

the polarization splitting means is a grating structure formed by adding one surface layer of a substance made of a substance having a prescribed refractive index or a plurality of surface layers formed by piling substances each with a different refractive index between adjacent layers to the surface of a dielectric grating formed by periodically repeating a transparent dielectric material.

According to the light guiding plate of claim 9, in the light guiding plate of claim 8,

the cross section of the dielectric grating of the grating structure is formed by periodically repeating either a convex part whose cross section is a rectangle, a trapezoid, a triangle, a sine wave or a combination of a plurality of such convex parts.

According to the light guiding plate of claim 10, in the light guiding plate of claim 9,

the period and groove depth of the dielectric grating of the grating structure are between 0.3μm and 0.8μm, and between 0.2 and 0.5μm, respectively, and
the layer on the surface of the grating structure is formed by alternatively piling a layer of titanium dioxide ($TiO_2$) or tantalum pentaoxide ($Ta_2O_5$), 50nm through 150nm thick and a layer of silicon dioxide ($SiO_2$), 70nm through 200nm thick.

According to the light guiding plate of claim 11, in the light guiding plate of claim 10,

the grating structure comprises a silicon monoxide (SiO) layer 0 through 100nm thick between the dielectric grating and the surface layer.

According to the light guiding plate of claim 12, in the light guiding plate of claim 11,

the convex part of the dielectric grating of the grating structure is composed of a plurality of shapes formed by combining a basic shape with a minute shape.

According to the light guiding plate of claim 13, in the light guiding plate of one of claims 8 through 12,

the grating structure comprises on the surface of the dielectric grating
a layer formed by piling a substance diluted by a solvent and repeating the process of eliminating the solvent one or more times by a spin coating method or a roll coating method, or
a layer formed by piling a single layer of a substance or a plurality of layers formed by piling substances each having a different refractive index between adjacent layers by an evaporation method, a sputtering method or an ion plating method.

According to the light guiding plate of claim 14, in the light guiding plate of one of claims 1 through 3,

the polarization splitting means is a grating structure formed by adding a single surface layer of a substance having a prescribed refractive index or a plurality of surface layers formed by piling substances each having a different refractive index between adjacent layers, on the concave part of a dielectric grating formed by periodically piling a transparent dielectric material.

According to the light guiding plate of claim 15, in the light guiding plate of claim 14,
**[0043]** The cross section of the dielectric grating of the grating structure is formed by periodically repeating either a convex part whose cross section is a rectangle, a trapezoid, a triangle, a sine wave or a combination of a plurality of such convex parts.

According to the light guiding plate of claim 16, in the light guiding plate of claim 15,

the period and groove depth of the dielectric grating of the grating structure are between 0.3μm and 0.8μm, and 0.2μm and 0.5μm, respectively, and
the layer on the surface of the concave part of the grating structure is formed by alternately piling a layer of titanium dioxide ($TiO_2$) or tantalum pentaoxide ($Ta_2O_5$), 50nm through 150nm thick and a layer of silicon dioxide (SiO2) 70nm through 200nm thick.

According to the light guiding plate of claim 17, in the light guiding plate of claim 16,

the grating structure comprises a silicon monoxide (SiO) layer, 0nm through 100nm thick, between the dielectric grating and the surface layer.

According to the light guiding plate of claim 18, in the light guiding plate of claim 17,

the convex part of the dielectric grating of the grating structure is composed of a plurality of shapes formed by combining a basic shape with a minute shape.

According to the light guiding plate of claim 19, in the light guiding plate of one of claims 14 through 18,

the grating structure comprises on the surface of the dielectric grating
a surface layer formed by piling a single substance or a plurality of substances each having a different refractive index between adjacent layers, on the concave part diluted by a solvent, eliminating the solvent and further repeating a process of eliminating only the substance on the top in the concave part of the dielectric grating one or more times by a spin coating method or a roll coating method, or
a surface layer formed on the concave part by piling a single substance or a plurality of substances each having a different refractive index between adjacent layers and repeating a process of eliminating the substance on the top in the convex part one or more times, by an evaporation method, a sputtering method or an ion plating method.

According to the light guiding plate of claim 20, in the light guiding plate of one of claims 1 through 3,

the polarization splitting means is a grating structure composed of a grating formed by periodically repeating the convex part formed by piling substances each having a different refractive index between adjacent layers.

According to the light guiding plate of claim 21, in the light guiding plate of claim 20,

The cross section of the grating structure is formed by periodically repeating either a concave part whose cross section is a rectangle, a trapezoid, a triangle, a sine wave or a combination of a plurality of such convex parts.

According to the light guiding plate of claim 22, in the light guiding plate of claim 21,

the grating structure is a grating formed by applying an emboss-process to
a film formed by piling substances each having a different refractive index between adjacent layers, diluted by a solvent and repeating the process of eliminating the solvent one or more times, by a spin coating method or a roll coating method, or
a film formed by piling substances each having a different refractive index between adjacent layers, by an evaporation method, a sputtering method or an ion plating method.

According to the light guiding plate of claim 23, in the light guiding plate of one of claims 1 through 3,

the polarization splitting means is a grating structure composed of metallic gratings formed by periodically piling a metallic material, on the surface of a dielectric grating formed by periodically piling a transparent dielectric material and is periodically repeated.

According to the light guiding plate of claim 24, in the light guiding plate of claim 23,

the metallic grating of the grating structure is composed of a metallic thin film whose refractive index is 60% or more.

According to the light guiding plate of claim 25, in the light guiding plate of claim 24,

the metallic thin film of the metallic grating is a single compound of Mg, Se, Y, Ti, Cr, Mo, W, Mn, Fe, Co, Ni, Ru, Pt, Cu, Ag, Au, Zn, Al, In, Si, Ge, Te, Pb or Sn or an alloy of two or more of such elements.

According to the light guiding plate of claim 26, in the light guiding plate of one of claims 23 through 25,

The cross section of the dielectric grating of the grating structure is formed by periodically repeating a concave part whose cross section is a rectangle, a trapezoid, a triangle, a sine wave or a combination of a plurality of such convex parts.

According to the light guiding plate of claim 27, in the light guiding plate of claim 26,

the dielectric grating of the grating structure is formed by periodically repeating a convex part whose cross section is a rectangle, a trapezoid, a triangle or a sine wave,
and its period and groove depth are between 0μm and 0.4μm and between 0μm and 0.2μm, respectively.

According to the light guiding plate of claim 28, in the light guiding plate of claim 27,

the convex part of the dielectric grating of the grating structure is composed of a plurality of shapes formed by combining a basic shape with a plurality of minute shapes.

According to the light guiding plate of claim 29, in the light guiding plate of one of claims 1 through 3,

the polarization splitting means is a grating structure provided with a light guiding means, and a transparent substrate or a transparent film with a metallic grating formed by periodically repeating a metallic material.

According to the light guiding plate of claim 30, in the light guiding plate of claim 29,

the metallic grating of the grating structure is composed of a metallic thin film whose refractive index is 60% or more.

According to the light guiding plate of claim 31, in the light guiding plate of claim 30,

the metallic thin film of the metallic grating is a single compound of Mg, Se, Y, Ti, Cr, Mo, W, Mn, Fe, Co, Ni, Ru, Pt, Cu, Ag, Au, Zn, Al, In, Si, Ge, Te, Pb or Sn or an alloy of two or more of such elements.

According to the light guiding plate of claim 32, in the light guiding plate of claim 30 or 31,

the thickness of the metallic thin film, the period T and width of the metallic grating are 0.5μm or more, between 0.05 and 0.25μm, and in the range of 0.25T and 0.85T, respectively.

According to the light guiding plate of claim 33, in the light guiding plate of one of claims 29 through 32,

a foundation layer is formed between the light guiding means, transparent substrate or transparent film, and the metallic grating, and a protection film is formed on the surfaces of the metallic grating and the foundation layer.

According to the light guiding plate of claim 34, in the light guiding plate of one of claims 29 through 33,

the metallic grating is formed on the surface of the light guiding means, transparent substrate, transparent film or foundation layer through a mask with a striped grating pattern, by an evaporation method, a sputtering method, an ion plating method or a dry edging method.

According to the light guiding plate of claim 35, in the light guiding plate, which is one of claims 29 through 34 and has a grating structure in which a metallic grating composed of a metallic film, is formed on the front side of the transparent film,

the grating structure is formed by forming a metallic grating on the transparent film, forming the metallic grating into a minute pattern by expanding the transparent film in the direction of stripes and pasting the pattern on the light guiding means or the transparent substrate, together with the transparent film.

According to the light guiding plate of claim 36, in the light guiding plate of one of claims 1 through 35,

the light guiding means is made of resin and the polarization splitting means has double-refraction distribution.

According to the light guiding plate of claim 37, in the light guiding plate of claim 36,

the material of the light guiding means is acrylic resin, polycarbonate resin, acrylonitrile/styrene resin, epoxy resin or olefin resin.

According to the light guiding plate of claim 38, in the light guiding plate of claim 36 or 37,

internal double-refraction is formed by an anisotropic skin layer.

According to the light guiding plate of claim 39, in the light guiding plate of one of claims 36 through 38,

a light guiding means made of resin has large orientation.

According to the light guiding plate of claim 40, in the light guiding plate of one of claims 36 through 39,

a resin that forms the light guiding means contains a prescribed quantity of resin polymer having anisotropy, different from a main material.

According to the light guiding plate of claim 41, in the light guiding plate of claim 40,

a resin polymer different from the main material is styrene beads or liquid crystal polymer.

According to the light guiding plate of claim 42, in the light guiding plate of one of claims 1 through 41,

the reflection means is provided for the entire surface or part of the surface of the light guiding means other than the surface, through which light is inputted and the surface on which the polarization splitting means is formed.

According to the light guiding plate of claim 43, in the light guiding plate of one of claims 1 through 42,

part of the reflection means or the entire reflection means is a diffusive hologram composed of minute convex/concave parts, a volume-diffusive hologram or a speckle diffusive surface, and it diffuses/reflects light toward the polarization splitting means.

According to the light guiding plate of claim 44, in the light guiding plate of claim 43,

a metallic reflection film is formed on the diffusive hologram, volume-diffusive hologram or speckle diffusive surface of the reflection means.

According to the light guiding plate of claim 45, in the light guiding plate of claim 43 or 44,

one diffusive hologram of the reflection means branches one segment of input light into a plurality of segments of output light, and has phase difference distribution P(x) expressed as follows, assuming that phase difference distribution that converts input light having phase difference distribution $P_1(x)$ into the i-th output light, is $P_i(x)$

$$P(x) = \text{mod}[\sum_{j=2}^{k} a_j(x) \cdot \text{mod}[P_j(x) - P_1(x) + c_j, \pi] + \text{mod}[P_1(x) + c_1, \pi], m\pi]$$

$$\cdot \cdot \cdot (1)$$

(in the above equation, x, $\pi$, m, k, $a_j$, $c_j$ and mod [A, B] are a vector indicating the position in a diffusive hologram, a circle ratio, a natural number, an integer of 2 or more, a function that meets $0 < a_j < 1$, a constant and a function to indicate the remainder obtained when dividing A by B, respectively).

According to the light guiding plate of claim 46, in the light guiding plate of claim 45, a surface shape D' (x) is expressed as follows in such a way that the phase difference distribution of the diffusive hologram of the reflection means may become P(x).

$$D'(x) = -(1/2_{ns}) \cdot (\lambda/\pi) \cdot P(x) \qquad (2)$$

(In the above equation, $n_s$ and $\lambda$ indicate the refractive index of a medium around a diffusive hologram and a wavelength, respectively.)

According to the light guiding plate of claim 47, in the light guiding plate of one of claims 1 through 42,

the reflection means is made of metal.

According to the light guiding plate of claim 48, in the light guiding plate of claim 47,

the metal is a single compound of Mg, Se, Y, Ti, Cr, Mo, W, Mn, Fe, Co, Ni, Ru, Pt, Cu, Ag, Au, Zn, Al, In, Si, Ge, Te, Pb or Sn or an alloy of two or more of such elements.

According to the light guiding plate of claim 49, in the light guiding plate of one of claims 1 through 42,

the reflection means is made of a multi-layer dielectric film.

According to the light guiding plate of claim 50, in the light guiding plate of claim 49,

a metallic reflective film is formed on the multi-layer dielectric film.

According to the light guiding plate of claim 51, in the light guiding plate of one of claims 1 through 42,

the reflection means is a pattern formed by printing.

According to the light guiding plate of claim 52, in the light guiding plate of one of claims 1 through 42,

the reflection means is a scattering surface.

According to the light guiding plate of claim 53, in the light guiding plate of one of claims 1 through 52,

the transmissivity of the polarization splitting means increases as its position gets further away from the light source.

According to the light guiding plate of claim 54, in the polarization splitting means of the light guiding plate of one of claims 1 through 53,

a grating structure is formed in such a way that the polarization splitting means may become almost orthogonal to light inputted from the light source.

According to the light guiding plate of claim 55, in the light guiding plate of one of claims 1 through 54,

the refractive index of the polarization splitting means increases as its position gets further away from the light source.

According to the liquid crystal display device of claim 56, it comprises

a light source,
a light guiding plate described in one of claims 1 through 55, transmitting one of the two polarized components of light emitted from the light source, which are orthogonal, and
a liquid crystal panel lit by polarized light emitted from the light guiding plate.

According to the liquid crystal display device of claim 57, in the liquid crystal display device of claim 56,

the liquid crystal panel comprises
a liquid crystal plate, and
a pair of polarization plates whose respective polarization directions are orthogonal, and
the polarization converting means and the polarization plates are disposed in such a way that the polarization direction of polarized light that transmits the polarization converting means and the polarization direction of polarized light that transmits the polarization plates disposed between the liquid crystal panel and the light guiding plate may become orthogonal.

**Brief Description of the Drawings**

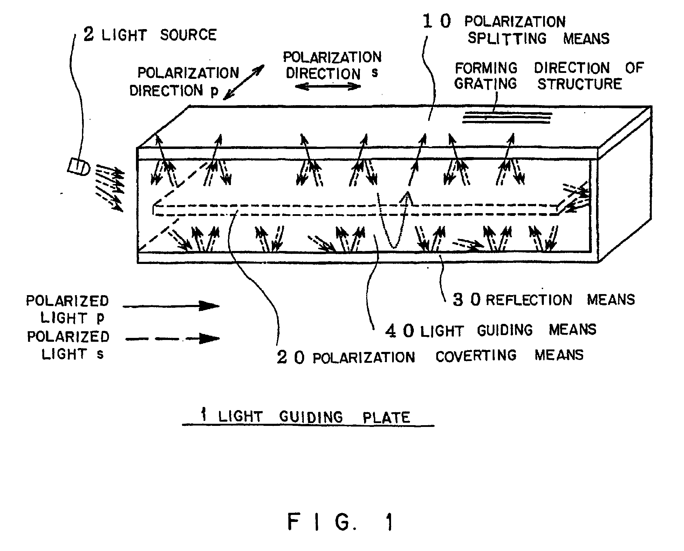

Fig. 1 shows the rough structure of a light guiding plate (No. 1);
Fig. 1 shows the rough structure of a light guiding plate (No. 2);
Fig. 3 shows the spectral characteristic of light emitted from a cold cathode tube;
Fig. 4 shows the cross section of a grating structure (No. 1);
Fig. 5 shows the cross section of a grating structure (No. 2);
Fig. 6 shows the cross section of a grating structure (No. 3);
Fig. 7 shows the cross section of a grating structure (No. 4);
Fig. 8 shows the relationship between the grating structure and transmitted light;
Fig. 9 shows the rough structure of the grating structure (No. 1);
Fig. 10 shows the rough structure of the grating structure (No. 2);
Fig. 11 shows the rough structure of the grating structure (No. 3);
Fig. 12 shows the rough structure of the grating structure (No. 4);
Fig. 13 shows the polarization splitting characteristic of the grating structure (No. 1);
Fig. 14 shows the polarization splitting characteristic of the grating structure (No. 2);
Fig. 15 shows the polarization splitting characteristic of the grating structure (No. 3);
Fig. 16 shows the polarization splitting characteristic of the grating structure (No. 4);
Fig. 17 shows the cross section of the convex part of a multi-stepped shape;
Fig. 18 shows the manufacturing method of the grating structure by a photo-mask and light exposure;
Fig. 19 shows the rough structure of the grating structure;
Fig. 20 shows an example structure of the grating structure (No.1);
Fig. 21 shows the polarization splitting characteristic of the grating structure (No. 1);
Fig. 22 shows an example of the grating structure (No. 2);
Fig. 23 shows the polarization splitting characteristic of the grating structure (No. 2);
Fig. 24 shows the structure of the grating structure (No. 3);
Fig. 25 shows the manufacturing method of the grating structure (No. 3);
Fig. 26 shows the structure of the grating structure (No. 4);
Fig. 27 shows the structure of the grating structure (No. 5);
Fig. 28 shows the manufacturing method of the grating structure (No. 4);
Fig. 29 shows the structure of the grating structure (No. 6);
Fig. 30 shows the structure of the grating structure (No. 7);
Fig. 31 shows the rough structure of the grating structure (No. 8);
Fig. 32 shows the polarization splitting characteristic of the grating structure (No. 8);
Fig. 33 shows the rough structure of the grating structure (No. 9);
Fig. 34 shows the polarization splitting characteristic of the grating structure (No. 9);
Fig. 35 shows the structure of the grating structure No. 10);
Fig. 36 shows the polarization splitting characteristic of the grating structure (No. 11);
Fig. 37 shows the squint cross-section of another grating structure (No.1);
Fig. 38 shows the squint cross-section of another grating structure (No.2);
Fig. 39 shows the squint cross-section of another grating structure (No.3);
Fig. 40 shows the manufacturing method of a film with a metallic thin film evaporated;
Fig. 41 shows the double-refraction distribution characteristic of a light guiding means (No. 1);
Fig. 42 shows the double-refraction distribution characteristic of a light guiding means (No. 2);
Fig. 43 shows the double-refraction distribution characteristic of a light guiding means (No. 3);
Fig. 44 shows the principle of a diffusive hologram;

EP 1 347 315 A1

Fig. 45 shows a printed pattern;

Fig. 46 shows the comparison/evaluation of a luminance improvement ratio;

Fig. 47 shows a polarization splitting means whose grating period varies with its position;

Fig. 48 shows a polarization splitting means whose dielectric grating shape varies with its position;

Fig. 49 shows a reflection means whose printed pattern varies with its position;

Fig. 50 shows a reflection means using a diffusive hologram that converts a reflection direction depending on its position (No. 1);

Fig. 51 shows a reflection means using a diffusive hologram that converts a reflection direction depending on its position (No. 2);

Fig. 52 shows the radiation angle range of the light guiding plate for a lighting device;

Fig. 53 shows the rough structure of a liquid crystal display device (No.1);

Fig. 54 shows the AB cross section of the liquid crystal display device that indicates the relationship between the grating structure and transmitted light;

Fig. 55 compares the liquid crystal display device of the present invention with the conventional one;

Fig. 56 shows the rough structure of a liquid crystal display device (No.2);

Fig. 57 shows the rough structure of another preferred embodiment (No. 1);

Fig. 58 shows the rough structure of another preferred embodiment (No.2);

Fig. 59 shows the rough structure of another preferred embodiment (No.3);

Fig. 60 shows the rough structure of a liquid crystal display device (No.3);

Fig. 61 shows the cross section of a dielectric grating (SEM picture);

Fig. 62 shows the polarization splitting characteristic of the dielectric grating;

Fig. 63 shows the configuration of laboratory equipment measuring a luminance improvement ratio;

Fig. 64 shows the cross section of a dielectric grating with a three-layer film (SEM picture);

Fig. 65 shows the major cross section structure of a conventional liquid crystal display device;

Fig. 66 shows the major cross section structure of another conventional liquid crystal display device No. 1);

Fig. 67 shows the major cross section structure of another conventional lighting device (No. 1);

Fig. 68 shows the major cross section structure of another conventional lighting device (No. 2);

Fig. 69 shows the major cross section structure of another conventional lighting device (No. 3);

Fig. 70 shows the major cross section structure of another conventional lighting device (No. 2);

Fig. 71 shows the major cross section structure of another conventional lighting device (No. 3); and

Fig. 72 shows the major cross section structure of another conventional lighting device No. 4).

**Best Mode for Carrying Out the Invention**

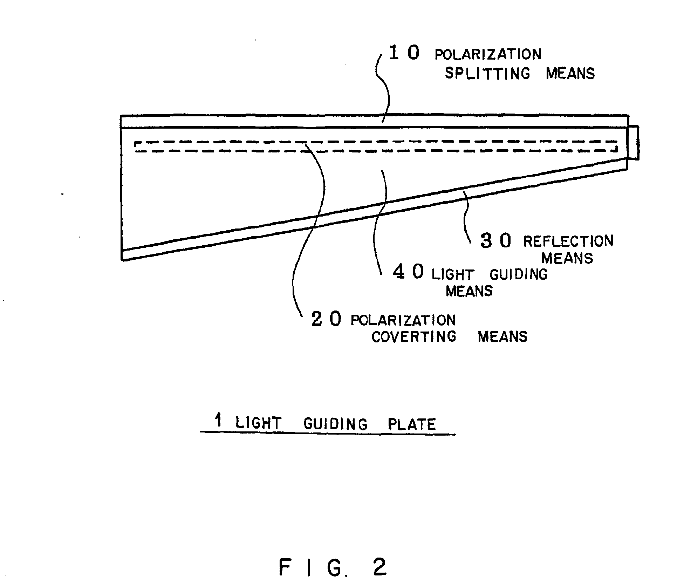

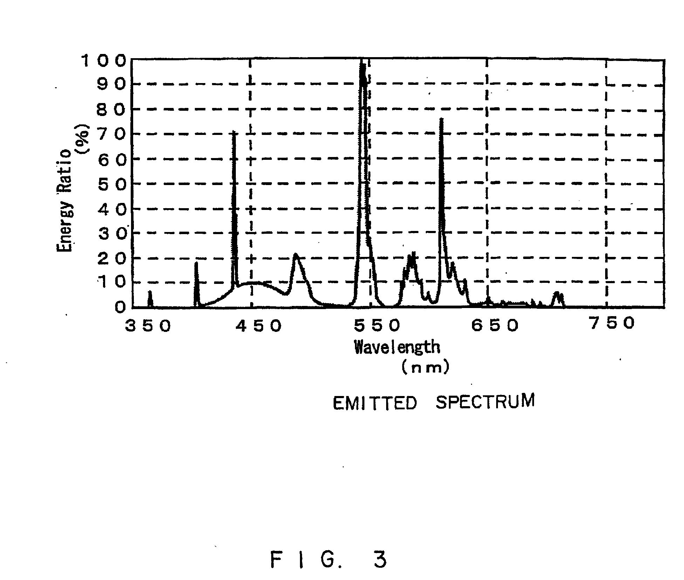

The first preferred embodiment of the light guiding plate of the present invention is described with reference to the drawings. Figs. 1 and 2 show the rough structure of the light guiding plate. Fig. 3 shows the spectral characteristic of light emitted from a cold cathode tube. The light guiding plate in this preferred embodiment ranks highest in concept. As shown in Fig. 1, the light guiding plate comprises a polarization splitting means 10, a polarization converting means 20, a reflection means 30 and light guiding means 40. Particularly, the light guiding means 40 is inserted between the polarization splitting means and the reflection means 30, and incorporates the polarization converting means 20.

Alternatively, as shown in Fig. 2, the light guiding means 40 can also have a slope on one side (be wedge-shaped).

Next, this structure is described. Since a light guiding plate 1 improves the luminance improvement ratio of polarized light in one direction, how the light guiding plate 1 influences light inputted from a light source 2 is described below.

As shown in Fig. 1, the light source 2 emits light. This light advances while being alternatively reflected on the reflection surface of the reflection means 30 and on the polarization splitting surface of the polarization splitting means 10.

The polarization splitting means 10 splits input light into light to be reflected and light to be transmitted depending on its light polarization direction. The polarization splitting means 10 transmits polarized light p in the direction shown in Fig. 1 and reflects polarized light s as light to be transmitted and light to be reflected, respectively.

As shown in Fig. 1, which is described in detail later, polarized light p and polarized light s that are described in this specification are determined based on the forming direction of a grating structure. Light perpendicular to the direction of forming of a grating structure and that in parallel to the direction of forming are defined as polarized light p and polarized light s, respectively.

Light reflected on the polarization splitting means 10 (polarized light s) transmits through the polarization converting means 20. This polarization converting means 20 provides light to be transmitted with a double-refraction phase difference that meets a range condition $\theta_1 + n \cdot 180°$ ($30° \leq \theta_1 \leq 150°$, n: integer)(hereinafter called "condition 1").

The transmitted light reaches the reflection means 30.

The reflection means 30 reflects incoming light, and directs it toward the polarization converting means 20 and the polarization splitting means 10. Although in this preferred embodiment, the reflection means 30 simply reflects light, a variety of reflection means that can control reflection direction can also be adopted. The details of the reflection means 30 are described later.

The polarization converting means 20 provides transmitted light again with a double-refraction phase difference that meets condition 1. The light that has transmitted the polarization converting means 20 reaches to the polarization splitting means 10.

Thus, the light is provided with a double-refraction phase difference of $2 \cdot \theta_1 + n \cdot 360°$ ($60° \leq 2 \cdot \theta_1 \leq 360°$) in total while it is once reflected between the polarization splitting means 10 and the reflection means 30. This means that the light is provided with a double-refraction phase difference in such a way as to cover $\pm 120°$ using $180°$ as a center.

It is well known that the light is provided with a double-refraction phase difference of $180°$, in other words, if its phase is shifted by a half wavelength, its polarization direction is converted into $90°$. The polarization direction of light inputted to the polarization splitting means 10 from this polarization converting means 20 is converted into a prescribed range using $90°$ as a center ($\pm 60°$ using $90°$ as a center, that is, $30° \leq \alpha \leq 150°$) (that is, a polarized light s-rich light is converted to a polarized light p-rich light), and polarized component (polarized light p) transmits through the polarization splitting means 10.

Polarized light s that cannot transmit through the polarization splitting means 10 and is reflected also takes the same optical path again and finally transmits through the polarization splitting means 10.

Even if polarized light s reflected on the polarization splitting surface of the polarization splitting means 10 is once reflected on the bottom reflection surface of the reflection means 30, all segments of light do not reach the polarization splitting surface of the polarization splitting means 10. However, all the segments of polarized light s are statistically converted into polarized light p while being multiply reflected between the polarization splitting surface and reflection surface, and transmit through the polarization splitting surface of the polarization splitting means 10. Since light is utilized without waste, the luminance improvement ratio can be enhanced.

In this preferred embodiment, as shown in Fig. 2, the light guiding means 40 can also be wedge-shaped and the reflection means 30 can also be inclined. Thus, inputted light can be surely reflected toward the polarization splitting means 10.

It has been described that the polarization converting means 20 of this preferred embodiment provides light to be transmitted with a double-refraction phase difference of $\theta_1 + n \cdot 180°$ ($30° \leq \theta_1 \leq 150°$, n: integer) . In this case, a double-refraction phase difference to be provided varies with the wavelength of light emitted from the light source 2. This point is briefly described below.

Specifically, the light source 2 can be a monochrome light source or a white light source.

For a monochrome light source, a monochrome LED laser diode that outputs a laser beam with a specific wavelength (for example, a single wavelength, such as red 700nm, green 546.1nm or blue 435.8nm) can be used.

For a white light source, a light source that emits light in a wide wavelength range, such as a cold cathode tube light source or a white LED light source (light source in which a fluorescent material converts an ultraviolet ray emitted from an LED chip into a white ray) . Furthermore, there are a variety of light sources, such as a white LED light source that generates a white ray by emitting a plurality of segments of monochrome light in two complementary colors, three primary colors RGB, etc. Such a white light source emits a plurality of rays each with a different wavelength in a wide band, as clearly seen from the spectral characteristic shown in Fig. 3.

Next, the point that a double-refraction phase difference provided by the polarization converting means 20 depends on an optical wavelength and its condition varies depending on the type of a light source 2 to be used, is described.

For example, in the case of a monochrome light source, such as a laser beam, in which a light source emits light with a single wavelength, etc., its wavelength is in a narrow band. Therefore, the wavelength is determined in such a way that a double-refraction phase difference may meet condition 1 or preferably become $90°$.

Although the polarization converting means 20 provides light to be transmitted with a double-refraction phase difference of $\theta_1 + n \cdot 180°$ ($30° \leq \theta_1 \leq 150°$, n: integer), this double-refraction phase difference can also be expressed by length instead of an angle. If n=0, the double-refraction phase difference can be expressed as follows:

If the wavelength of a laser beam is 700nm,
700nm·30°/360° = 58.3nm and
700nm·150°/360° = 291.7nm.

Specifically, if in the case of n=0, a double-refraction phase difference to be provided can be set in the range of 58.3nm through 291.7nm, condition 1 is met. It is acceptable if the polarization converting means 20, that provides more of a double-refraction phase difference of approximately 175nm in which the difference becomes $90°$, is used.

Similarly, if the wavelength of a laser beam is 550nm,

550nm·30°/360° = 45.8nm and
550nm·150°/360° = 229.2nm.

Specifically, if in the case of n=0, a double-refraction phase difference to be provided can be set in the range of 45.8nm through 229.2nm, condition 1 is met. It is acceptable if the polarization converting means 20, that provides more of a double-refraction phase difference of approximately 137.5nm in which the difference becomes 90°, is used.

Similarly, if the wavelength of a laser beam is 400nm,

400nm·30°/360° = 33.3nm and
400nm·150°/360° = 166.7nm.

Specifically, if in the case of n=0, a double-refraction phase difference to be provided can be set in the range of 33.3nm through 166.7nm, condition 1 is met. It is acceptable if the polarization converting means 20 that provides more of a double-refraction phase difference of approximately 100nm in which the difference becomes 90°, is used.

Condition 1 assumes that the polarization converting means 20 converts most of the polarized component s of light into polarized light p while it is reflected between the polarization splitting means 10 and the reflection means 30. In this case, although some segments of light go and come back two or more times instead of one time, most of them are reflected on the reflection surface of the reflection means 30 and come back to the reflection splitting surface of the polarization splitting means 10. Therefore, the double-refraction phase difference provided by the polarization converting means 20 is approximately 90° in the groove depth direction of the light guiding plate 1, and it is preferable to provide it on the condition of $\theta_1 + n \cdot 180°$ ($30° \leq \theta_1 \leq 150°$).

As described above, in the case of a monochrome light source, a double-refraction phase difference that the polarization converting means 20 provides can be easily determined. However, if the light source 2 emits light in a wide wavelength range like a white light source, that is, a cold cathode tube light source/white LED light source, a double-refraction phase difference that meets condition 1 cannot be easily determined.

In order to solve the problem, the polarization converting means 20 of the present invention determines a double-refraction phase difference in such a way as to meet condition 1 (to provide 90°) at a wavelength located almost at the center of a visible wavelength area where a light source dominantly emits white light.

In the case of a white LED light source in which white light is obtained by emitting aplurality of segments of monochrome light, such as two complementary colors, three primary colors RGB, etc., the polarization converting means 20 determines a double-refraction phase difference in such a way as to meet condition 1 (to provide 90°) in a wavelength located almost at the center of wavelengths for those two or three colors.

For example, the case where a white light source in which white light is obtained by emitting the laser beams of three primary colors RGB with wavelengths 700nm, 550nm and 400nm, respectively, is described below. In this case, a wavelength located almost at the center is 550nm. If a double-refraction phase difference is expressed in length, in the case of n=0, a double-refraction phase difference is provided in the range of 45.8nm through 229.2nm. However, as in the above calculation, light with a wavelength of 700nm is provided with a double-refraction phase difference of 90° instead of that of 175nm. Light with a wavelength of 400nm is provided with a double-refraction phase difference of 90° instead of that of 100nm. These double-refraction phase differences are included in the range of 45.8nm through 229.2nm, and a double-refraction phase difference of nearly 90° is provided for all the wavelengths for three primary colors RGB. Therefore, a white light source can also be applied to a light guiding plate with the polarization converting means 20 of condition 1 of this preferred embodiment.

In this preferred embodiment, since the polarization converting means 20 is positioned between the polarization splitting means 10 and the reflection means 30, light can be made to transmit through the polarization splitting means 10 by converting its polarization direction in such a way that the light may transmit through the polarization converting means 20 twice both ways. Polarized light s contains a polarized component p (if its polarization direction is converted by 90°, all components become polarized light p) when the polarized light s is reflected on the polarization splitting surface of the polarization splitting means 10.

By adopting such a structure, only one of two segments of polarized light that are orthogonal can be extracted more efficiently, and accordingly a luminance improvement ratio can be enhanced, which is an advantage.

Next, the second preferred embodiment is described. In this preferred embodiment, in order to further enhance a luminance improvement ratio, approximately 80% of the area of the polarization convertingmeans 20 provide light to be transmitted with a double-refraction phase difference in such a way as to preferably meet the condition of $\theta_2 + n \cdot 180°$ ($45° \leq \theta_2 \leq 135°$, n: integer) (hereinafter called "condition 2").

In this case too, condition 2 varies depending on the type of a light source. For example, in the case of a monochrome light source, the polarization converting means 20 provides light to be transmitted with a double-refraction

phase difference of $\theta_2+n\cdot180°$ ($45°\leq\theta_2\leq135°$, n: integer). If as in the above calculation, the double-refraction phase difference is expressed in length, in the case of n=0, it is as follows.

If a wavelength is 700nm, the following can be obtained:

700nm·45°/360° = 87.5nm and
700nm·135°/360° = 262.5nm.

Specifically, in the cases of n=0, it is acceptable if the double-refraction phase difference can be provided in the range of 87.5nm through 262.5nm. It is acceptable if a polarization converting means 20 is set to provide more of a double-refraction phase difference of approximately 175nm, which corresponds to 90°. In this case, since this range is narrower than 58.3nm through 291.7nm of condition 1, the polarization converting means 20mustbe setmore strictly, whose specific setting method is described later.

Similarly, if a wavelength is 550nm, the following can be obtained:

550nm·45°/360° = 68.8nm and
550nm·135°/360° = 206.3nm.

Specifically, in the cases of n=0, it is acceptable if the double-refraction phase difference can be provided in the range of 68.8nm through 206.3nm. It is acceptable if a polarization converting means 20 is set to provide more of a double-refraction phase difference of approximately 137.5nm, which corresponds to 90°. In this case, since this range is narrower than that of condition 1 being 45.8nm through 229.2nm, the polarization converting means 20 must be set more strictly.

Similarly, if a wavelength is 400nm, the following can be obtained:

400nm·45°/360° = 50.0nm and
400nm·135°/360° = 150.0nm.

Specifically, in the cases of n=0, it is acceptable if the double-refraction phase difference is provided in the range of 50.0nm through 150.0nm. It is acceptable if a polarization converting means 20 is set to provide more of a double-refraction phase difference of approximately 100.0nm, which corresponds to 90°. In this case, since this range is narrower than that of condition 1 being 33.3nm through 166.7nm, the polarization converting means 20 must be set more strictly. Thus, in the case of a monochrome light source, there is no problem in its application.

In the case of a white light source in which white light is obtained by emitting three laser beams in three primary colors RGB with wavelengths of 400nm, 550nm and 700nm, respectively, the polarization converting means 20 determines a double-refraction phase difference in such a way that light with a wavelength 550nm located almost at the center may meet condition 2. If the double-refraction phase difference is expressed in length, in the case of n=0, a double-refraction phase difference is provided in the range of 68.8nm through 206.3nm. However, as in the above calculation, light with a wavelength of 700nm is provided with a double-refraction phase difference of 90° instead of that of 175nm. Light with a wavelength of 400nm is provided with a double-refraction phase difference of 90° instead of that of 100nm. These double-refraction phase differences are included in the range of 68.8nm through 206.3nm, and a double-refraction phase difference of nearly 90° is provided for all the wavelengths for three primary colors RGB. Therefore, a white light source can also be applied to a light guiding plate with the polarization converting means 20 of condition 2 of this preferred embodiment.

In such a structure, if light transmits through the polarization converting means 20 twice both ways, light is provided with a double-refraction phase difference of $2\cdot\theta_2+n\cdot360°$ (in this case, $90°\leq2\cdot\theta_1\leq270°$) in total. This means that light is provided with a double-refraction phase difference in such a way as to cover $\pm90°$ using 180° as a center. In this case, the polarization direction of light inputted to the polarization splitting means 10 from this polarization converting means 20 is converted into a prescribed range using 90° as a center ($\pm45°$ using 90° as a center, that is, $45°\leq\alpha\leq135°$), and a transmissive polarized component of light previously reflected on the polarization splitting means 10 is transmitted and emitted from the polarization splitting means 10.

In the present invention, since light is outputted after the range of polarization conversion direction ($\pm45°$ using 90° as a center) of the polarization converting means 20 is made narrow, the polarization direction is converted in such a way that polarized light s may contain more of polarized components p and accordingly more of light can transmit through the polarization splitting means 10. Therefore, a luminance improvement ratio can be enhanced.

By adopting such a structure, 80% or more area from which polarized light can be extracted more efficiently than in the first preferred embodiment can be realized, and accordingly a luminance improvement ratio can be further enhanced, which is an advantage.

Next, the third preferred embodiment is described. In this preferred embodiment, in order to further enhance a luminance improvement ratio, approximately 60% of the area of the polarization converting means 20 provides light to be transmitted with a double-refraction phase difference in such a way as to preferably meet the condition of $\theta_3 + n \cdot 180°$ ($60° \leq \theta_3 \leq 120°$, n:integer)(hereinafter called "condition 3").

In this case too, condition 3 varies depending on the type of a light source. For example, in the case of a monochrome light source, the polarization converting means 20 provides light to be transmitted with a double-refraction phase difference of $\theta_3 + n \cdot 180°$ ($60° \leq \theta_3 \leq 120°$, n: integer) . If the double-refraction phase difference is expressed in length, in the case of n=0, it is as follows.

If a wavelength is 700nm, the following can be obtained:

700nm·60°/360° = 116.7nm and
700nm·120°/360° = 233.3nm.

Specifically, in the cases of n=0, it is acceptable if the double-refraction phase difference is provided in the range of 116.7nm through 233.3nm. It is acceptable if a polarization converting means 20 is set to provide more of a double-refraction phase difference of approximately 175nm, which corresponds to 90°. In this case, since this range is narrower thanboth 58.3nm through 291.7nm of condition 1 and 68.8nm through 206.3nm of condition 2, the polarization converting means 20 must be set more strictly.

Similarly, if a wavelength is 550nm, the following can be obtained:

550nm·60°/360° = 91.7nm and
550nm·120°/360° = 183.3nm.

Specifically, in the cases of n=0, it is acceptable if the double-refraction phase difference is provided in the range of 91.7nm through 183.3nm. It is acceptable if a polarization converting means 20 is set to provide more of a double-refraction phase difference of approximately 137.5nm, which corresponds to 90°. In this case, since this range is narrower than both 45.8nm through 229.2nm of condition 1 and 68.8nm through 206.3nm of condition 2, the polarization converting means 20 must be set more strictly.

Similarly, if a wavelength is 400nm, the following can be obtained:

400nm·60°/360° = 66.7nm and
400nm·120°/360° = 133.3nm.

Specifically, in the cases of n=0, it is acceptable if the double-refraction phase difference is provided in the range of 66.7nm through 133.3nm. It is acceptable if a polarization converting means 20 is set to provide more of a double-refraction phase difference of approximately 100.0nm, which corresponds to 90°. In this case, since this range is narrower than both 33.3nm through 166.7nm of condition 1 and 50.0nm through 150.0nm of condition 2, the polarization converting means 20 must be set more strictly. Thus, in the case of a monochrome light source, there is no problem in its application.

In the case of a white light source in which white light is obtained by emitting three laser beams for three primary colors RGB with wavelengths of 400nm, 550nm and 700nm, respectively, the polarization converting means 20 determines a double-refraction phase difference in such a way that light with a wavelength of 550nm located almost at the center may meet condition 2. If the double-refraction phase difference is expressed in length, in the case of n=0, a double-refraction phase difference is provided in the range of 91.7nm through 183.3nm. However, as in the above calculation, light with a wavelength of 700nm is provided with a double-refraction phase difference of 90° instead of that of 175nm. Light with a wavelength of 400nm is provided with a double-refraction phase difference of 90° instead of that of 100nm. These double-refraction phase differences are included in the range of 91.7nm through 183.3nm, and a double-refraction phase difference of nearly 90° is provided for all the wavelengths for three primary colors RGB. Therefore, a white light source can also be applied to a light guiding plate with the polarization converting means 20 of condition 3 of this preferred embodiment.

In such a structure, if light transmits the polarization converting means 20 twice both ways, light is provided with a double-refraction phase difference of $2 \cdot \theta_3 + n \cdot 360°$ ($120° \leq 2 \cdot \theta_1 \leq 240°$) in total. This means that light is provided with a double-refraction phase difference in such a way as to cover $\pm 90°$ using 180° as a center. In this case, the polarization direction of light inputted to the polarization splitting means 10 from this polarization converting means 20 is converted into a prescribed range using 90° as a center ($\pm 30°$ using 90° as a center, that is, $60° \leq \alpha \leq 120°$), and a transmissive polarized component of light previously reflected on the polarization splitting means 10 is transmitted and emitted from the polarization splitting means 10.

In the present invention, the polarization converting means 20 can output light after securing 60% or more of an area that narrows the range of polarization conversion direction ($\pm 30°$ using 90° as a center), and accordingly a luminance improvement ratio can be enhanced, which is an advantage.

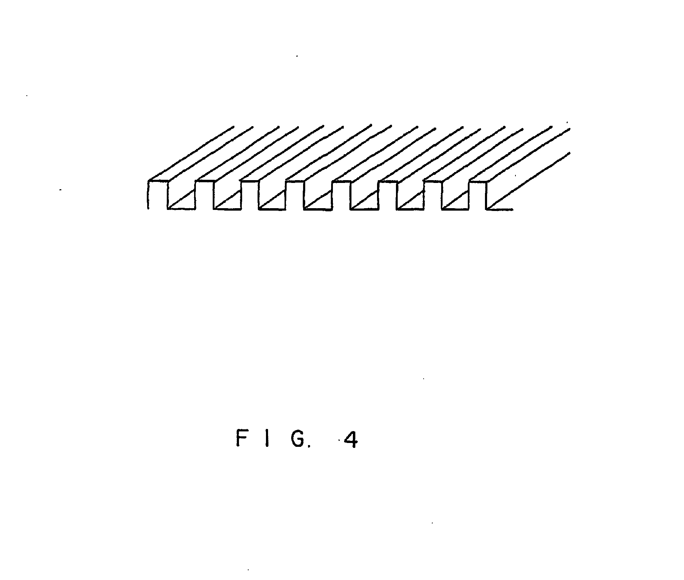

Next, the fourth preferred embodiment of the present invention is described. In this preferred embodiment, the polarization splitting means 10 is described in more detail than those of the first through third preferred embodiments. Figs. 4 through 7 show the cross section of the grating structure.

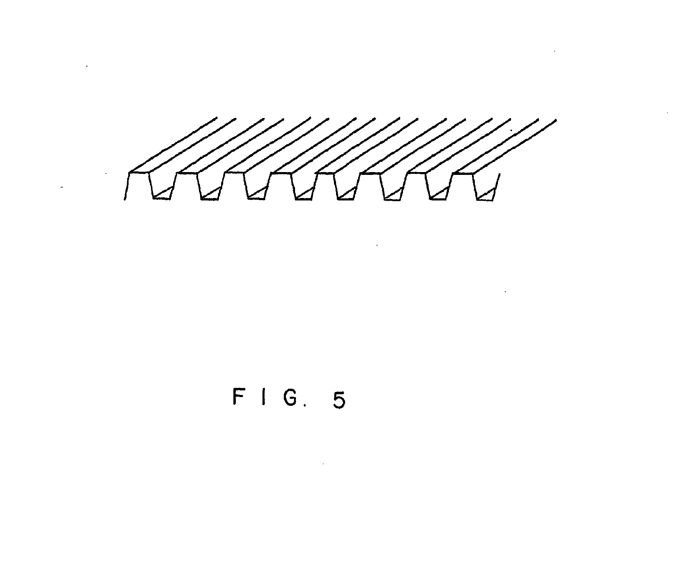

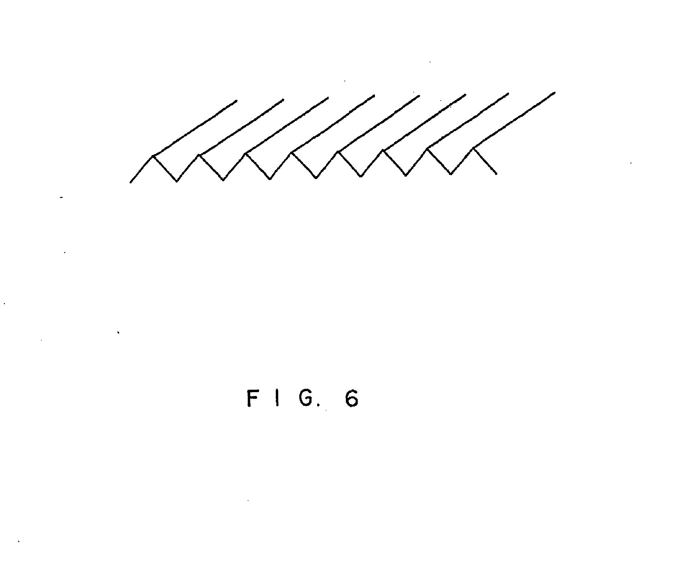

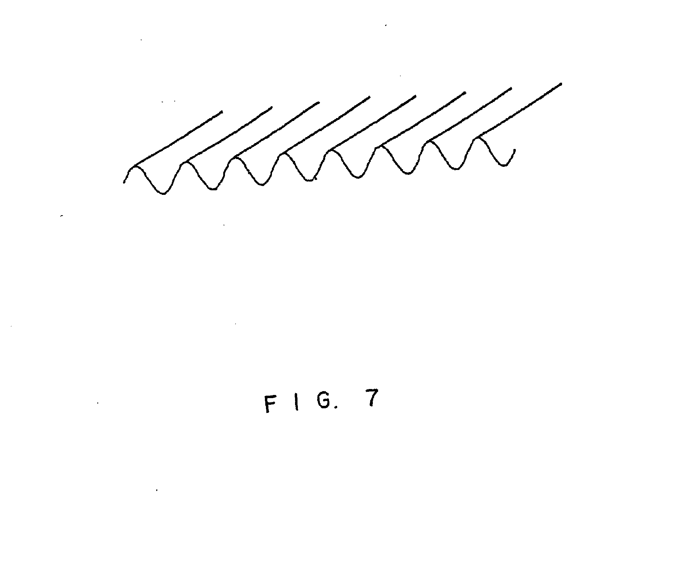

The polarization splitting means 10 of this preferred embodiment adopts a grating structure composed of dielectric gratings each of which is formed by periodically piling a transparent dielectric material. The cross section of this grating structure is formed by periodically repeating the convex part of a rectangle shown in Fig. 4, a trapezoid shown in Fig. 5, a triangle shown in Fig. 6, a sine wave shown in Fig. 7 or a combination of a plurality of such convex parts, which is not shown here. The repetition period is p.

Such a grating structure sometimes is directly formed in the light guiding means 40. Sometimes the grating structure is formed on a transparent substrate and the substrate is disposed in the light guiding means 40. Sometimes the grating structure is formed on a transparent film and the film is disposed in the light guiding means 40.

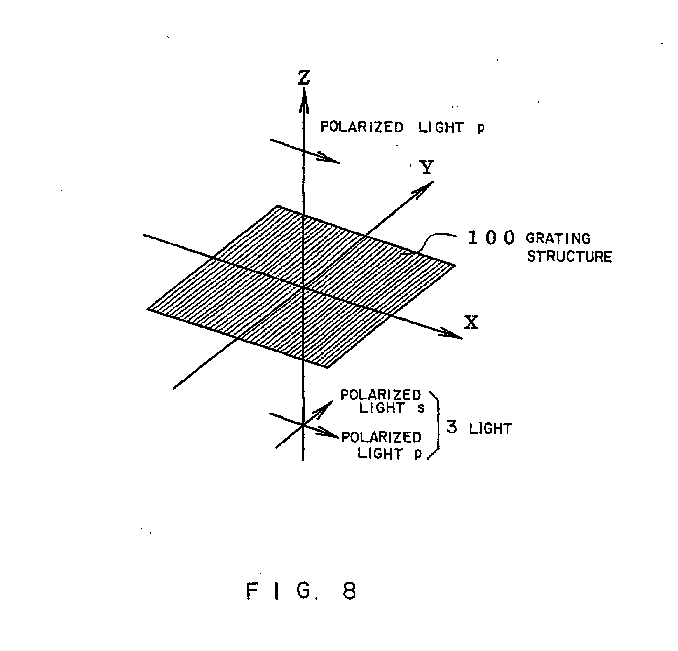

Next, the polarization splitting function of such a grating structure is described. Fig. 8 shows the relationship between such a grating structure and light to be transmitted. In Fig. 8, a grating structure 100 made of dielectrics canbe expanded in the y-axis direction, which is the grating forming direction of the grating structure 100. The case where light 3 having a polarized component in the x-axis direction (polarized light p) and a polarized component in the y-axis direction (polarized light s) is inputted to this grating structure, is studied. When such light 3 is inputted to the grating structure 100, only the polarized component in the x-axis direction (polarized light p) transmits it in the z-axis direction, and the polarized component in the y-axis direction (polarized light s) is reflected by the grating structure 100 and is returned in the downward direction of the z-axis. Specifically, the polarization splitting means 10 of this preferred embodiment utilizes the fact that polarized light is transmitted/reflected depending on the material (dielectric) and shape/dimensions of such a grating structure 100.

Thus, the grating structure 100 has a polarization splitting function. If the period of the grating structure 100 falls on p, light with a wavelength of approximately p (light with almost the same wavelength) is mainly transmitted. Therefore, for the light source of the polarization splitting means 10 used in the grating structure 100 of this preferred embodiment, it is preferable to use a monochrome light source that outputs light with a single wavelength.

The polarization splitting function of the grating structure 100 having such a cross section is also clarified by an optical wave numerical analysis simulation test based on an electro-magnetic field theory.

In this case, the cross section of the grating structure is formed by periodically repeating the convex part of a rectangle, a trapezoid, a triangle or a sine wave. It is preferable to set the grating period and groove depth of grating to be between 0.3μm and 0.8μm, and between 0.2μm and 0.5μm, respectively. Next, this fact is described with reference to the drawings.

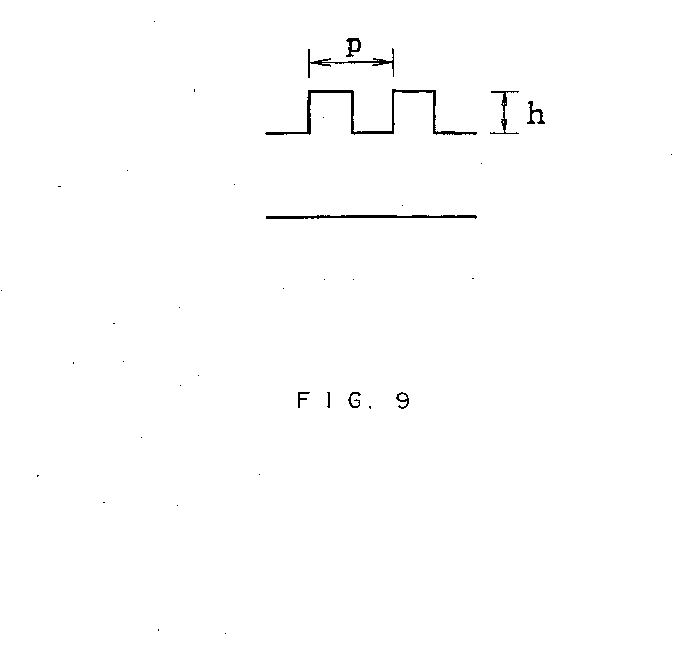

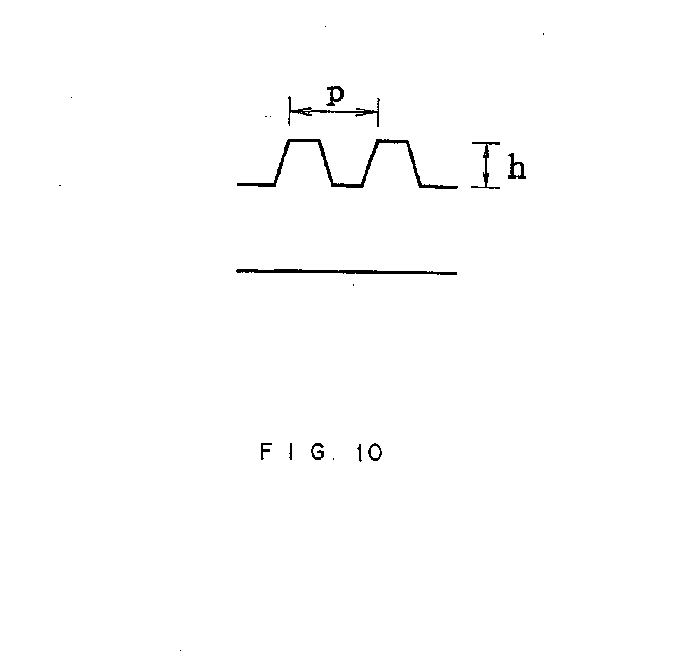

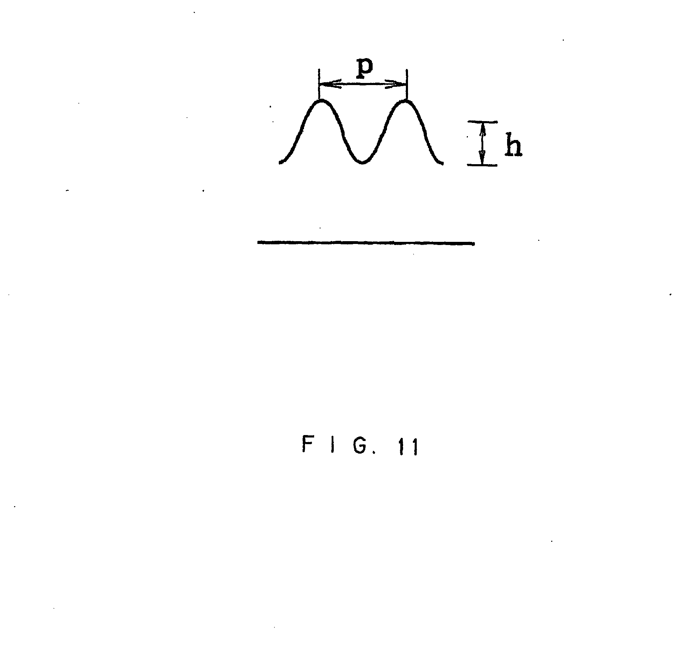

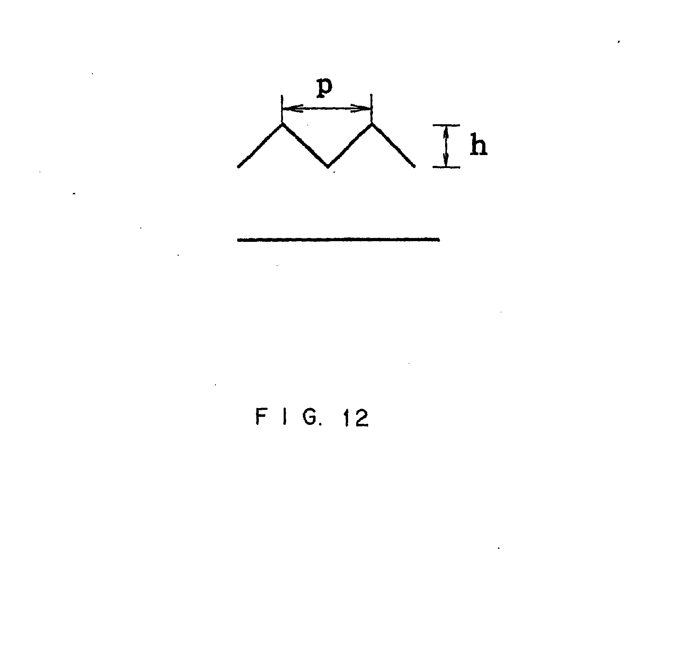

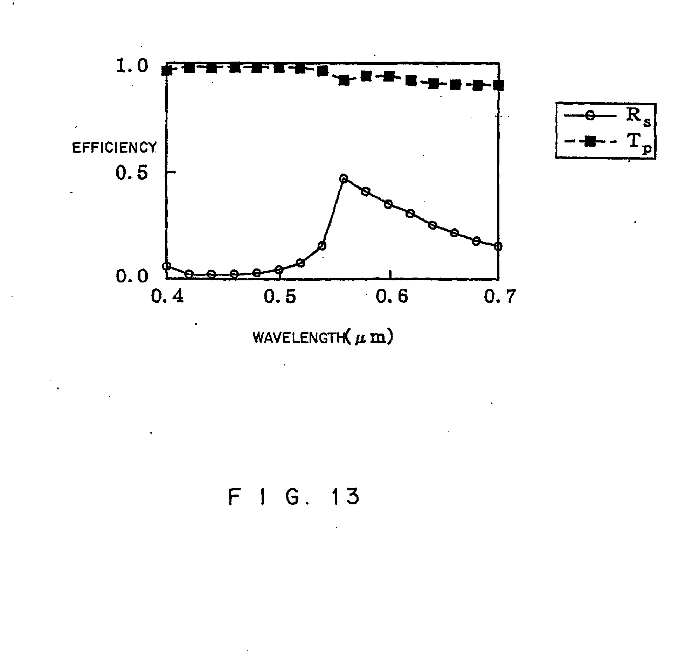

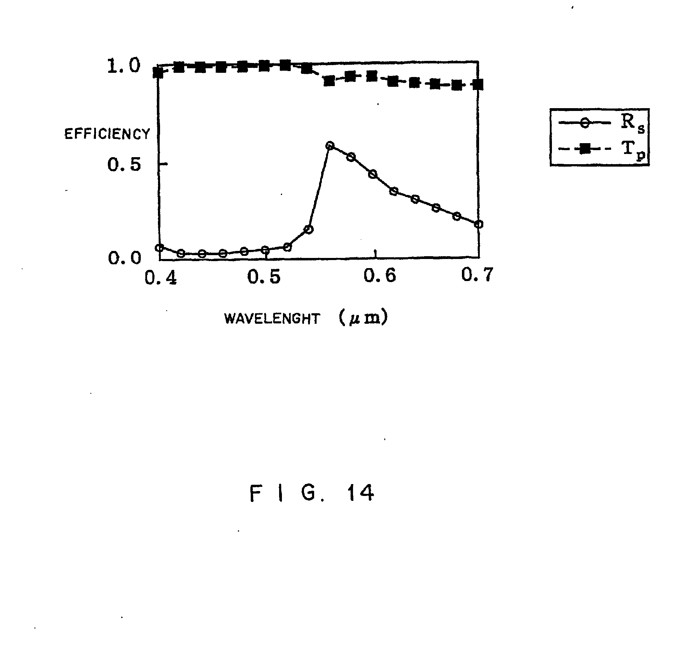

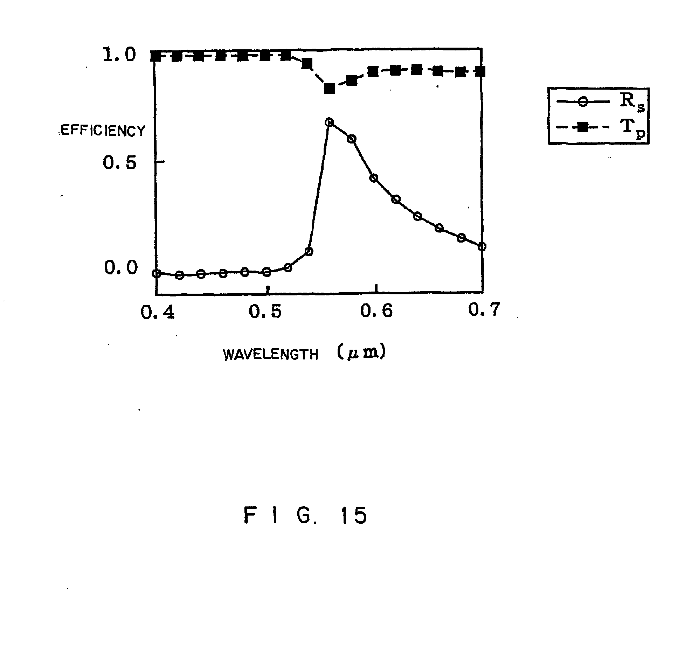

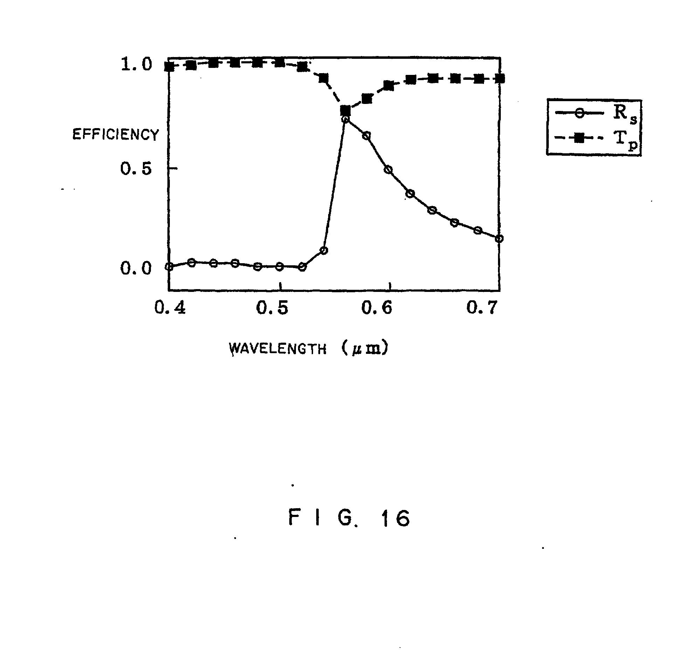

Figs. 9 through 12 show the rough structure of the grating structure. Figs. 13 through 16 show the polarization splitting characteristics of the grating structures.

Figs. 13 through 16 show the polarization splitting characteristics obtained by a computer simulation test when light is inputted to the grating structure shown in Figs. 9 through 12, respectively. Specifically, Figs. 9, 10, 11 and 12 shows rectangular, trapezoidal, sine-wave and triangular grating structures, respectively. In each case, its grating period p, groove depth of grating h and refractive index n are 0.55μm (p=0.55μm), 0.28μm (h=0.28μm) and 1.49 (n=1.49), respectively. Figs. 13, 14, 15 and 16 show the respective wavelength dependency of the refractive indexes (Rs) of a polarizes component (polarized light s) in parallel to the forming direction of the grating structure and the transmissivity (Tp) of a polarized component (polarized light p) perpendicular to the forming direction of the grating structure that are obtained when light with a wavelength in a visible range (light with a wavelength 400nm through 700nm) is vertically inputted to the rectangular, trapezoidal, sine-wave and triangular grating structures, respectively. In a wavelength range a little longer than grating period p=0.55μm, refractive index Rs increases. These four polarization splitting characteristic charts show that, of a plurality of segments of light with a wavelength longer than grating period p (light with a wavelength 550nm), polarized light p transmits the grating structure at p≅0.9μm and polarized light s is reflected at p≅0.5-0.8μm. In this case, a good polarization splitting characteristic can be obtained.

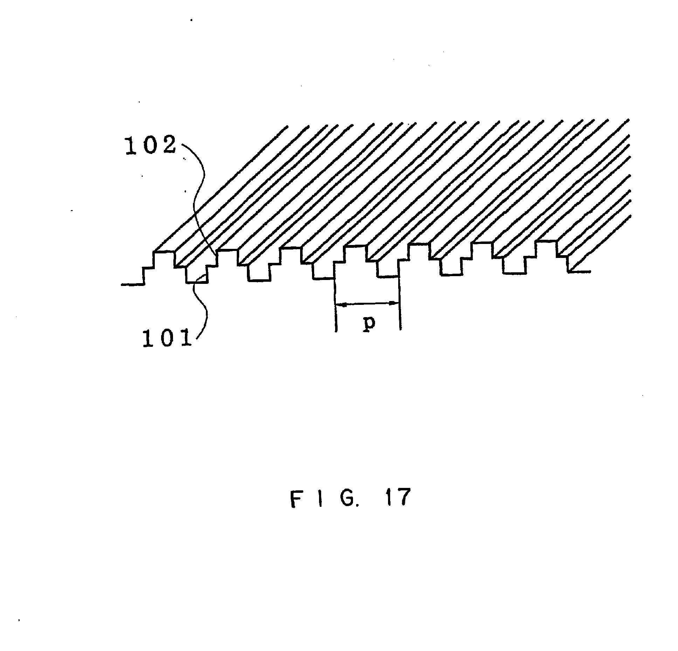

Instead of the above grating structure, the convex part of a dielectric grating can also be formed by combining a plurality of shapes obtained by combining a basic shape with a minute shape. Fig. 17 shows the cross section of a multi-stepped convex part.

As shown in Fig. 17, the shape/structure of the grating structure is composed of minute convex/concave parts (in Fig. 17, more minute convex/concave parts are formed in addition to minute convex/concave parts) . Thus, a convex part formed in period p of less than an optical wavelength can be formed by repeating a narrow groove 101 within a wide groove 102 formed by providing this groove 101 with a step. The cross section of the grating structure can also be formed in a convex shape by overlapping a rectangular grating on a rectangle grating.

Next, the reason why the surface shape must be multi-stepped is described. This is for convenience sake of manufacturing.

As described earlier, it is preferable for the cross section of a dielectric grating to be the convex part of a rectangle, trapezoid, sine wave or triangle. However, sometimes it is difficult to form such a convex part. Therefore, the polarization splitting means 10 is formed into a multi-stepped shape approximate to a sine wave or a triangle (see Fig. 17).

Next, the manufacturing method of the grating structure is described.

The light guiding means 40 is molded in resin. Its grating structure is copied into a metallic mold and the polarization splitting means is molded in resin using the metallic mold, which is described in detail later. The metallic mold can be copied by the mechanical cutting of a minute-shape processing machine whose process resolution has been recently improved, such as that of a Ruling Engine, whose rectangular, trapezoidal and triangular molds are conventionally known well, a ROBOnano of FUNUC make, etc.

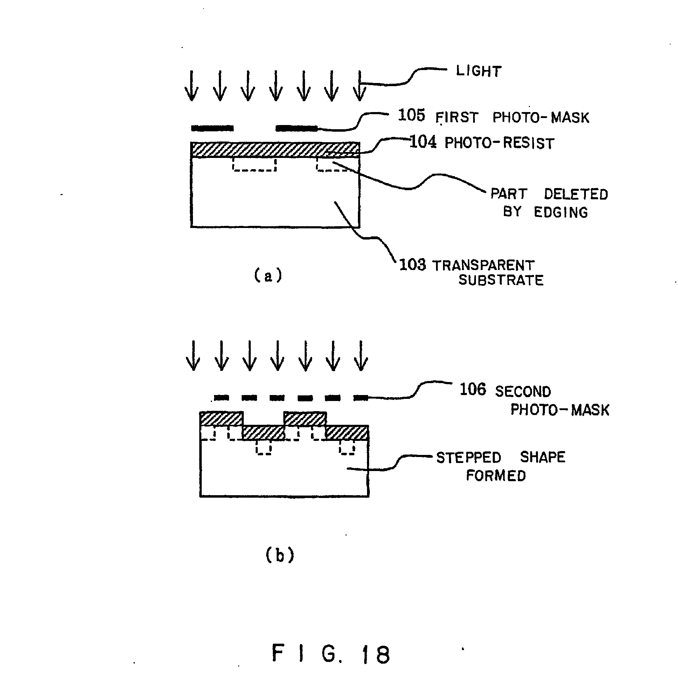

Besides the copying method using a metallic mold, the polarization splitting means 10 can also be formed by a photo-mask and optical exposure. In this case, the convex cross section can be easily formed into a shape approximate to the multi-stepped shape as shown in Fig. 17. The summary of the manufacturing method is described below. Fig. 18 shows the manufacturing method of a grating structure by a photo-mask and optical exposure. Firstly, as shown in Fig. 18A, a photo-resist 104 formed on a transparent base material 103 (the light guiding means 40) is exposed to light through a first photo-mask 105. After the exposure, the exposed photo-resist 104 is eliminated, and the transparent base material 103 (light guiding means 40) is processed and formed into a binary shape by edging. Then, as shown in Fig. 18B, a shape approximate to a multi-stepped shape can be easily formed by performing the same process using a second photo-mask 106 or a third photo-mask, which is not shown in Fig. 18.

In the case of a sine-wave shape, a mold can also be formed like a sine wave by controlling optical exposure conditions using one binary-shape mask. A substantial sine-wave shape can also be formed on the transparent base material 103 (light guiding means 40) by appropriately setting molding conditions using a rectangular or a trapezoidal mold. Furthermore, in the case of a sine-wave shape, making two laser beams interfere with each other on a photo-resist surface can also holographically form a shape.

It is theoretically preferable for the period of each grating structure to be almost the same as the wavelength of light for lighting. However, as clearly seen from the polarization splitting characteristic shown in Figs. 13 through 16, even if the period of the grating structure is a little shorter than the wavelength and the wavelength of light is longer than the wavelength, the predetermined polarization splitting function can be realized. Therefore, the period of the grating structure can also be made a little shorter than the wavelength of light.

In this grating structure, since the grating period contains a visible wavelength range, it is acceptable if the period is in the range of 0.3μm through 0.8μm. It is preferable for the groove depth of grating to be between 0.2μm and 0.5μm. In this case, the longer the wavelength is, the deeper the groove depth of grating becomes proportionally.

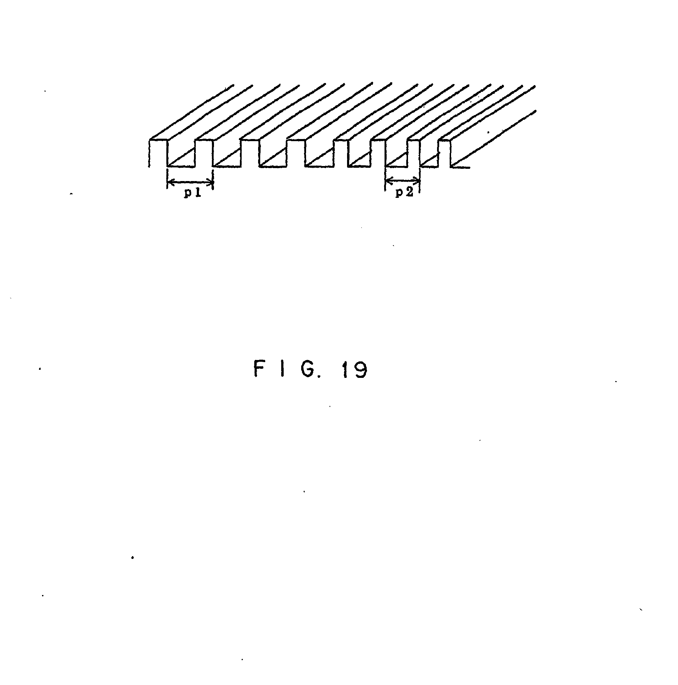

However, the period of the grating structure is not limited to a specific one, which is described in detail later. As shown in Fig. 19, the cross section of the grating structure can also vary depending on the position (p1>p2) and the wavelength of light to be transmitted can also be modified/adjusted depending on its position.

The facts described above have all been found by the computer simulation tests and experiments of the applicant. The grating period and groove depth of grating is not limited to the combinations described above and can be appropriately adjusted/modified/selected as the case may be.

Next, the fifth preferred embodiment is described.

In this preferred embodiment, as in the fourth preferred embodiment, another polarization splitting means 10 is described in more detail than those of the first through third preferred embodiments.

The polarization splitting means 10 of this preferred embodiment is a grating structure formed by piling one surface layer made of a substance with a prescribed refractive index or a plurality of surface layers formed by piling substances each with a different refractive index between adjacent layers on the surface of a dielectric grating formed by periodically piling a transparent dielectric material.

The cross section of the dielectric grating of this grating structure is formed by periodically repeating the convex part of a rectangle, a trapezoid, a triangle or a sine-wave shape, or a combination of a plurality of such convex parts.

This grating structure sometimes can be directly formed into the light guiding means 40. Sometimes the grating structure canbe formed on a transparent substrate and be disposed in the light guiding means 40. Sometimes the grating structure can be formed on a transparent film and be disposed in the light guiding means 40.

The period and groove depth of the dielectric grating of the grating structure are between 0.3μm and 0.8μm, and between 0.2μm and 0.5μm, respectively. The surface layer added on the surface of the grating structure is formed by alternatively piling a layer of titanium dioxide ($TiO_2$) or tantalum pentaoxide ($Ta_2O_5$), 50nm through 150nm thick and a layer of silicon dioxide (SiO2), 70nm through 200nm thick.

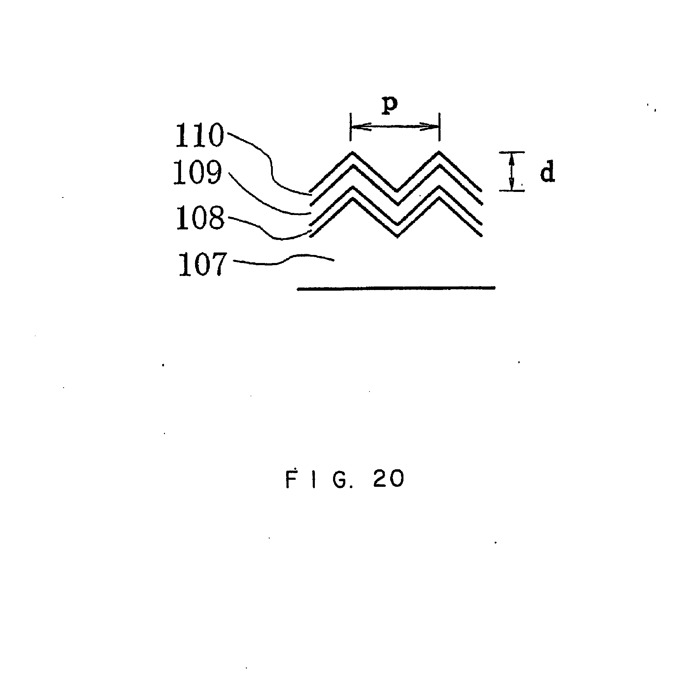

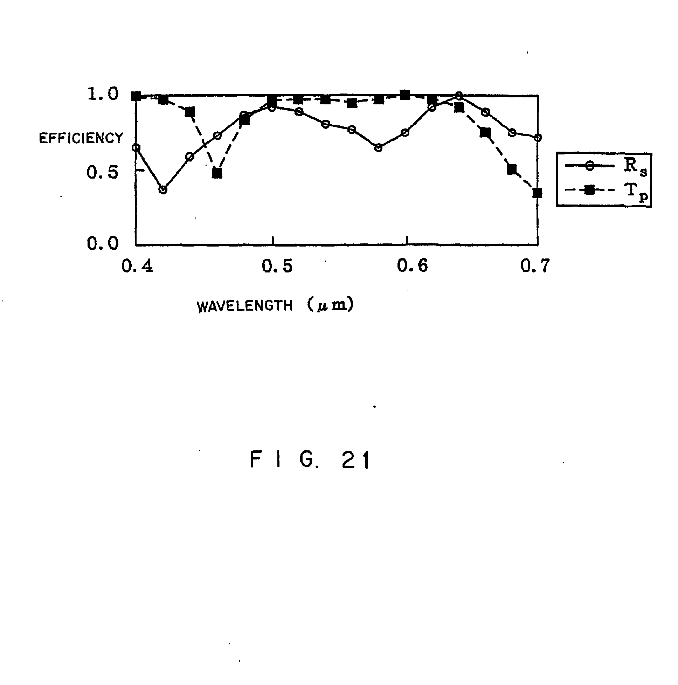

A specific example of this preferred embodiment is shown. It shows respective examples of the grating structure and its polarization splitting characteristic obtained by the computer simulation test that has been conducted when light is inputted. Figs. 20 and 21 show a structure example of the grating structure and its polarization splitting characteristic, respectively.

The grating structure shown in Fig. 20 is formed by piling a dielectric film 108, 87nm thick, made of titanium dioxide ($TiO_2$), a dielectric film 109, 132nm thick, made of silicon dioxide ($SiO_2$) and a dielectric film 110, 87nm thick, made of titanium dioxide ($TiO_2$) on the surface of a convex triangular dielectric grating 107, whose period and groove depth are 0.55μm and 0.275μm, respectively, in that order.

Fig. 21 shows the respective wavelength dependency of the refractive index (Rs) of a polarized component in parallel to the direction of the grating, and the transmissivity (Tp) of a polarized component perpendicular to the direction of the grating obtained when light with a wavelength in the visible range is vertically inputted to this grating structure. The average Rs and Tp in the wavelength range of 0.4μm through 0.7μm are 0.77 (Rs=0.77) and 0.85 (Tp=0.85), respectively.

This means that, of light with a wavelength in the visible range, polarized light p transmits through the grating structure at a high rate of 0.85, and polarized light s is reflected at a high rate of 0.77. A good polarization splitting characteristic can be obtained across the entire visible wavelength range. Therefore, the polarization splitting means 10 using the grating structure of this preferred embodiment can be adopted in both cases of a white light source and a monochrome light source.

In the structure, each of the dielectric films 108 and 110 can also be a dielectric film made of tantalum pentaoxide ($Ta_2O_5$).

Furthermore, a dielectric film of silicon monoxide (SiO) 0nm through 100nm thick can also be disposed between the dielectric film 108 of titanium dioxide (TiO2) or silicon dioxide ($SiO_2$) and the surface of the grating structure 107.

These facts have been all found by computer simulation tests and experiments of the applicant. The values to be selected should be appropriately designed /selected based on the situation of each grating structure.

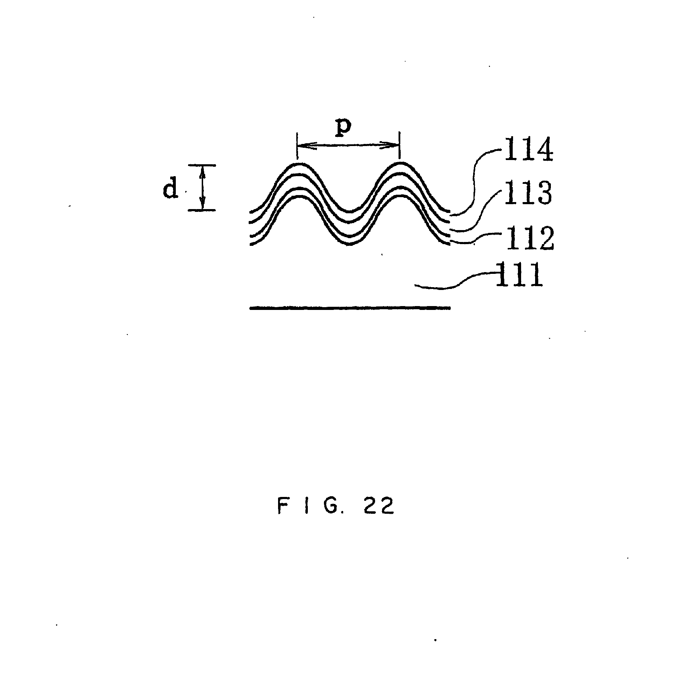

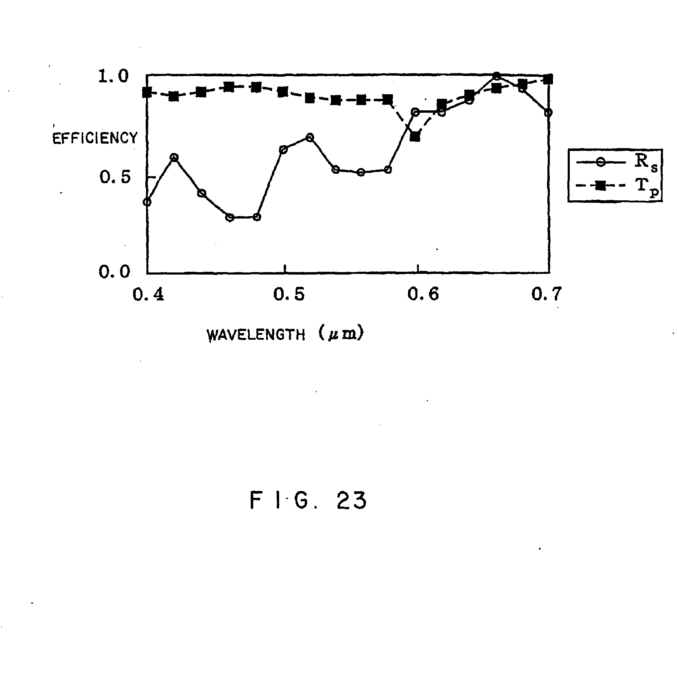

Next, another specific example of this preferred embodiment is described. It shows respective examples of the grating structure and its polarization splitting characteristic obtained by the computer simulation test conducted when light is inputted. Figs. 22 and 23 show a structure example of the grating structure and its polarization splitting characteristic, respectively.

The grating structure shown in Fig. 22 is formed by piling a thin titanium dioxide ($TiO_2$) film 112, 132nm thick, a thin silicon dioxide ($SiO_2$) film 113, 170nm thick and a thin titanium dioxide ($TiO_2$) film 114, 118nm thick on the surface of a convex sine-wave dielectric grating 111, whose period and groove depth are 0.6μm and 0.24μm, respectively, in that order.

Fig. 23 shows the respective wavelength dependency of the refractive index (Rs) of a polarized component in parallel to the direction of the grating and the transmissivity (Tp) of a polarized component perpendicular to the direction of the grating obtained when light with a wavelength in the visible range is vertically inputted to this grating structure. The average Rs and Tp in the wavelength range of 0.4μm through 0.7μm are 0.63 (Rs=0.63) and 0.91 (Tp=0.91), respectively.

This means that, of light with a wavelength in the visible range, polarized light p transmits through the grating structure at a high rate of 0.91, and polarized light s is reflected at a high rate of 0.63. A good polarization splitting characteristic can be obtained across the entire visible wavelength range. Therefore, the polarization splitting means 10 using the grating structure of this preferred embodiment can be adopted in both cases of a white light source and a monochrome light source.

In the structure, each of the dielectric films 112 and 114 can also be a dielectric film of tantalum pentaoxide ($Ta_2O_5$).

In the above structure, each of the dielectric films 112 and 114 can also be made of silicon dioxide ($SiO_2$), and the dielectric film 113 can also be made of titanium dioxide ($TiO_2$) or tantalum pentaoxide ($Ta_2O_5$).

Furthermore, a dielectric film of silicon monoxide (SiO) 0nm through 100nm thick can also be disposed between the dielectric film 112 of titanium dioxide (TiO2) or silicon dioxide ($SiO_2$) and the surface of the grating structure 111.

These facts have all been found by computer simulation tests and experiments of the applicant. Which values are selected should be appropriately designed /selected based on the situation of individual grating structure.

Next, the manufacturing method of such a grating structure is described.

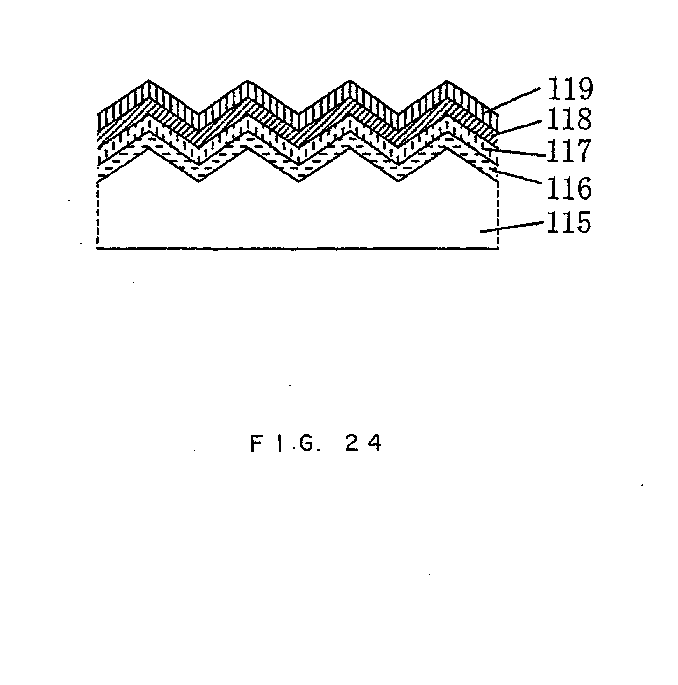

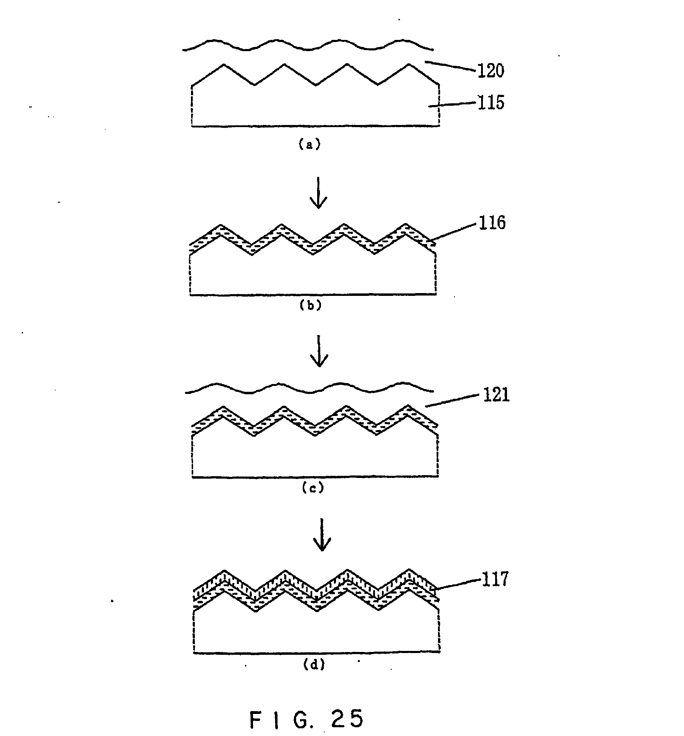

Figs. 24 and 25 show the structure of the grating structure and its manufacturing method, respectively. The structure shown in Fig. 24 is composed of multi-layer films. In Fig. 24, reference number 115 represents a dielectric grating, being a transparent base material, and reference numbers 116, 117, 118 and 119 represent first, second, third and fourth film, respectively, each of which is made of a substance with a different refractive index between adjacent layers.

The grating structure is manufactured by repeating a solvent eliminating process one or more times after disposing a substance having a first refractive index, diluted by a first solvent, to a dielectric grating, being a transparent base material, the cross section of whose surface unit is a rectangle, a trapezoid, a triangle, a sine wave or a combination of a plurality of such convex parts, by a spin coating method or a roll coating method. This manufacturing method is described below with reference with Fig. 25.

In Fig. 25, a multi-layer film is formed on a dielectric grating 115 the cross section of whose surface unit is a triangle. As shown in Fig. 25A, liquid 120 obtained by diluting a substance, having a first refractive index, with a first solvent is applied to the dielectric grating 115. In this case, for example, according to the spin coating method, liquid 120 is dropped on the dielectric grating 115 and is spread all over the surface of the dielectric grating 115 by rotating the grating 115.

Fig. 25B shows the grating 115 obtained by eliminating the first solvent by applying a drying process to it. Thus, a first-layer film 116 is formed. Then, as shown in Fig. 25C, a second layer is formed using liquid 121 obtained by diluting a substance having a second refractive index with a solvent. In this case, the solvent can be the first solvent or a different second solvent. Then, as shown in Fig. 25D, a second-layer film 117 is formed by applying a drying process to it. By performing the process described above a plurality of times, adesired laminated structure can be formed.

In this example, a method for diluting a substance that forms a layer, with a solvent and disposing it on the grating is described. However, alternatively, a substance whose refractive index is different between adjacent layers can also be formed on a transparent base material whose cross section is a rectangle, a trapezoid, a triangle, a sine wave or a combination of a plurality of such convex parts, by an evaporation method, a sputtering method or an ion plating method.

So far the polarization splitting means 10 of this preferred embodiment has been described. However, alternatively, the convex part with a multi-stepped shape approximate to a sine wave or a triangle (see Fig. 17) can also be used as the dielectric grating.

Next, the sixth preferred embodiment of the present invention is described.

In this preferred embodiment, as in the fourth and fifth preferred embodiments, another polarization splitting means 10 is described in more detail than those of the first through third preferred embodiments.

The polarization splitting means 10 of this preferred embodiment is a grating structure obtained by piling one surface layer made of a substance having a prescribed refractive index or a plurality of surface layers formed by piling substances each with a different refractive index between adjacent layers on the convex part of a dielectric grating formed by periodically repeating a transparent dielectric material. The cross section of the dielectric grating of this grating structure is formed by periodically repeating the convex part of a rectangle, a trapezoid, a triangle or a sinewave shape or a combination of a plurality of such convex parts.

This grating structure sometimes can be directly formed in the light guiding means 40. Sometimes the grating structure can be formed on a transparent substrate and be disposed in the light guiding means 40. Sometimes the grating structure can be formed on a transparent film and be disposed in the light guiding means 40.

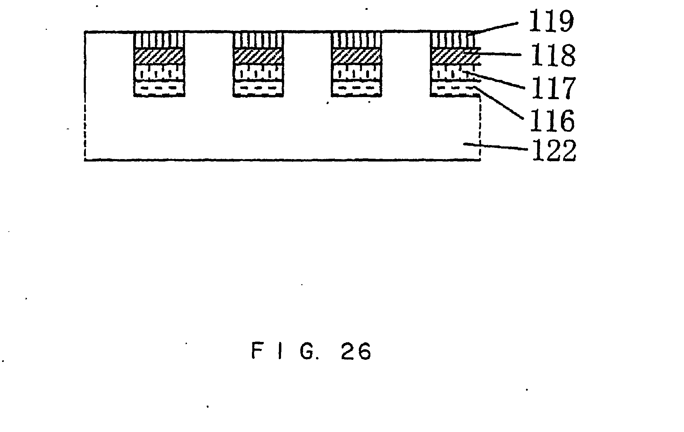

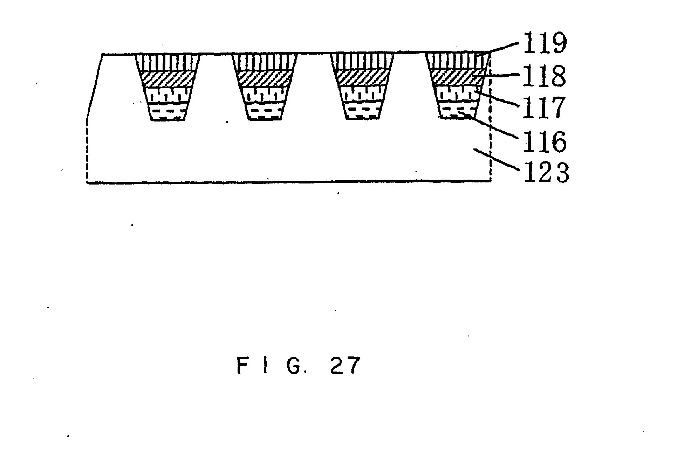

Figs. 26 and 27 show the respective cross sections of such structures. Reference numbers 122 and 123 in Figs. 26 and 27 represent dielectric gratings, being transparent base materials, and reference numbers 116, 117, 118 and 119 represent first-layer film, second-layer film, third-layer film and fourth-layer film, respectively, whose refractive index are different between adjacent layers.

It is preferable for the period and groove depth of the periodically repeated structure of the grating structure shown in Figs. 26 and 27 to be between 0.3μm and 0.8μm, and between 0.2μm and 0.5μm, respectively. It is preferable for the periodically repeated structure to be formed by alternatively piling a layer of titanium dioxide ($TiO_2$) or tantalum pentaoxide ($Ta_2O_5$), 50nm through 150nm thick and a layer of silicon dioxide ($SiO_2$), 70 through 200nm thick on the surface as a surface layer. It is preferable for the grating structure to have a silicon monoxide (SiO) layer 0 nm through 100nm thick between the $TiO_2$ layer or $SiO_2$ layer and the grating structure surface.

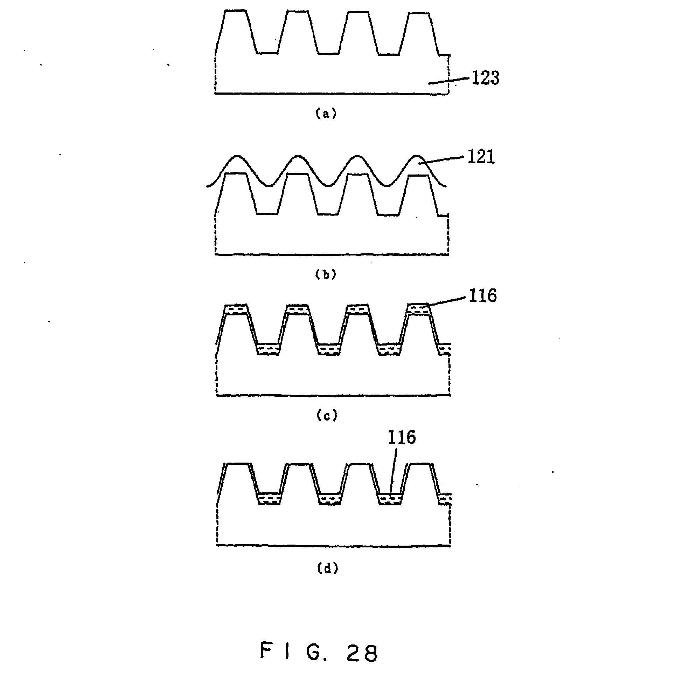

The manufacturing method of such a grating structure id described below. Fig. 28 shows the manufacturing method of the grating structure. Liquid 121 obtained by diluting a substance having a first refractive index, with a first solvent, is applied to the trapezoidal dielectric grating 123, being a transparent base material shown in Fig. 28A (Fig. 28B). Then, a first-layer film 116 is formed by applying a drying process to the substance (Fig. 28C) . Then, the first-layer film having the first refractive index of the dielectric grating 123 remains only on the concave part by eliminating the substance on the convex surface (Fig. 28D). Thus, the structure shown in Figs. 26 and 27 can be approximately formed.

This grating structure shows, for example, the same characteristic as shown in Figs. 21 and 23, and it is experimentally confirmed that the grating structure reflects/transmits all segments of light with a wavelength in the entire visible range of 0.4μm through 0.7μm.

A good polarization splitting characteristic can be obtained all over the entire wavelength visible range as in the fifth preferred embodiment. Therefore, the polarization splitting means 10 using the grating structure of this preferred embodiment can be adopted in both cases of white light source and a monochrome light source. Accordingly, in this preferred embodiment, such a grating structure can be used for the polarization splitting means 10.

So far the polarization splitting means 10 of this preferred embodiment has been described. Alternatively, the concave part of a multi-stepped shape approximate to a sine wave or a triangle (see Fig. 17) can be used as the dielectric grating.

Next, the seventh preferred embodiment of the present invention is described.

In this preferred embodiment, as in the fourth, fifth and sixth preferred embodiments, another polarization splitting means 10 is described in more detail than those of the first through third preferred embodiments.

The polarization splitting means 10 of this preferred embodiment is a grating structure is composed of gratings formed by periodically repeating a convex part formed by piling substances each having a different refractive index between adjacent layers. The cross section of the dielectric grating of this grating structure is formed by periodically repeating the convex part of a rectangle, a trapezoid, a triangle or a sine-wave shape or a combination of a plurality of such convex parts.

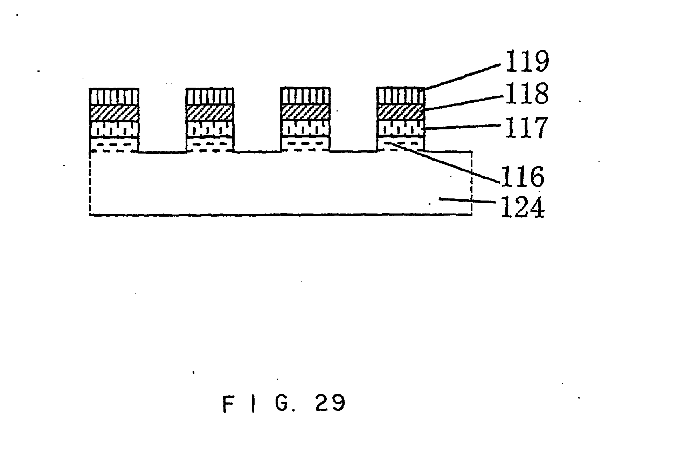

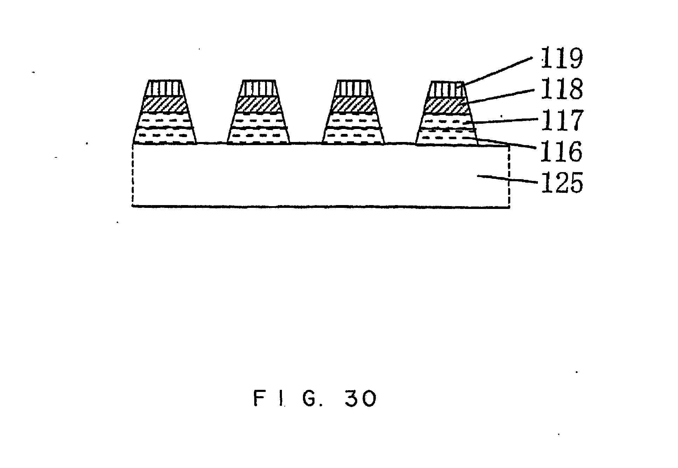

Figs. 29 and 30 show the respective cross sections of such structures. Reference numbers 124 and 125 in Figs. 29 and 30, respectively, represent dielectric gratings, being transparent base materials, and reference numbers 116, 117, 118 and 119 represent first-layer film, second-layer film, third-layer film and fourth-layer film, respectively, whose refractive index are different between adjacent layers.

A good polarization splitting characteristic can be obtained all over the entire visible wavelength range as in the fifth preferred embodiment. Therefore, the polarization splitting means 10 using the grating structure of this preferred embodiment can be adopted in both cases of white light source and a monochrome light source.

This grating structure sometimes can be directly formed in the light guiding means 40. Sometimes the grating structure can be formed on a transparent substrate and be disposed in the light guiding means 40. Sometimes the grating structure can be formed on a transparent film and be disposed in the light guiding means 40.

Next, the manufacturing method of the grating structure shown in Figs. 29 and 30.

Firstly, a multi-layer film is formed on the surface of a dielectric grating by coating liquid obtained by diluting a substance having a first refractive index with a first solvent on a substance having a different refractive index, by the spin coating method or the roll coating method described earlier, applying a drying process to it and then by repeatedly applying a series of processes of eliminating the first solvent to it. Then, the grating structure shown in Figs. 29 and 30 is formed by performing the emboss process of the multi-layer film formed thus, using a mold whose structure fits with a desired structure. In this case, substances each having a different refractive index between adjacent layers can also be formed into such a multi-layer film by an evaporation method, a sputtering method or an ion plating method.

Next, the eighth preferred embodiment of the present invention is described.

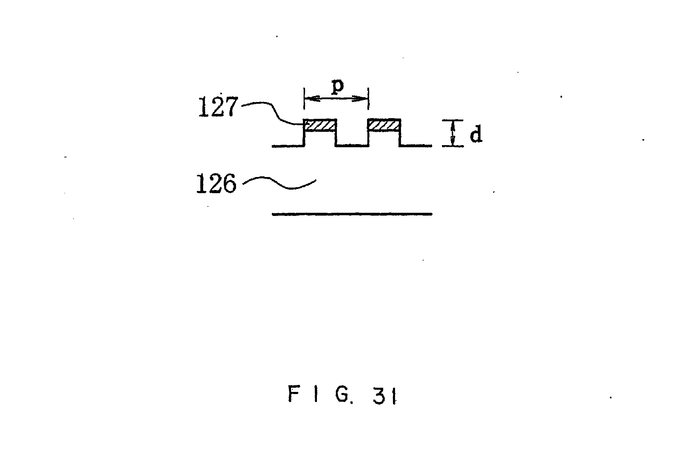

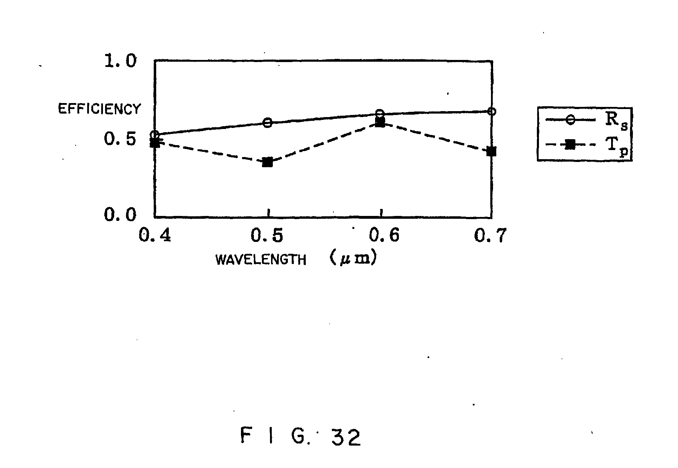

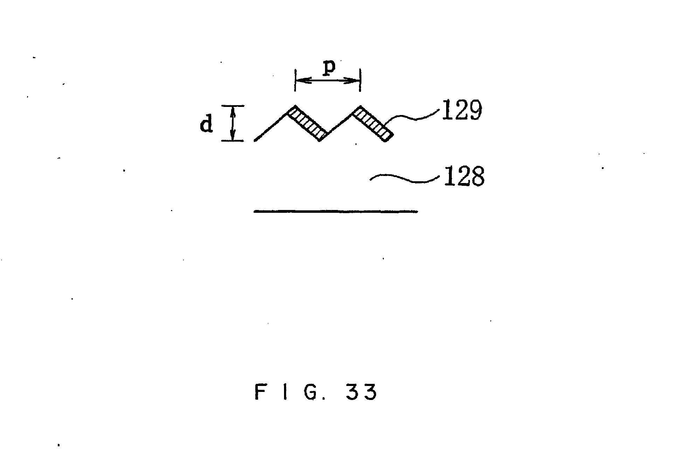

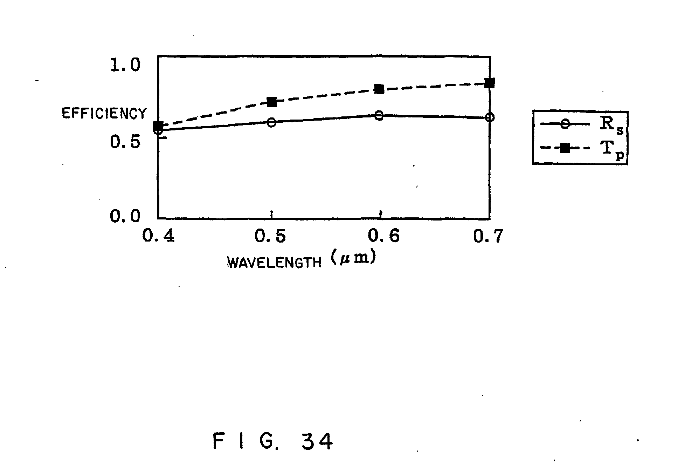

In this preferred embodiment, as in the fourth, fifth, sixth and seventh preferred embodiments, another polarization splitting means 10 is described in more detail than those of the first through third preferred embodiments. Figs. 31 and 33 show the respective cross sections of such structures. Figs. 32 and 34 show the polarization splitting characteristics of the respective grating structures.

The polarization splitting means 10 of this preferred embodiment is a grating structure composed of metallic gratings formed by periodically and repeatedly piling a metallic material on the surface of a dielectric grating formed by periodically and repeatedly piling a transparent dielectric material In particular, a second grating structure made of a metallic material is composed of a metallic thin film having a refractive index of 60% or more. The metallic thin film of this metallic grating is a single compound of Mg, Se, Y, Ti, Cr, Mo, Mn, Fe, Co, Ni, Ru, Pt, Cu, Ag, Au, Zn, Al, In, Si, Ge, Te, Pb or Sn, or an alloy of two or more of such elements. It is preferable for the element to be Al, Ag or Au, or their alloy.

The cross section of the dielectric grating of this grating structure is formed by periodically repeating the convex part of a rectangle, a trapezoid, a triangle or a sine-wave shape or a combination of a plurality of such convexparts and preferably is formedbyperiodically repeating the convex part of a rectangle, a trapezoid, a triangle or a sine-wave shape. It is also preferable for the grating period and groove depth of grating to be 0.4μm or less and 0.2μm or less, respectively. Alternatively, the convex part of the dielectric grating of the grating structure can be formed by combining a basic shape with a plurality of minute shapes.

This grating structure sometimes can be directly formed in the light guidingmeans 40. Sometimes the grating structure can be formed on a transparent substrate and be disposed in the light guiding means 40. Sometimes the grating structure can be formed on a transparent film and be disposed in the light guiding means 40.

In this preferred embodiment, as shown in Fig. 31, such a grating structure is specifically formed by piling aluminum 127, being a metallic grating that is made of a metallic material and is formed in a period equal to or less than the wavelength of light on the surface of a rectangular grating 126, being a dielectric grating that is made of a transparent dielectric material and is formed in a period equal to or less than the wavelength of light.

Next, a specific example of a computer simulation test on a polarization splitting characteristic obtained when light is inputted to this grating structure, is described. The grating structure shown in Fig. 31 is formed by piling aluminum 127, 20nm thick on the concave part of the rectangular grating 126, whose period p and groove depth of grating d are 0.2μm (p=0.2μm) and 0.1μm (d=0.1μm), respectively. Fig. 32 shows the respective wavelength dependency of the refractive index (Rs) of a polarized component in parallel to the grating direction and the transmissivity (Tp) of a polarized component perpendicular to the grating direction obtained when light with a wavelength in the visible range is vertically inputted to this grating structure. As a result, Rs≅0.76 and Tp≅0.4 are obtained as average values in the wavelength range of 0.4µm through 0.7µm.

This means that, of light with a wavelength in the visible range, polarized light p transmits the grating structure at the efficiency of approximately 0.6 and polarized light s is reflected at the efficiency of approximately 0.4. In this case, a good polarization splitting characteristic can be obtained across the entire visible wavelength range. Therefore, the polarization splitting means 10 using the grating structure of this preferred embodiment can be adopted in both cases of white light source and a monochrome light source. Thus, such a grating structure can perform the same function as that in the fourth through seventh preferred embodiments.

Fig. 33 shows another example of the grating structure that is formed by piling aluminum 129, being a metallic grating that made of a metallic material and formed in a period equal to or less than the wavelength of light on the surface of a triangular grating 128, being a dielectric grating that is made of a transparent dielectric material and is formed in a period equal to or less than the wavelength of light.

Aluminum 129, 20nm thick is formed on one slanting side of a triangular grating 128, whose period p and groove depth of grating d are 0.08µm (p=0.08µm) and 0.04µm (d=0.04µm), respectively.

Fig. 34 shows the respective wavelength dependency of the refractive index (Rs) of a polarized component in parallel to the direction of the triangular grating 128 and the transmissivity (Tp) of a polarized component perpendicular to the grating direction obtained when light in a visible wavelength range is vertically inputted to this grating structure. As a result, Rs≅0.5 and Tp≅0.77 are obtained as average values in the wavelength range of 0.4µm through 0.7µm.

This means that, of light with a wavelength in the visible range, polarized light p transmits the grating structure at the efficiency of approximately 0.6 and polarized light s is reflected at the efficiency of approximately 0.77. In this case, a good polarization splitting characteristic can be obtained all over the entire visible wavelength range. Therefore, the polarization splitting means 10 using the grating structure of this preferred embodiment can be adopted in both cases of white light source and a monochrome light source.

Thus, such a grating structure can perform the same function as that in the fifth through seventh preferred embodiments (can be used in both cases of a white light source and a monochrome light source).

Next, the ninth preferred embodiment of the present invention is described.

In this preferred embodiment, as in the fourth, fifth, sixth, seventh and eighth preferred embodiments, another polarization splitting means 10 is described in more detail than those of the first through thirdpreferred embodiments.

The polarization splitting means 10 of this preferred embodiment is a grating structure composed of metallic gratings formed by periodically and repeatedly piling a metallic material.

This grating structure sometimes can be directly formed in the light guidingmeans 40. Sometimes the grating structure can be formed on a transparent substrate and be disposed in the light guiding means 40. Sometimes the grating structure can be formed on a transparent film and be disposed in the light guiding means 40.

In particular, this grating structure is composed of metallic gratings composed of a metallic thin film having a refractive index of 60% or more. The metallic thin film of this metallic grating is a single compound of Mg, Se, Y, Ti, Cr, Mo, Mn, Fe, Co, Ni, Ru, Pt, Cu, Ag, Au, Zn, Al, In, Si, Ge, Te, Pb or Sn, or an alloy of two or more of such elements. It is preferable for the thickness of the metallic thin film of the metallic grating, the grating period T and the grating width to be 0.05µm or more, between 0.05µm and 0.25µm, being equal to or less than the wavelength of light, and to be in the range of 0.25T through 0.85T of the period T, respectively.

It is preferable to form a foundation layer at the bottom surfaces of the light guiding means, the transparent substrate or the transparent film, and the metallic grating and to form a protection film on the surfaces of both the metallic grating and the foundation layer.

The metallic grating can be formed on the surface of the light guiding means, the transparent substrate or the transparent film and the metallic grating through a mask having a striped grating pattern by an evaporation method, a sputtering method, an ion plating method or a dry edging method.

In particular, if a metallic grating composed of a metallic thin film is formed on the top surface of a transparent film, the grating structure is formed by forming the metallic grating on the transparent film, expanding the transparent film in the stripe direction, to form a minute pattern out of the metallic grating, and pasting the pattern on the light guiding means or the transparent substrate together with the transparent film.

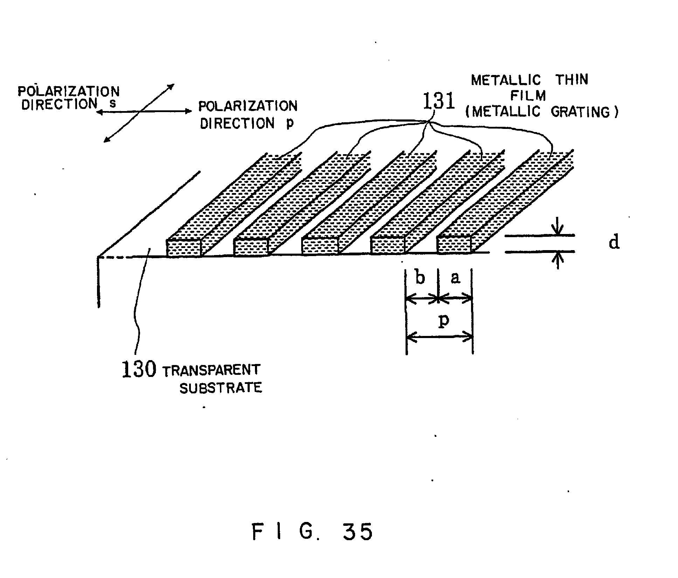

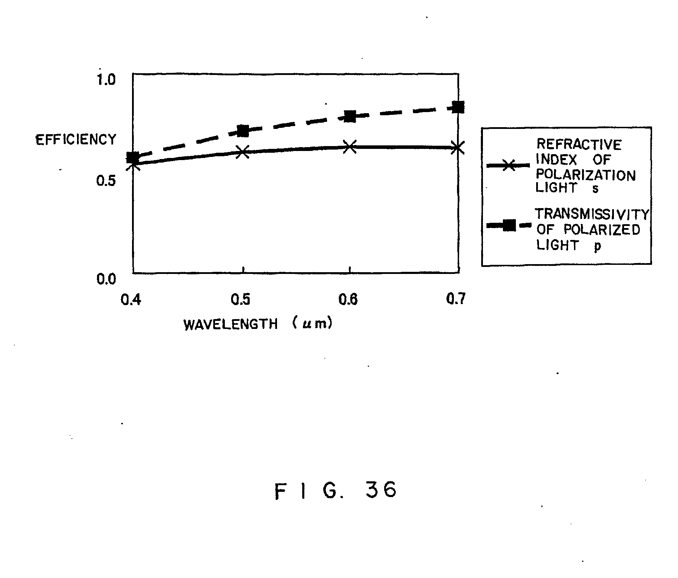

Next, such a polarization splitting means 10 is described with reference to the drawings. Figs. 35 and 36 show the structure of the grating structure and its polarization splitting characteristic, respectively.

As shown in Fig. 35, the grating structure comprises a metallic grating 131, which is composed of a metallic thin film formed in a period p equal to or less than the wavelength of light. Specifically, the metallic grating 131 is formed by periodically piling a metallic film whose width and thickness are a and d, respectively, on a transparent substrate 130. In this case, a+b is the same as period p.

In order to provide this grating structure with a polarization splitting function, the thickness of the metallic thin film, the period of the metallic grating and the width of the metallic grating must be 0.05µm or more, between 0.05µm

and 0.25μm equal to or less than the wavelength of light to be transmitted, and in the range of 0.25T through 0.85T of the period T, respectively.

In this preferred embodiment, the period p and groove depth of grating of the metallic grating 131 are approximately 200nm and between 100nm and 200nm, respectively. The transmissivity of polarized light p of input light with a wavelength in the visible light range of 0.4μm through 0.7μm and the refractive index of polarized light s are maintained between 80% and 85% in the visible light wavelength range and 60% or more, respectively.

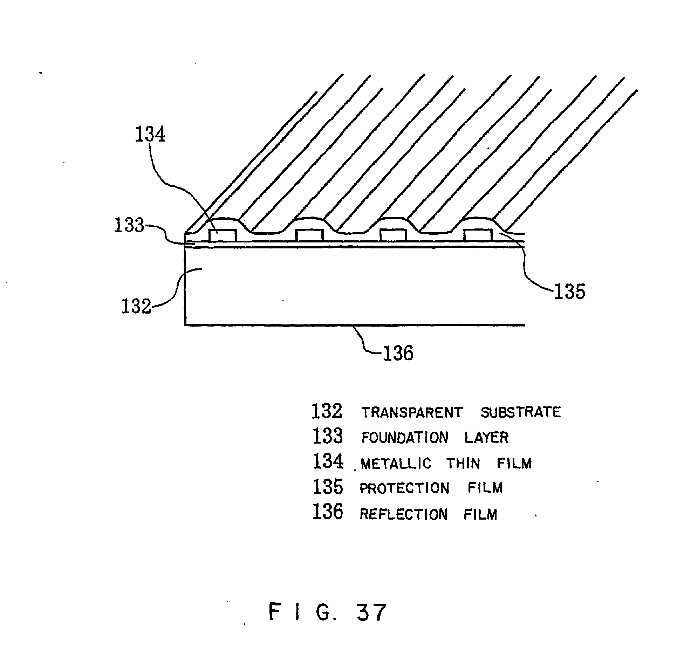

Fig. 37 shows the squint cross-section of another grating structure. In Fig. 37, for the transparent substrate 132, being the surface unit of the light guiding means 40, a transparent material having a better optical characteristic is used although the material is not especially limited. For example, acrylic resin, polycarbonate resin, amorphous polyolefin resin, polyepoxy resin or polyethylene -denatured resin forms the transparent substrate is used.

If the grating composed of a metallic thin film 134 is formed, which is described later, the foundation layer 133 is provided in order to improve the adhesive property of the transparent substrate 132 and to prevent damage caused when a metallic thin film is formed. However, the foundation layer 133 is not necessarily an indispensable component. For the material of the foundation layer 133, ultraviolet radiation type urethane-denatured/epoxy -denatured acrylate resin, resin, such as general acrylic acid/methacrylic acid copolymer, polyester, vinyl acetate/acrylic acid copolymer, or water-soluble inorganic coating material is used. The foundation layer is formed by coating the material 2μm or less by spin coating, dipping, knife coating or slit reverse coating, and by hardening the material by light or heat.

The metallic thin film 134 forms the metallic grating. For the metallic thin film 134, for example, a compound of Mg, Se, Y, Ti, Cr, Mo, W, Mn, Fe, Co, Ni, Ru, Pt, Cu, Ag, Au, Zn, Al, In, Si, Ge, Te, Pb or Sn, preferably a compound of Cr, Ni, Pt, Cu, Ag or Al is used. It can be a single compound or an alloy of two or more of such elements. It is preferable for the refractive index of the metallic thin film 134 to be 60% or more, and it is better if it is 70% or more.

This metallic thin film 134 is formed on the grating structure through a mask with a striped grating pattern by an evaporation method, a sputtering method, an ion plating method or a dry edging method. The thickness of the metallic thin film 134 is 0.05μm or more. However, if it is too thick, the metallic thin film 134 may drop off the interface of the transparent substrate 132 or the foundation layer 133, or may crack.

A grating period determined by the metallic thin film 134 is between 0.05μm through 0.25μm equal to or less than the wavelength of light, preferably in the range of 0.08μm through 0.2μm.

Since the surface hardness of the protection film 135 must be resistant to damage, it is preferable to form the protection film 135 of urethane -denatured/epoxy-denatured multi-functional radiation hardened type acrylate resin or a transparent inorganic thin film by a wet method or a dry method as used when forming a metallic thin film. It is preferable for the protection film 135 to be 3μm or less thick.

A reflection film 136 is formed on the back surface of the transparent substrate 132. The reflection film 136 is made of the same compound as or a compound different from the metallic thin film 134. The reflection film corresponds to the reflection means 30.

It is acceptable if this reflection film 136 is formed only on the back surface of the transparent substrate 132. However, alternatively, the reflection film 136 can be formed on all surfaces except both a surface that receives input light from the light source 2 and a surface that emits light. The forming method of this reflection film 132 (reflection means 30) can be applied to other preferred embodiments.

Next, a specific example of such an improved preferred embodiment is described.

In the structure shown in Fig. 37, firstly, a transparent substrate 132 having a better optical characteristic is obtained by applying injection molding to acrylic resin (Parapet H-1000 of Kuraray make) at the resin temperature of 250°C, at the mold temperature of 70°C and at the maximum injection pressure of 70Mpa using an injection compressor (100ton α100iA of Fanuc make). A film approximately 0.8μm thick is formed by coating ultraviolet-hardened type coating agent made of epoxy-denatured acrylate resin on the surface of this transparent substrate 132 as the foundation layer 133 by a spin coating method and by hardening using an ultraviolet ray.

An Al metallic thin film 134 (0.1μm thick) is formed on this foundation layer 133 through a mask with a grating pattern. Thus, a metallic grating, whose period and width are 0.15μm and 0.08μm, respectively, is obtained.

Simultaneously, an Al reflection film 136 (0.1μm thick) is formed on the entire back surface of the transparent substrate 132.

Lastly, a protection film 135 approximately 2μm thick is formed by coating ultraviolet-hardened type coating agent made of multi-functional epoxy-denatured acrylate resin on the front and back surfaces of a material composed of the transparent substrate 132, the foundation layer 133, the metallic thin film 134 and the reflection film 136 and by hardening it.

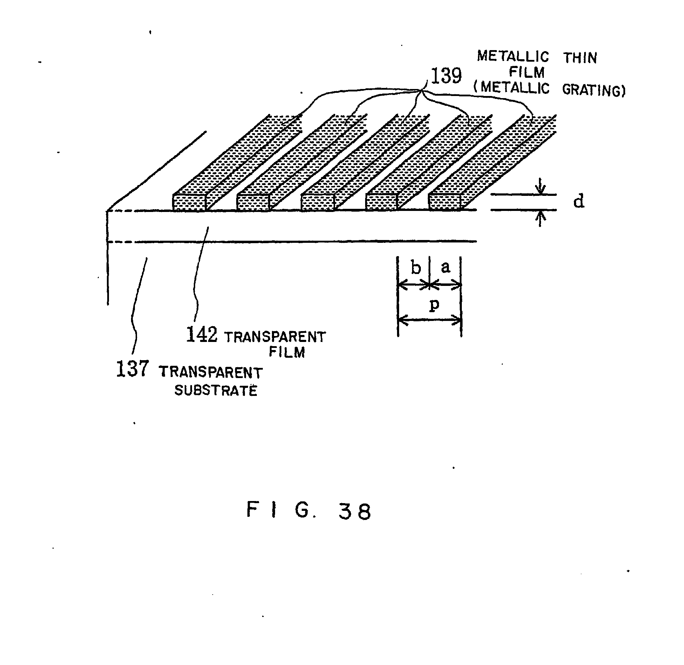

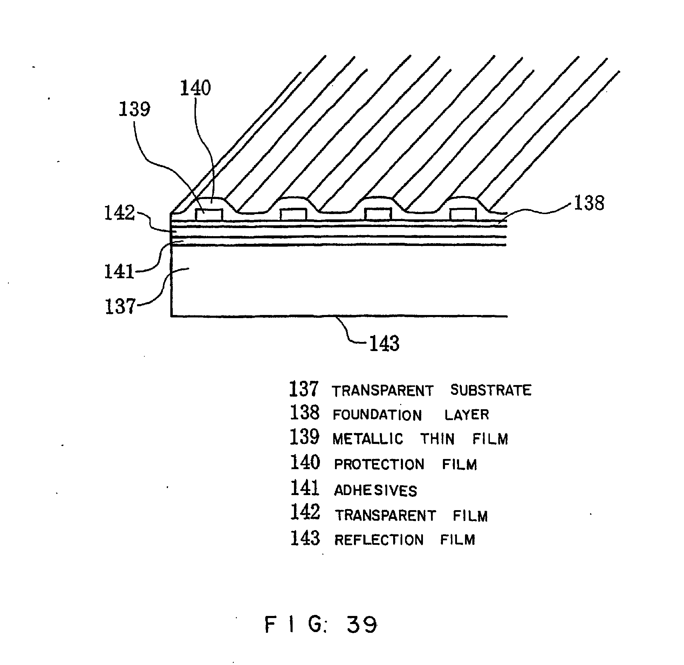

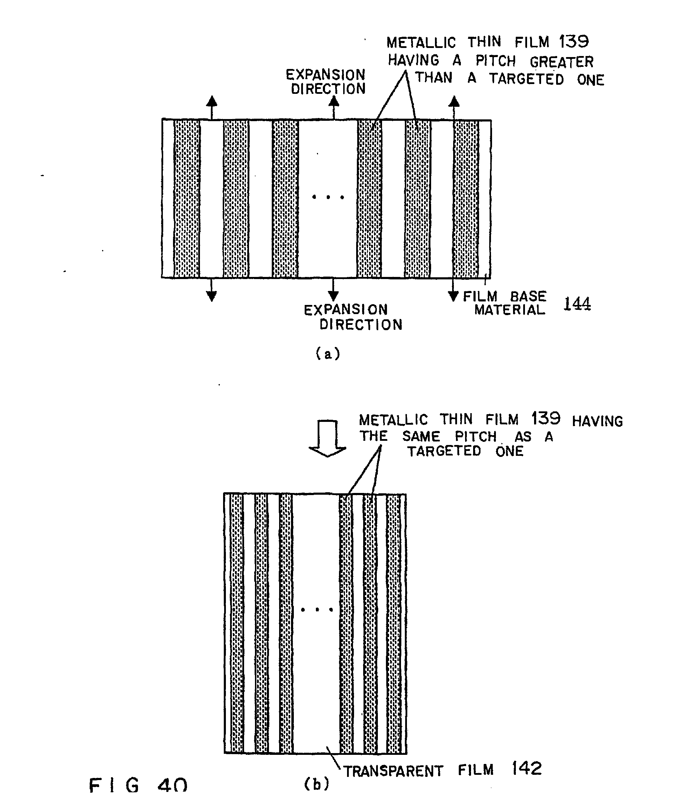

Next, further improved preferred embodiments are described. Figs. 38 and 39 show the squint cross-sections of other grating structures. Fig. 40 shows the manufacturing method of a film with a metallic thin film evaporated on it. These preferred embodiments also relate to both a light guiding means and a grating structure composed of a metallic material. These preferred embodiments are obtained by improving the material or structure of the grating structures shown in Figs. 35 through 37. Specifically, they are obtained by forming a metallic thin film on the top side of a transparent film.

The grating in another improved preferred embodiment, shown in Fig. 38 is specifically obtained by periodically piling a metallic thin film (metallic grating) 139 whose width and thickness are a and d, respectively, on a transparent film 142 formed on a transparent substrate 137. In this case, a+b is equal to period p.

The metallic thin film 139 is a single compound of Mg, Se, Y, Ti, Cr, Mo, W, Fe, Co, Ni, Ru, Pt, Cu, Ag, Au, Zn, Al, In, Si, Ge, Te, Pb or Sn, or an alloy of two or more of such elements.

The grating structure composed of this metallic thin film is structured in such a way that its refractive index may be 60% or more. Specifically, the thickness of the metallic thin film, the grating period and grating width are set to be 0.05μm or more, between 0.05μm and 0.25μm equal to or less than the wavelength of light and between 0.25T and 0.85T of period T, respectively.

Next, the detailed structure of this improved preferred embodiment is described. In Fig. 39, a foundation layer 138 is formed on a transparent film 142 made of polyester resin, polyethylene resin or vinyl-denatured resin, and as in the structure shown in Fig. 37, a metallic thin film 139 with a grating structure is formed on the foundation layer 138. In this case, the material of the transparent film is not limited to that described above.

A material composed of the transparent film 142, the foundation layer 138 and the metallic thin film 139 is adhered on the transparent substrate 137. Lastly, a protection film 140 and a reflection film 143 are formed.

In this case, alternatively, the metallic thin film 139 can be formed on the transparent film 142 through the foundation layer 138 and can be directly adhered on the transparent substrate 137.

As shown in Fig. 40A, the metallic thin film 139 is formed on this transparent film 142 by evaporating the metallic thin film 139 on a film base material 144. In this case, the width and period of the metallic thin film 139 shown in Fig. 40A are larger than the width a and period p, respectively. If such a film base material 144 is expanded in the direction of the arrow mark shown in Fig. 40A, as shown in Fig. 40B, the film base material 144/metallic thin film 139 are transformed into the transparent film 142/metallic thin film 139 whose width and period are a and p, respectively, as shown in Fig. 38.

In this case, in order to make the grating structure pattern more minute, the grating structure can also be pasted on the transparent substrate 137 after expanding the grating structure in the strip direction of the grating at a temperature equal to or less than the glass dislocation temperature (Tg) of the resin of the transparent film 142.

Next, the more detailed structure of this improved preferred embodiment is described.

In the grating structure shown in Fig. 39, a film of a vinyl coating agent, approximately 1μm thick, is formed on the transparent film 142 (of Toray make) made of PET (poly terephtalate chloride) as the foundation layer 138 by a slit reverse coating method, and the grating-shaped metallic thin film 139 made of Au is formed on the film by the same sputtering method as shown in Fig. 37. Then, a grating structure whose period and width are 0.2μm and 0.1μm, respectively, is obtained by expanding the transparent base material in the stripe direction at a temperature equal to or less than the glass dislocation temperature (Tg).

Furthermore, a film on the output side is formed by forming the protection film 140 in the same structure as shown in Fig. 37.

Then, the reflection film 143 made of Au is formed on the bottom surface of the transparent substrate 137 made by applying injection molding as described above, and lastly the formed films are adhered together using reaction type acrylic adhesives 141.

In the preferred embodiments shown in Fig. 37 and 38 too, a polarized component orthogonal to a metallic grating composed of metallic films 134 and 139 transmits through the metallic grating. Light in parallel to the metallic grating is reflected on the metallic grating and is returned to the inside of the transparent substrates 132 and 137, and is multiply reflected between the reflection films 136 and 143 and the metallic grating composed of the metallic thin films 134 and 139.

While light reflected on the grating thus is repeatedly reflected in the transparent substrates 132 and 137, the polarization converting means, which is not shown in Figs. 37 and 39, converts its polarization status and generates light having a variety of polarization statuses. Then, the light having a variety of polarization statuses re-enters the grating, and a polarized component orthogonal to the grating transmits the grating as described above.

As a result, a polarized component orthogonal to the grating, composed of metallic films 134 and 139 transmits through the metallic grating, and polarized light can be efficiently extracted from light inputted to the transparent substrates 132 and 137.

As shown in the polarization splitting characteristic chart of Fig. 36, of light with a wavelength in the visible range, polarized light p transmits through the metallic grating at the rate of approximately 0.6 units and polarized light s is reflected by it at the rate of approximately 0.77 units. Thus, a good polarization splitting characteristic can be obtained across the entire visible wavelength range. Therefore, the polarization splitting means 10 using the grating structure of this preferred embodiment can be adopted in both cases of a white light source and a monochrome light source.

Such a grating can perform the same function as that in the third through eighth preferred embodiments.

The preferred embodiments using a variety of polarization splitting means 10 have been described as the third through ninth preferred embodiments.

It is preferable for the grating structure composed of a dielectric (the fourth preferred embodiment) of these to be used only in the case of a monochrome light source (which emits light with a single wavelength). Other grating structures (the fifth through ninth preferred embodiments) can be used in both cases of a monochrome light source and a white light source (which emits light that is recognized to be white to human eyes by combining a plurality of segments of light each with a different wavelength). This polarization splitting means 10 can be selected in accordance with the used purpose of the light guiding plate.

Next, the polarization converting means 20 and the light guiding means 40 in the tenth preferred embodiment are comprehensively described. Although there is a variety of the polarization converting means 20, this preferred embodiment adopts particularly one utilizing the double-refraction distribution of a resin. Most of the conversion from polarized light s into polarized light p is made by the double refraction in a light guiding path of the light guiding means 40.

Conventionally, double refraction is recognized not to be preferable at all. For example, optical devices that transmit light, such as so-called plastic lenses, etc., require an uniform optical characteristic, while in molding, efforts are made so as to reduce double refraction which is caused when molding an optical disk.

In this preferred embodiment, attention is paid to the fact that even double refraction caused when normally molding resin, converts polarized light and realizes the effects of the present invention. In this preferred embodiment, the double refraction caused when molding resin, which is conventionally reduced, is intentionally increased to further improve the conversion efficiency between polarized light s and polarized light p.

In this preferred embodiment, when making the light guiding means 40 from resin, double refraction is distributed in such a way as to provide a prescribed double-refraction phase difference distributed in the light guiding means 40, the polarization converting means 20 is manufactured together with the light guiding means 40. Thus, the simplification and thinness of structure, the labor-saving of a manufacturing process, the reduction of a manufacturing cost, etc. are attempted.

In this preferred embodiment, the light guiding means 40 is molded by applying injection molding to macromolecular resin. At the time of this injection molding, double-refraction distribution, which is used as the polarization converting means 20, is incorporated.

The manufacturing method is described below. In normal injection molding, a molded product in a target shape is obtained by melting macromolecular resin so as to be molded, and cooling/hardening the melted resin after filling it in the cavity of a mold at a high speed and at a high temperature.

In this case, stress and distortion inevitably remain in the molded product for the reasons that resin is a viscoelastic substance that the flowing and cooling of resin simultaneously occur and that resin is not uniformly cooled since the heat conductivity of resin is low. In that case, there is the possibility that warps and sinks may occur in the molded resin product.

The viscosity in the vicinity of a mold wall on the opposite side of an injection hole in the cavity increases because high-temperature resin suddenly hits a low-temperature mold wall, and its transcriptive character (molding shape trackability) degrades. Therefore, if the molded product has a part where, for example, many narrow grooves (for example, convex parts in the grating structure of the polarization splitting means 10) are provided in parallel, there is the possibility that a prescribed structure may not be accurately obtained.

Since the difference in temperature between resins that hit the mold wall and the side wall is large, layers each with a different viscosity in resin are generated. Therefore, a shearing force occurs and a layer in which the macromolecular chain of resin is highly oriented (hereinafter simply called a "skin layer") is formed. As a result, double refraction and refractive index vary locally.

In view of this characteristic, the light guiding means 40 must be formed without molding byproducts, such as warps, sinks, short shots (insufficient injection), weld lines (insufficient fusion), etc., and a skin layer with a prescribed amount of double refraction must be formed.

In order to meet the conditions described above, cooling speed, resin temperature and molding pressure must be adjusted. In particular, while poor molding is avoided by increasing both resin temperature and molding pressure, the difference in temperature between resin on the wall and the side wall must be increased particularly in order to generate a skin layer.

The applicant has earnestly repeated experiments and has succeeded in inventing an injection molding method having double-refraction distribution that meets the prescribed amount of double refraction.

For the injection molding machine, 100ton $\alpha$100iA of Fanuc make, which can mold melted resin by applying high pressure, was used. For the material, polycarbonate (Panlite of Teijin make), which is resin that can form double-refraction distribution, was used.

Then, the light guiding plate 1 (64mm long, 64mm wide and 0.9mm thick) shown in Figs. 1 and 2 was generated by applying 142Mpa (1,450kgf/cm$^2$) higher than conventional pressure as the molding pressure at the resin and mold temperature of 300°C and 112°C, respectively. In this case, double refraction is formed in the light guiding means 40, based on the anisotropy and orientation of the resin.

The double-refraction distribution in this case is described below.

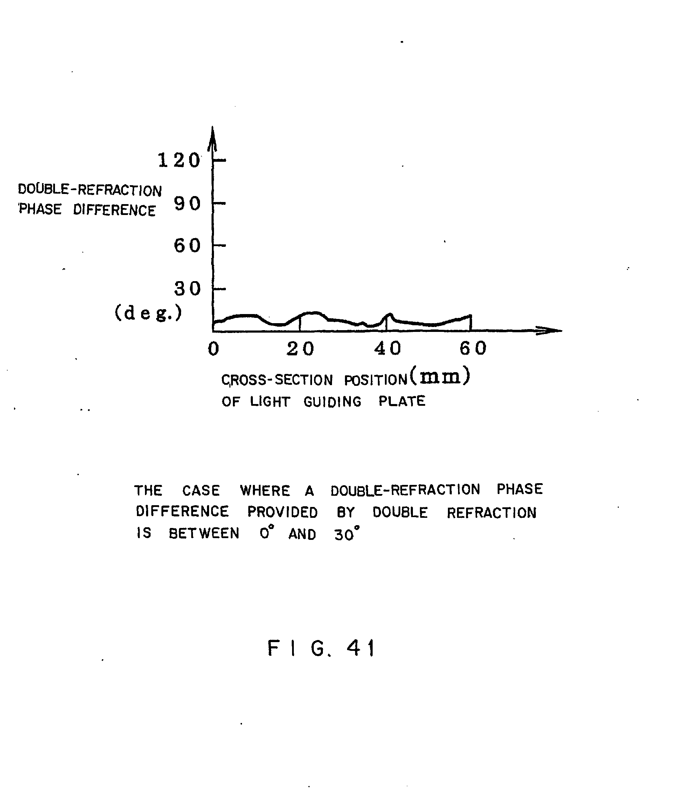

Figs. 41 through 43 show the double-refraction distribution characteristic of a light guiding means. In this double-refraction distribution, a double -refraction phase difference is provided to light with a wavelength of 550nm. The double refraction is formed in the direction perpendicular to the grating surface of the light guiding means.

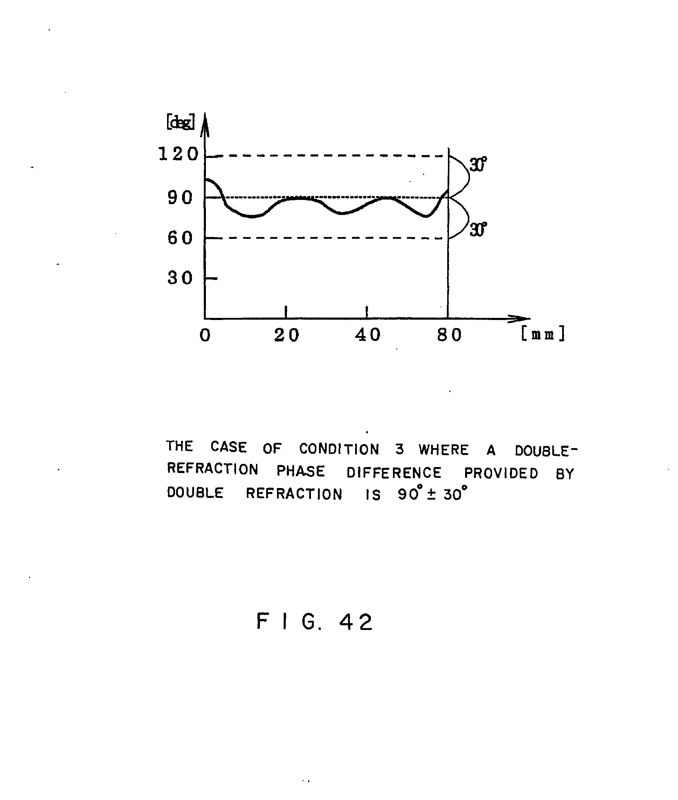

In a normal molded resin product, as shown in Fig. 41, double-refraction distribution is suppressed /controlled in such a way that the double-refraction phase difference may be 30° or less across the entire cross section of the light guiding means. However, in this preferred embodiment where a product is manufactured under the manufacturing conditions described above, the double-refraction phase difference, with which light to be transmitted is provided, meets condition 3 of $\theta_3 + n \cdot 180°$ ($60° \leq \theta_3 \leq 120°$, n: integer), as shown in Fig. 42.

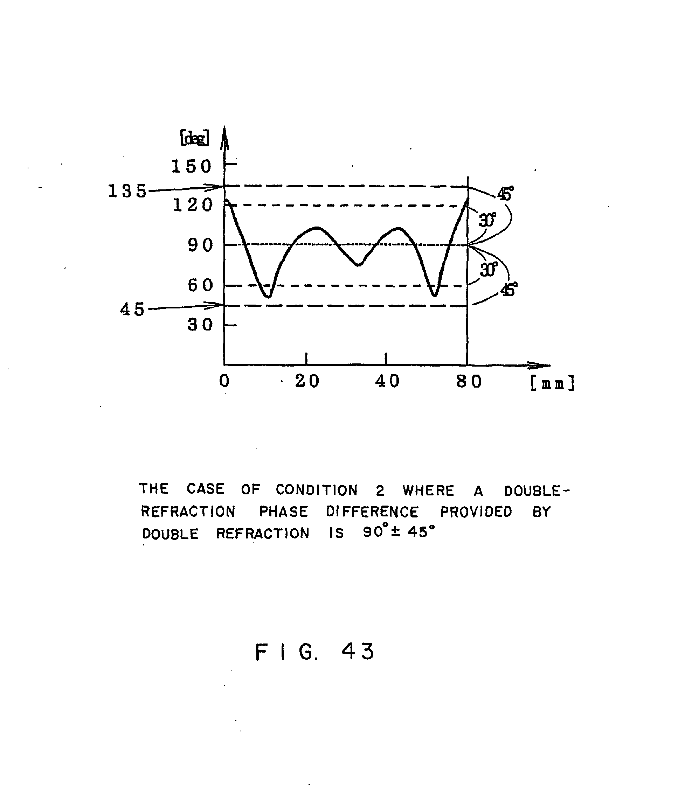

As shown in Fig. 43, although a part of the double-refraction phase difference, which the double-refraction provides to light to be transmitted s, deviates from $\theta_3 + n \cdot 180°$ ($60° \leq \theta_3 \leq 120°$, n: integer), 60% of the area of the polarization converting means meets condition 3. The double-refraction phase difference also meets conditions 1 and 2 satisfactorily.

Thus, double-refraction functions as the polarization converting means of the present invention.

For the resin that enables a skin layer to generate double refraction, besides polycarbonate, acrylic resin (polymethylmetacrylate (PMMA)), acrylonitrile /styrene resin (AS), epoxy resin (EP) or olefin resin (olefin elastomer (TPO)) can be used. Alternatively, acrylic resin, olefin resin, amorphous polyolefin resin, polyepoxy resin or polystyrene-denatured resin can be used.

Alternatively, a polymer alloy obtained by mixing two of the plurality of segments of resins or a polymer alloys obtained by mixing such resins with an additive, such as an ultraviolet ray absorbent, can be used. For example, resin obtained by adding $SiO_2$ to acrylic resin as an additive, can be used.

Alternatively, a mixed crystal polymer obtained by mixing a main material with a prescribed amount of resin polymer (minute styrene beads or liquid crystal polymer) different from the main material, can be used.

Such resin provides a double refractive area of styrene beads or liquid crystal polymer in addition to the double refraction of a skin layer, and accordingly it can increase the amount of double refraction.

In this preferred embodiment, an injection molding method/cast molding method, an extrusion molding method, an expansion molding method, a roll molding/roll painting method, a transfer molding method, a reaction injection method (RIM), a 2P molding method or a cast molding method can be used to generate a light guiding means. In the generation of a light guiding means, an additive, such as discoloration inhibitor/oxidation inhibitor, ultraviolet ray absorbent, rubber surface lubricant can be mixed, if necessary.

Next, the reflection means 30 as the eleventh preferred embodiment is described.

Unnecessary light is prevented from leaking from the light guiding means 40 by providing the reflection means 30 for the entire surface or part of it except a surface through which light is inputted and a surface on which the polarization splitting means 10 is formed of the light guiding means 40.

As a specific example of this reflection means 30, there is a diffusive hologram, part of which or the whole of which is composed of minute convex/concave parts and which diffuses/reflects light toward the polarization splitting means 10.

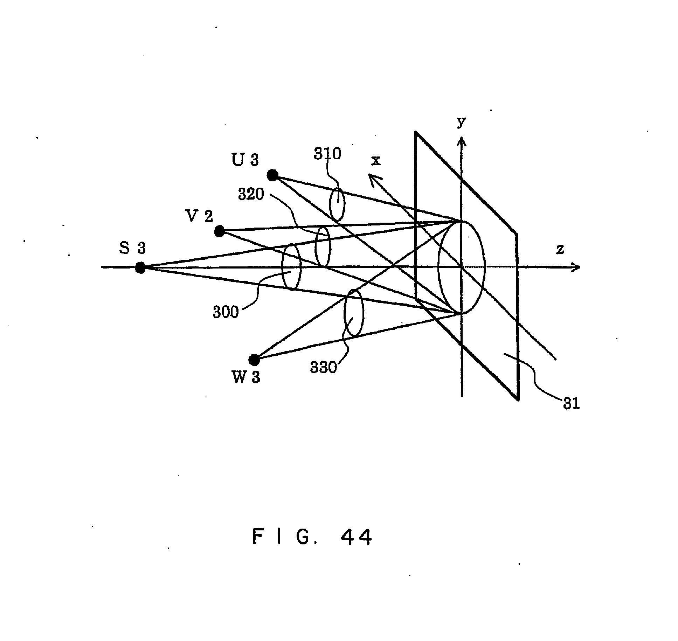

This diffusive hologram is described below. Fig. 44 shows the principle of a diffusive hologram. The diffusive hologram shown in Fig. 44 is planar and is disposed on the xy-plane of an orthogonal coordinate system. Alternatively, the diffusive hologram is refractive and has the following phase difference distribution represented by $P_{300}(x)$.

$$P_{300}(x) = \text{mod}[a_{320} \cdot \text{mod}[P_{320}(x) - P_{310}(x) + C_{320}, \pi]$$

$$+ a_{330} \cdot \text{mod}[P_{330}(x) - P_{310}(x) + C_{330}, \pi] + \text{mod}[P_{310}(x) + C_{310},$$

$$\pi], \pi] \tag{3}$$

(in the above equation, x is a vector indicating a position on the diffusive hologram, $C_{310}$, $C_{320}$ and $C_{330}$ are constants, and $a_{320}$ and $a_{330}$ are constants that meet $0 < a_{320}$ and $a_{330} < 1$.) However, $P_{310}(x)$, $P_{320}(x)$ and $P_{330}(x)$ in the above equation are expressed as follows. In the following equations, $\lambda$ is the wavelength of input light/output light and $x_0$ is a potential vector indicating a reference position set on a diffusive hologram. $x_{300}$, $x_{310}$, $x_{320}$ and $x_{330}$ are the potential vectors of points S3, U3, V3 and W3, respectively, shown in Fig. 44. These four points are all positioned on the negative side of the z-axis.

$$P_{310}(x) = (| x_{310} - x| + |x - x_{300}| - |x_{310} - x_0| - |x_0$$

$$- x_{300}|) \cdot \pi/\lambda,$$

$$P_{320}(x) = (| x_{320} - x| + |x - x_{300}| - |x_{320} - x_0| - |x_0$$

$$- x_{300}|) \cdot \pi/\lambda,$$

$$P_{330}(x) = (| x_{330} - x| + |x - x_{300}| - |x_{330} - x_0| -$$

$$|x_0 - x_{300}|) \cdot \pi/\lambda \qquad (4)$$

A diffusive hologram 31 having this phase difference distribution $P_{300}(x)$ simultaneously causes polarization by phase difference distribution $P_{310}(x)$ and that by phase difference distribution $P_{320}(x)$. In other words, when light 300 with a wavelength $\lambda$ that passes through point S3 and is emitted, is inputted, the light is branched/polarized, and light 310 that goes toward point U3 and focuses, light 320 that goes toward point V3 and focuses on it, and light 330 that goes toward point W3 and focuses on it, are emitted. In this case, the strength ratio of each segment of output light is based on the values of $a_{320}$ and $a_{330}$ in equation (3).

Phase difference distribution $P_{300}(x, y)$ can be realized by a diffusive hologram 31 having a surface indicated by shape distribution $D'_{300a}$ in the z-axis direction, expressed by the following equation (5). In this case, the refractive index of a medium around the diffusive hologram 31 is 1.

$$D'_{300a}(x, y) = -1/2 \cdot (\lambda/\pi) \cdot P_{300}(x, y) \qquad (5)$$

When light 300 with a wavelength $\lambda$ that passes through point S3, being a light source, and is emitted, is inputted to the diffusive hologram generated thus, the light is branched/polarized, and light 310 that goes toward point U3 and focuses on it, light 320 that goes toward point V3 and focuses on it, and light 330 that goes toward point W3 and focuses on it, are emitted. Therefore, the light can be controlled in such a way as to be diffused/reflected in a desired direction.

By further forming a metallic reflection film on this diffusive hologram 31, its refractive index is further improved. The metal is a single compound of Mg, Se, Y, Ti, Cr, Mo, W, Mn, Fe, Co, Ni, Ru, Pt, Cu, Ag, Au, Zn, Al, In, Si, Ge< Te, Pb and Sn or an alloy of two or more of such elements. An Al, Au or Ag thin film is the most preferable if costs are taken into consideration. In the case of an Al or Ag thin film, it is preferable to form a protection film in order to prevent the film from being damaged due to oxidation and corrosion.

Alternatively, as such a reflection means 30, a dielectric multi-layer film can be formed.

Furthermore, a metallic thin film is formed on this dielectric multi-layer film in order to improve its refractive index.

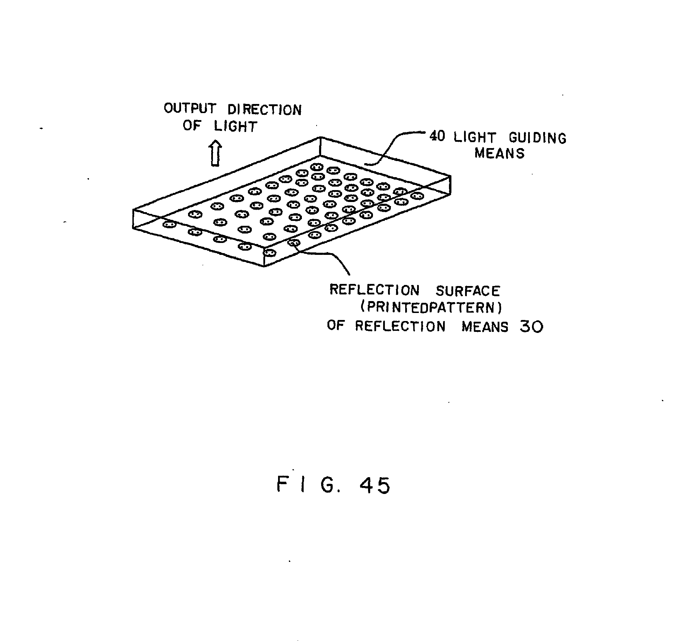

Alternatively, as such a reflection means 30, a reflection pattern can be printed. Fig. 45shows an example of such a printed reflection pattern.

Alternatively, as such a reflection means 30, a scattering surface (coarse surface formed on a reflection surface by sand blasting/corrosion using chemicals) can be used.

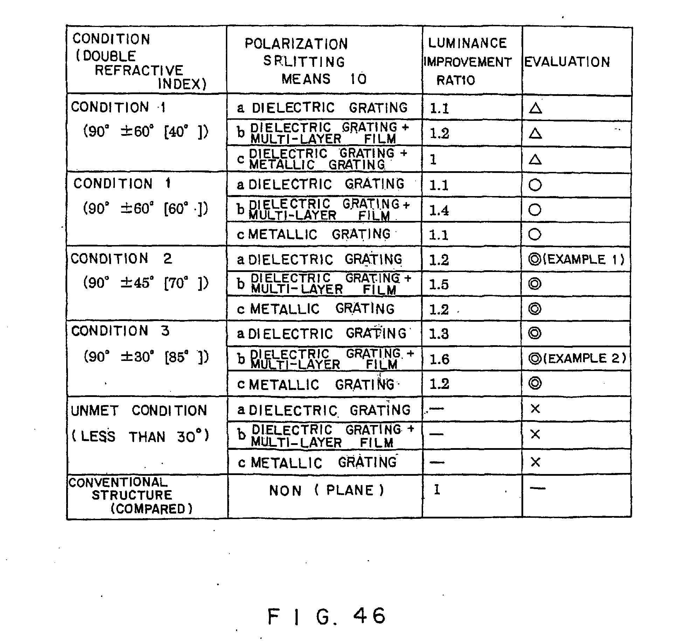

Luminance improvement ratios were compared and evaluated using the light guiding plate described above. The comparison table is described below. Fig. 46 shows the comparison/evaluation of luminance improvement ratios.

A double-refraction phase difference that meets conditions 1, 2 and 3 described above is provided, and the respective luminance improvement ratios of the light guiding plate according to the present invention obtained when a double-refraction phase difference is 40°, 60°, 70° and 85° to those of conventional light guiding plate have been calculated. It is assumed that the single wavelength of light emitted from a light source, the period of a dielectric grating P, the groove depth of the grating d and the period of a metallic grating P are 630nm, 0.6µm (P=0.6µm), 0.3µm (d=0.3µm) and 0.2µm (P=0.2µm), respectively. The luminance improvement ratio of the light guiding plate to that of the conventional light guiding plate can be calculated by assigning Tp, Rs, $\eta$ and R to the following equation (6).

$$\text{Luminance improvement ratio} = \frac{0.5 \times T_p + 0.5 \times R_s \times \eta \times R \times T_p}{0.5}$$

$$\cdot \cdot \cdot (6)$$

In the above equation, Tp, Rs, η and R are the polarized light p transmissivity, the polarized light s refractive index, the polarization s/p conversion factor of a polarization splitting means and the ratio of the refractive index of a light guiding plate reflection surface to that of a conventional one, respectively. A divisor 0.5 of the denominator means that, of light emitted from the conventional light guiding plate, only polarized light p, that is, the half of the light is used.

If the polarization splitting means is composed of only dielectric gratings, the Tp, Rs and R of the dielectric grating are 0.85, 0.55 and 1, respectively (Tp=0.85, Rs=0.55 and R=1).

If in the polarization splitting means, a multi-layer film is formed on a dielectric grating, the Tp, Rs and R of the dielectric grating are 0.9, 0.9 and 1, respectively (Tp=0.9, Rs=0.9 and R=1).

If in the polarization splitting means, a metallic grating is formed on a dielectric grating, the Tp, Rs and R of the dielectric grating are 0.75, 0.6 and 1, respectively (Tp=0.75, Rs=0.6 and R=1).

In the case where double-refraction phase differences are 40°, 60°, 70° and 85°, polarization s/p conversion factors η are 0.44, 0.66, 0.77 and 0.94 in the case where double-refraction phase differences are 40°, 60°, 70° and 85°, respectively.

As clearly seen from Fig. 46, it is found that the luminance improvement ratio is enhanced. If a double-refraction phase difference of nearly 90° can be provided, the luminance improvement ratio sometimes becomes 1.6, which means luminance can be improved by 60%.

So far the polarization splitting means 10, polarization converting means 20 and reflection means 30, which all are the components of the light guiding plate 1 of the present invention have been described. By appropriately combining these components, the luminance improvement ratio of the light guiding plate 1 can be enhanced.

Next, the further improvement of such a light guiding plate 1 is described.

If the light guiding plate 1 is used as a lighting device, uniform color distribution of light emitted from the light guiding plate is required. Since the polarization splitting means 10 is a grating structure, a rainbow may occur due to its spectral effect when white light is inputted. However, since a plurality of segments of light is inputted to one point of the polarization splitting means 10 from many directions, a plurality of segments of light emitted from the polarization splitting means 10 are mixed and no rainbow occurs.

However, color is somewhat different depending on the position in the polarization splitting means 10. Such a color difference can be unified by appropriately selecting the polarization splitting characteristic of the polarization splitting means 10, that is, both polarization p transmissivity and polarization s refractive index, specifically, appropriately selecting the grating period, groove depth of grating, etc., of the polarization splitting means.

In particular, luminance in a position near the light source 2 is different from that in a position far away from it the light source 2. Therefore, in the light guiding plate 1 used in a lighting device for liquid crystal display, attention is paid to the uniform color distribution in addition to the adoption of the structure described above.

Next, this color distribution unifying technology is described.

Firstly, in the light guiding plate 1 so far described, the polarization splitting means 10 has been a periodic structure whose grating period, groove depth of grating, etc., are uniform. However, in order to unify the color distribution, the grating period, groove depth of grating, etc., must be changed depending on both the position and the polarization splitting characteristic of the polarization splitting means 10, specifically, the wavelength dependency of polarization p transmissivity and that of polarization s refractive index must be changed depending on its position.

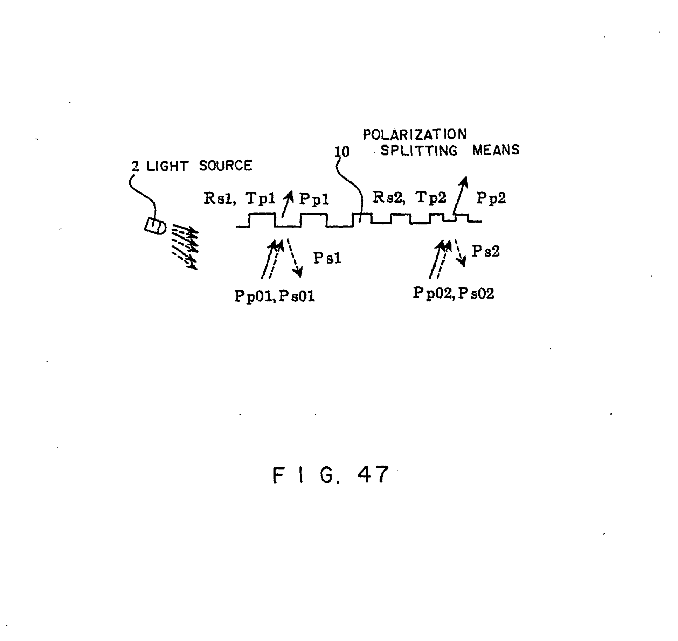

This point is described with reference to a drawing. Fig. 47 shows the polarization splitting means having a different grating period depending on its position.

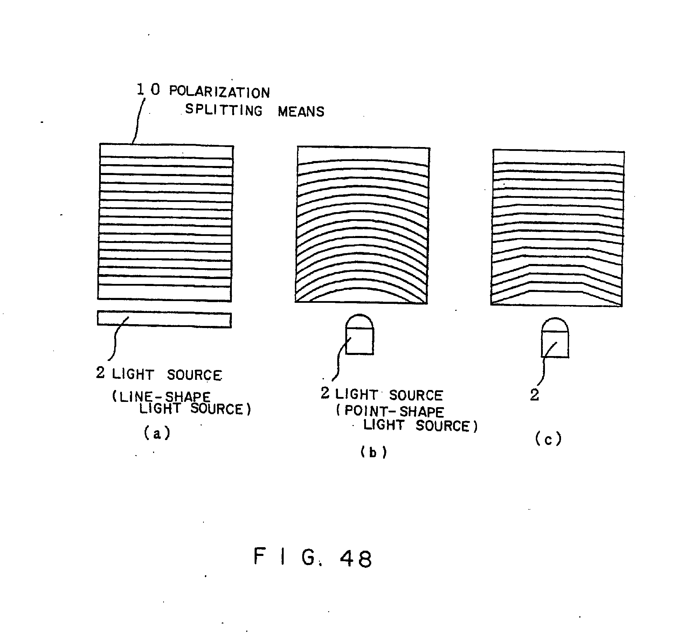

The optical density on the side near the light source 2 of the polarization splitting means 10 shown in Fig. 47 is high, and the density decreases as a position gets away from the light source 2. Therefore, as to the polarization splitting characteristic of the polarization splitting means 10, the period and groove depth of the dielectric grating of the polarization splitting means 10 is selected in such a way that polarization p transmissivity is set low to $T_{P1}$ and high to $T_{P2}$ on the near side (left side of Fig. 48) and far side (right side of Fig. 48) of the light source, respectively, and that polarization s refractive index is set high to $R_{S1}$ and low to $R_{S2}$ on the near side (left side of Fig. 48) and far side (right side of Fig. 48) of the light source, respectively.

Thus, if on the near side of the light source 2, two segments of light $P_{P01}$ and $P_{S01}$ attempt to transmit the polarization splitting means 10, $P_{P1}$, being polarized light p, whose optical density is low, is transmitted and $P_{S1}$, being polarized light s, is reflected at high rate. On the far side of the light source 2, $P_{P2}$ being polarized light p, whose optical density is higher than that of ordinary light is transmitted, and $P_{S2}$ being polarized light s is reflected at low rate. Thus, differences in optical density between far and near areas are corrected, and optical density can be unified between far and near sides. In other words, luminance distribution can be unified. By changing the period of the dielectric grating of the polarization splitting means 10 depending on a position thus, luminance factor can be unified.

Sometimes luminance factors in the left and right end areas are different depending on the type of a light source. This point is described below with reference to a drawing. Fig. 48 shows a polarization splitting means in which the shape of a dielectric grating varies depending on a position. For the dielectric grating (in the fourth through eighth preferred embodiments)/metallic grating (in the ninth preferred embodiment) of the polarized splitting means 10 described above to realize a polarization splitting function, it is preferable to input light orthogonally to the dielectric/ metallic grating. Therefore, usually it is preferable to use a bar light source (linear light source) 2 as shown in Fig. 48A. For example, the cold cathode tube light source described above corresponds to such a linear light source 2. However, as a monochrome light source, etc., a point light source 2, such as an LED, is sometimes used. In this case, light is not orthogonally inputted in the left and right end areas. Therefore, in this case, a polarization splitting function is not sometimes performed completely and luminance distribution may not be uniform.

In that case, the dielectric/metallic grating is formed in a curved shape, as shown in Fig. 48B. Alternatively, the dielectric/metallic grating is formed in an approximate shape obtained by combining three straight lines orthogonal to input light, as shown in Fig. 48C. Since all segments of light and most segments of light enter orthogonally to the forming direction of a grating structure in the curved grating structure shown in 46A and in the approximate-shaped grating structure shown in Fig. 48B, respectively, luminance distribution can be unified between the left and right areas even if either bar or point light source 2 is adopted.

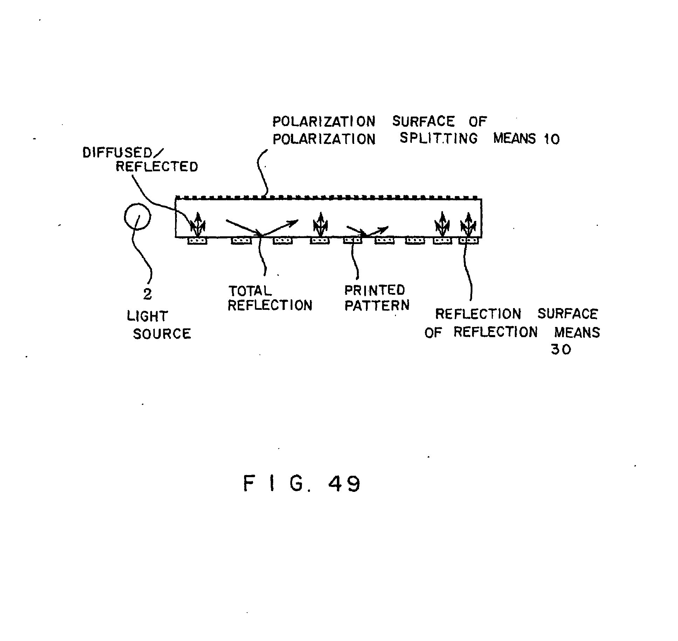

Next, the fact that devising the reflection means 30 can also unify luminance factors is described with reference to a drawing. Fig. 49 shows the reflection means whose printed pattern varies depending on its position. As has been conventionally known, a diffusive/reflective material shown in Fig. 49 (Fig. 45 is the squint view of Fig. 49) is printed in such a way that its density becomes high on the near side of the light source 2 and low on the far side. In this way, luminance distribution can also be unified.

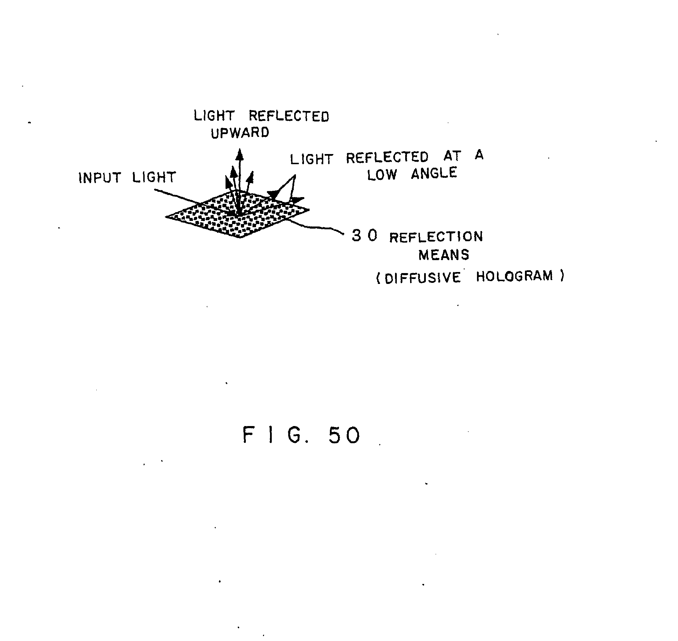

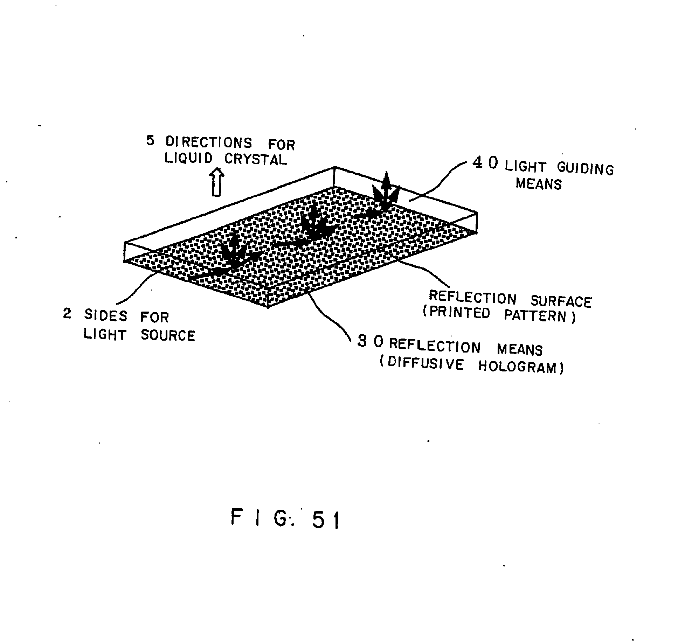

Alternatively, adopting a diffusive hologram as a reflection means can unify luminance distribution. Figs. 50 and 51 show reflection means adopting a diffusive hologram whose reflection direction varies depending on its position. The diffusive hologram described above branches/polarizes input light in a plurality of directions with a different strength in each direction and at high efficiency. By adopting and designing this diffusive hologram in such a way that the refractive index in the upward reflecting direction shown in Fig. 50 is low and high on the near and far side of the light source, respectively, optical density can be unified, and accordingly luminance distribution can be unified.

By multiply branching input light, a reflection type diffusive hologram can realize a light diffusion effect. A reflection type diffusive hologram can be conventionally obtained by plating. Alternatively, by adopting a light branching direction as the direction of a polarization splitting surface, the direction of light emitted from the polarization splitting surface can be converged into a prescribed range.

The diffusive hologram can also be realized by the designing method of an optical branching filter known as Dammann method besides the methods described above. Alternatively, the diffusive hologram can realize a diffusion function by forming a volume hologram refractive index distribution. Alternatively, the diffusive hologram using speckle diffusion disclosed in Japanese Patent Laid-open Nos. 53-42726 "Finder of a Camera" or 53-51755 "Speckle Diffusion Plate Generating Device", can be used.

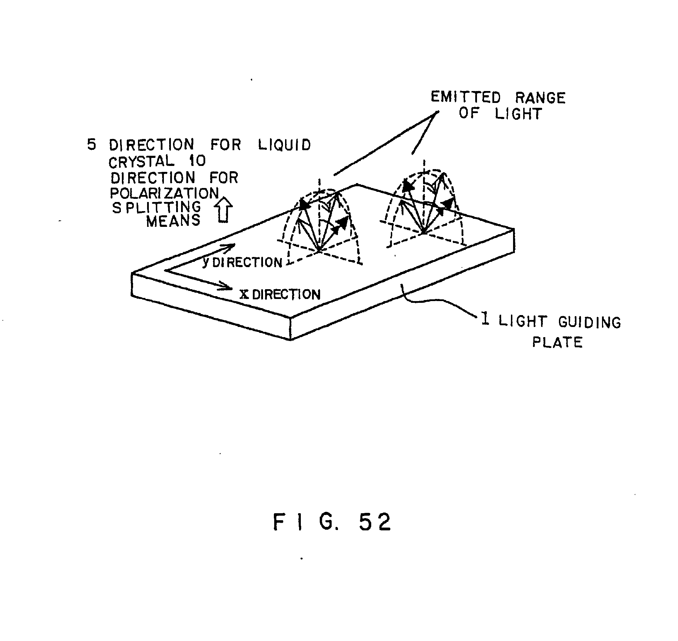

In the light guiding plate used in a lighting device, such as a liquid crystal display device, a light emitting direction must be included in a prescribed angle range. Fig. 52 shows the emitting angle range of a light guiding plate for a lighting device. As shown in Fig. 52, emitting angle ranges in the x-and y-directions are different.

Therefore, each emitting angle range must be set by the printed pattern method, preferably the method using a diffusive hologram, the designing method of an optical branching filter known as Dammann method, the method for realizing a diffusion function by forming a volume hologram refractive index distribution or the method using speckle diffusion disclosed in Japanese Patent Laid-open Mo. 53-42726 "Finder of a Camera" and 53-51755 "Speckle Diffusion Plate Generating Device" which have been described earlier as a reflection means.

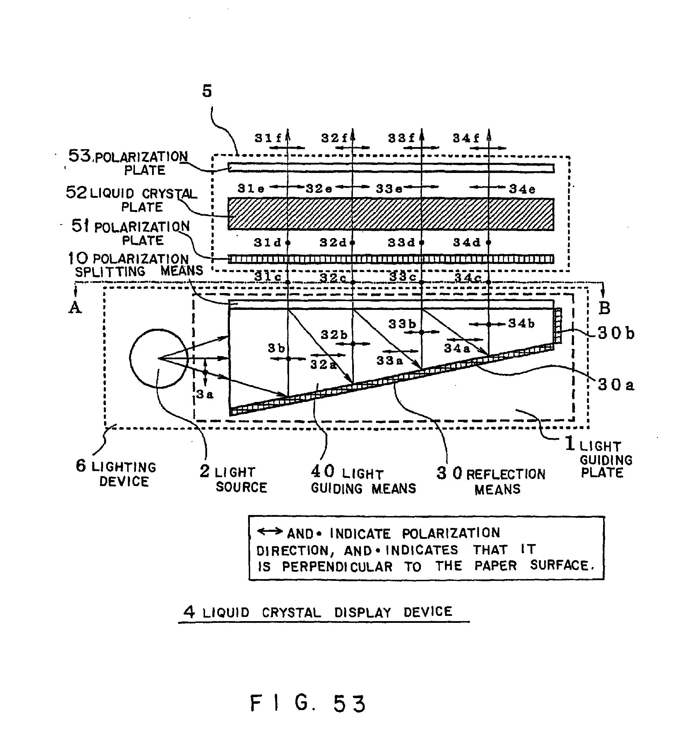

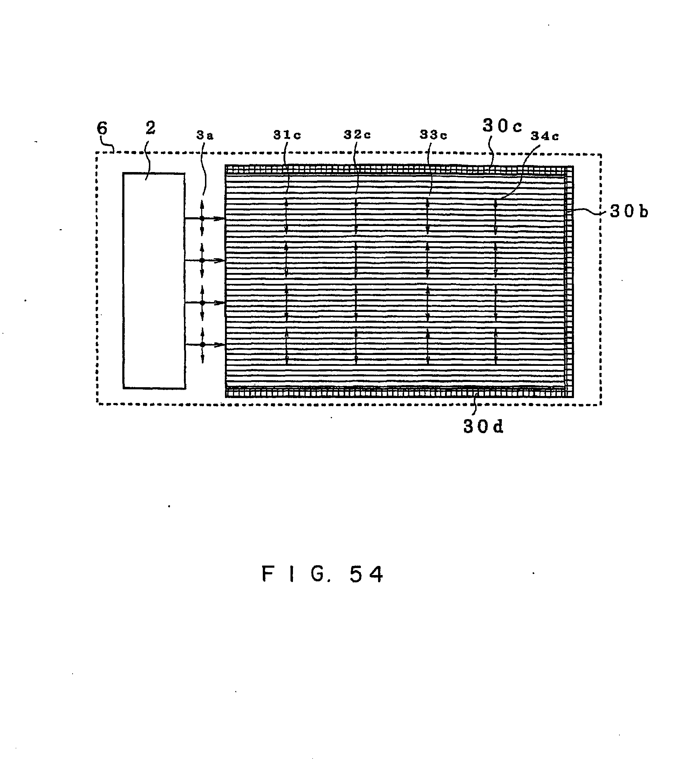

Next, a liquid crystal display device using the light guiding plate 1 described above is described. Fig. 53 shows the rough structure of the liquid crystal display device. Fig. 54 is its AB cross section showing the relationship between a grating structure and light to be transmitted.

As shown in Fig. 53, a liquid crystal display device 4 comprises a light source 2, a light guiding plate 1 and a liquid crystal panel 5. A structure where the light source 2 is disposed on the side of the light guiding plate 1 is called "edge light type". This light guiding plate 1 is almost wedge-shaped. The light source 2 and the light guiding plate 1 constitute a lighting device 6. As shown in Figs. 53 and 54, this lighting device 6 supplies light (31c through 34c) to the nearly planar liquid crystal panel 5. The light guiding plate 1 incorporates the polarization splitting means 10, polarization converting means 20, reflection means 30 and light guiding means 40, which have been all described so far.

The light guiding means 40, made of transparent resin, guides light 3a inputted from the light source 2, to the liquid crystal panel 5. The light guiding means 40 embeds the polarization converting means, which is not shown in Fig. 53 for convenience sake. In this example, the polarization splitting means 10 is a metallic grating 131 (see Fig. 35) that is made of metal and is formed on a surface that emits light for lighting (31c through 34c). The reflection means 30 is made of metal.

Next, the function of this liquid crystal display device is described. Light emitted from the light source 2 is inputted to the light guiding means 40. In Figs. 53 and 54, the light source 2 is, for example, a cold cathode tube light source. Light 3a emitted from this light source 2 (although in Figs 53 and 54, only light 3a emitted obliquely to the lower right is shown for convenience sake, in reality a plurality of segments of light is inputted to the light guiding means 40) is inputted to the light guidingmeans 40. The surface through which the light 3a from the light source 2 is inputted to the light guiding means 40 and surfaces except for that on the liquid crystal side 5 are provided with a reflection means 30 (30a and 30b), being a reflection plate made of metallic film, and a reflection means 30 (30c and 30d), being a reflection plate made of the metallic film shown in Fig. 54. Since light is fully reflected on the inner surface of the liquid crystal panel 5 of the light guiding means 40 if an incidence angle is large, the light 3a inputted to the light guiding means 40 is repeatedly reflected in the light guiding means 40 to cause multi-reflection. For example, by providing a structure for diffusing or orienting input light on the inside/outside of the light guiding means 40 and the surface of the reflection means 30, as described earlier, light lighting the liquid crystal panel 5 can be uniformly distributed on a plane.

Fig. 53 is described below with reference to Fig. 54. Light 3b (32b, 33b and 34b) inputted to a specific surface of the polarization splitting means 10 from the inside of the light guiding means 40 at an angle where light is not fully reflected, enters the grating 131. In the polarization splitting means 10, a grating structure is formed (in Fig. 54, it is formed expanding in the horizontal direction). Of light 3b (32b, 33b and 34b) inputted to the polarization splitting means 10, polarized components (31c through 34c) perpendicular to the forming direction (horizontal direction) of the grating structure of the polarization splitting means 10 transmit the polarization splitting means 10. Polarized components in parallel to the forming direction of the grating structure of the polarization splitting means 10 are reflected. If the grating structure is a metallic grating made of aluminum, and its period p and groove depth of grating are approximately 200nm and between 100nm and 200nm, respectively, the transmissivity of linear polarized light (31c through 34c) in the transmitting direction is between 80 and 85% in the visible wavelength range.

Most of polarized components (32a, 33a and 34a) in the reflecting direction are reflected, and the reflected light (32a, 33a and 34a) repeats multi-reflection in the light guiding means 40 again.

Thus, while the light (32a, 33a and 34a) reflected by the polarization splitting means 10 repeats reflection in the light guiding means 40, the polarization converting means 20 converts its polarization status (by double refraction) to generate a plurality of segments of light having a variety of polarization statuses (32b, 33b and 34b) . Then, the plurality of segments of light enter the polarization splitting means 10 again, and as described earlier, only polarized components (31c through 34c) orthogonal to the forming direction of the grating structure of the polarization splitting means 10 transmit the polarization splitting means 10.

The process described above is repeated and the light 3a inputted to the light guiding plate from the light source 2 is emitted to the liquid crystal panel 5 from the light guiding plate 1 as polarized light p (31c through 34c) . The direction of the linear polarized light of the light (31c through 34c) described above is the same as that of polarized light that transmits a polarization plate 51. Therefore, the light (31c through 34c) can be inputted to a liquid crystal plate 52 without being absorbed.

While the light (32a through 34a), being a polarized component s reflected thus by the polarization splitting means 10, repeats reflection in the light guiding means 40, the polarization converting means 20, having double refraction, converts its polarization status to generate a plurality of segments of light 3b (32b through 34b) having a variety of polarization statuses (that is, having polarized components p/s, including a variety of polarization angles). Then, the light enters the polarization splitting means 10 again, and as described earlier, polarized components (31c through 34c) orthogonal to the forming direction of the grating structure of the polarization splitting means 10 can transmit the polarization splitting means 10.

As a result, since polarized components p (31c through 34c) can transmit the polarization splitting means 10 and can light the liquid crystal panel 5, the light 3a inputted to the light guiding plate 1 from the light source 2 can be efficiently used.

Alternatively, part of the reflection means (30a through 30d) can be a diffusive hologram consisting of minute convex/concave parts and can diffuse/reflect light emitted toward the polarization splitting means 10.

Furthermore, alternatively, a reflection film made of compound the same as or different from that of grating structure on the front surface can be provided for the back surface of the light guiding means 30.

The structure of such a liquid crystal display device is compared with that of the conventional one.

The structure of the liquid crystal display device shown in Figs. 53 and 54 differs from that of the conventional liquid crystal display device shown in Fig. 65 in that it adopts a light guiding plate 1 with a polarization splitting means 10 for functioning on the principle described above, provided on the liquid crystal panel 5 side surface of a light guiding means 40 and that it adopts a polarization converting means 20 forproviding double-refraction phase difference that meets the prescribed conditions 1, 2 and 3. The structure of the liquid crystal panel 5 is the same as that shown in Fig. 65. Therefore, polarized components p can be efficiently extracted and many of polarized components p that a liquid crystal panel requires are inputted. Accordingly, the front surface of the liquid crystal display device 4 is very bright.

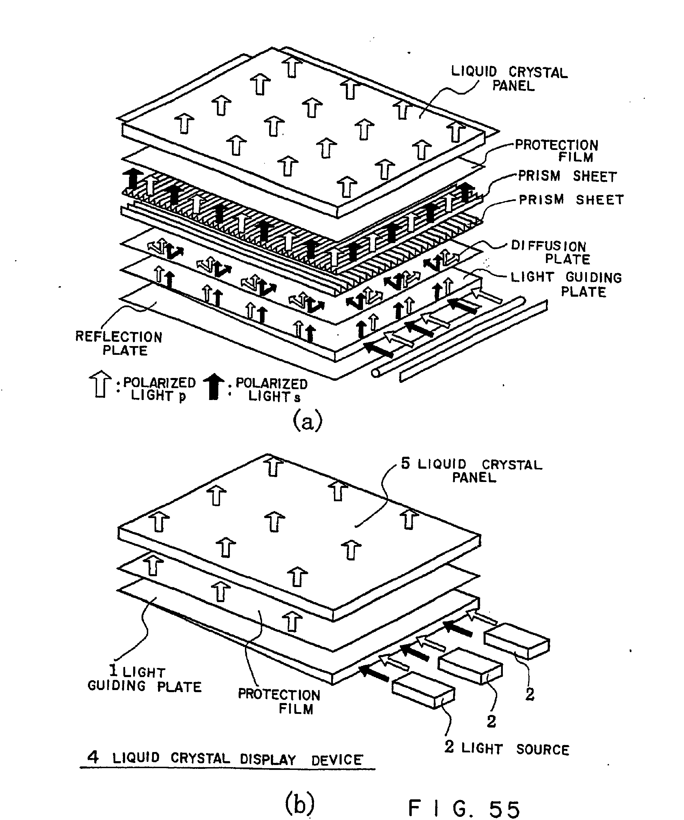

This liquid crystal display device has an advantage of fewer components. Fig. 55 compares this liquid crystal display device with the conventional one. The conventional liquid crystal display device shown in Fig. 55A requires a variety of components (a reflection plate, a light guiding plate, adiffusionplate, two prism sheets, a protection film and a liquid crystal panel), while the liquid crystal display device of the present invention has fewer components, which is an advantage.

Since light (31c through 34c) can be efficiently inputted to a liquid crystal plate 52 compared with the conventional lighting device 6, power consumption can be reduced by reducing the luminance of the emitting device of a light source, such as a cold cathode tube, etc. As a result, either the life of the light source 2 can be extended or the number of emitting devices can be reduced.

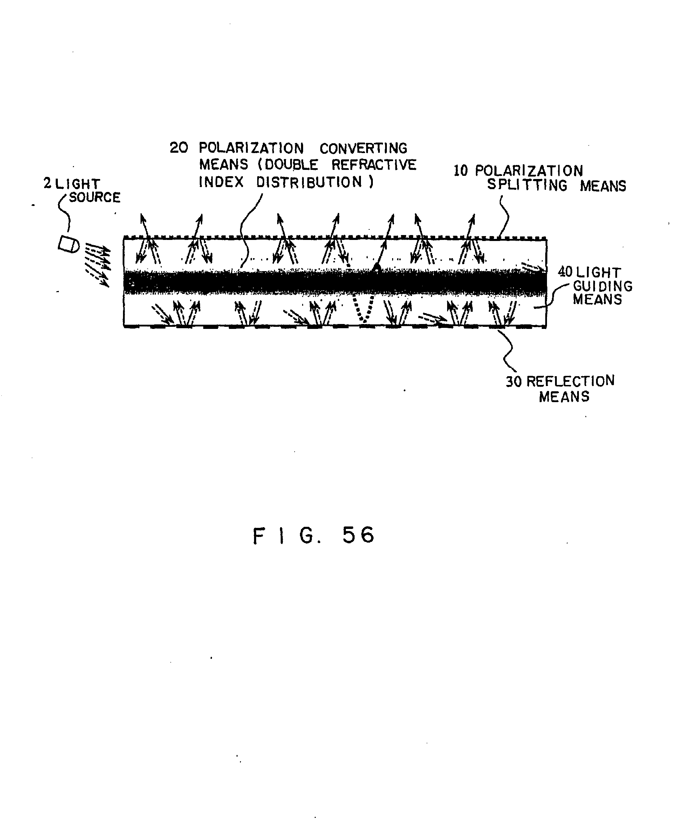

The light guiding plate 1 used in the liquid crystal display device 4 can be structured as shown in Fig. 1. This liquid crystal display device is described below with reference to Fig. 56.

In this preferred embodiment, the comprehensive structure of a liquid crystal display device is basically the same as the liquid crystal display device 4 shown in Fig. 53. Inparticular, a grating structure using simple dielectric gratings or those coated with a multi-layer film is adopted as a polarization splitting means 10, and a printed pattern or a diffusive hologram is adopted as a reflection means 30. Although the reflection means 30 is not wedge-shaped, it can be set in such a way as to diffuse/reflect light in the prescribed direction, using the printed pattern or the diffusive hologram. Therefore, the same effect as that of a wedge-shaped light guiding plate can be obtained. Since the other points are the same as those of the liquid crystal display device 4 shown in Fig. 53, their descriptions are omitted.

Thus, polarized components of light orthogonal to this dielectric grating (polarized components p) transmit through a grating structure disposed on the output side of the light guiding means 40 and light the liquid crystal panel 5. The polarized components of light in parallel to the grating (polarized components s) are reflected by this grating structure, are returned to inside the light guiding means 40 and are multiply reflected between the reflection plate of the light guiding means 40 and the grating structure. The polarization status of the light reflected by the grating structure thus is converted while being reflected in the light guiding means 40 and a plurality of segments of light each with a different polarization status is obtained. The plurality of segments of light enters the grating structure again, and as described above, the polarized components orthogonal to the grating structure (polarized components p) can be transmitted.

As a result, polarized components orthogonal to the grating structure (polarized components p) can transmit through this grating structure and can light a target to be lit, and accordingly, light inputted to a light guiding means from a light source can be efficiently used.

(Other preferred embodiments)

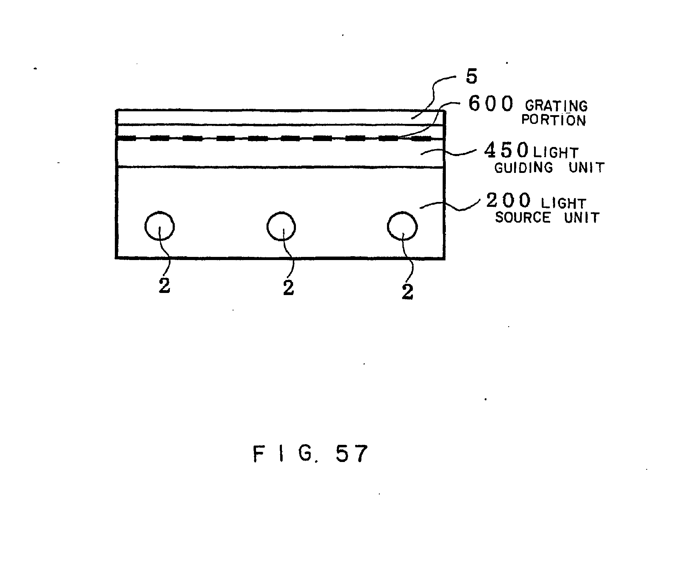

Figs. 57 through 60 show the rough structures of other preferred embodiments of the present invention. These are sequentially described below. However, the present invention is also applicable to a variety of liquid crystal display devices, etc., other than those shown in Figs. 57 through 60.

Firstly, Fig. 57 shows the case where the present invention is applied to a directly-under lighting type liquid crystal display. Light emitted from the light source 2, such as a fluorescent tube, etc., passes through a light guiding means 450 (concept including all the light guiding plates 1 in the preferred embodiments described above; this is also used in the following preferred embodiments) and reaches a grating portion (concept including all the grating structures in the preferred embodiments described above; this is also used in the following preferred embodiments).

Polarized light is divided into two polarized components on a grating surface, and one polarized component transmits through the grating and lights the liquid crystal panel 5. The other polarized component is reflected on the grating and passes through the light guiding means 450. This polarized component is reflected in a light source unit 200 and passes through the light guiding means 450 again. In this case, its polarization status is converted and the converted polarized component lights the liquid crystal panel 5.

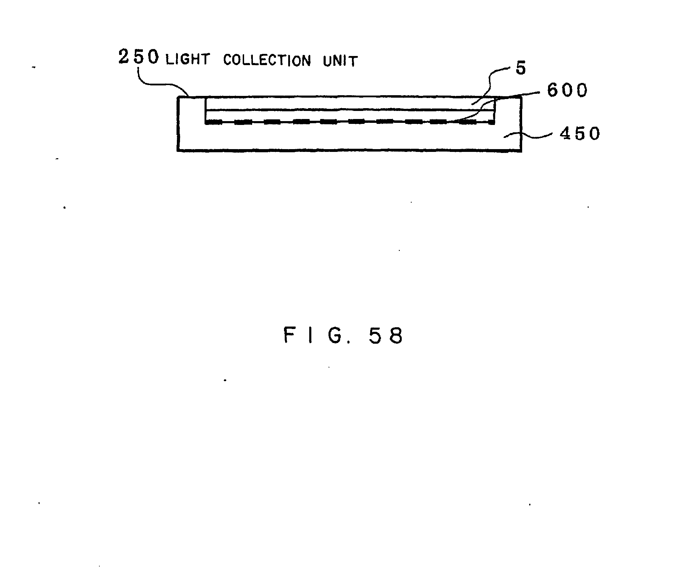

Fig. 58 shows the case where the present invention is applied to a liquid display device that collects natural light from a liquid crystal surface. Light inputted through a light collection unit 250 reaches a grating portion 600 through the light guiding means 450. Polarized light is divided into two polarized components on the grating surface of the grating portion 600, and one polarized component transmits the grating and lights the liquid crystal panel 5. The other polarized component is reflected on the grating and passes through the light guiding means 450. This polarized component is reflected in a light source unit 200 and passes through the light guiding means 450 again. In this case, its polarization status is converted and the converted polarized component lights the liquid crystal panel 5.

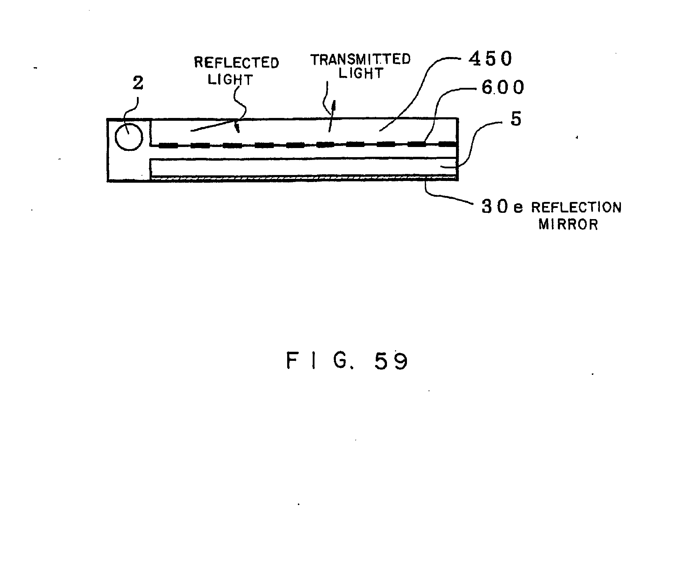

Fig. 59 shows the case where the present invention is applied to a front light type liquid crystal display device. Light emitted from the light source 2 is inputted to and reflected on the top surface of the light guiding means 450 and is inputted to the grating portion 600. Polarized light is divided into two polarized components on the grating surface of the grating portion 600. One polarized component transmits through the grating and lights the liquid crystal panel 5. The other polarized component is reflected on the grating and is returned to the light guiding means 450. This polarized component is repeatedly reflected in the light guiding means 450. Then, its polarization status is converted. The converted polarized component enters the grating again and lights the liquid crystal panel 5. Light going upward through the liquid crystal panel 5 transmits through the grating, enters the light guiding means 450 at a small incidence angle and passes through it. Reference number 30e represents a reflection mirror.

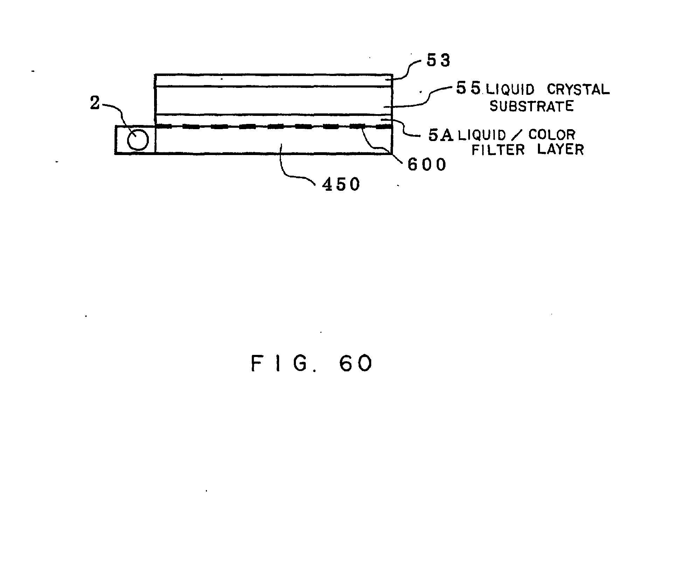

Fig. 60 shows the case where a liquid crystal/color filter layer 5A is inserted between a liquid crystal substrate 55 made of glass or resin and the light guiding means 450. In this case, a thin liquid crystal display device can be obtained.

The operation of each of the preferred embodiments shown in Figs. 57 through 60 is basically the same as those of the preferred embodiments described above.

For the light source 2, a monochrome or white point-shape light source, such as an LED light source, can also be used, which is not particularly mentioned in each preferred embodiment of the present invention described above.

Next, examples of actual devices are described below. Firstly, example 1 is described. Example 1 is an actually manufactured polarization splitting means 10.

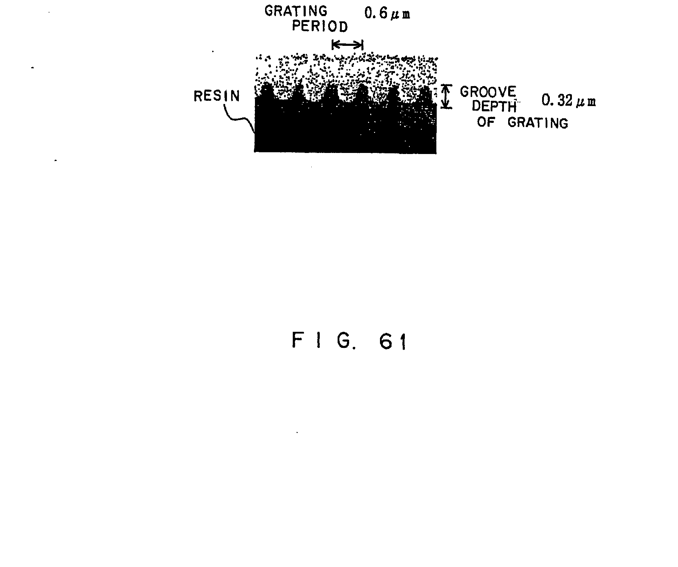

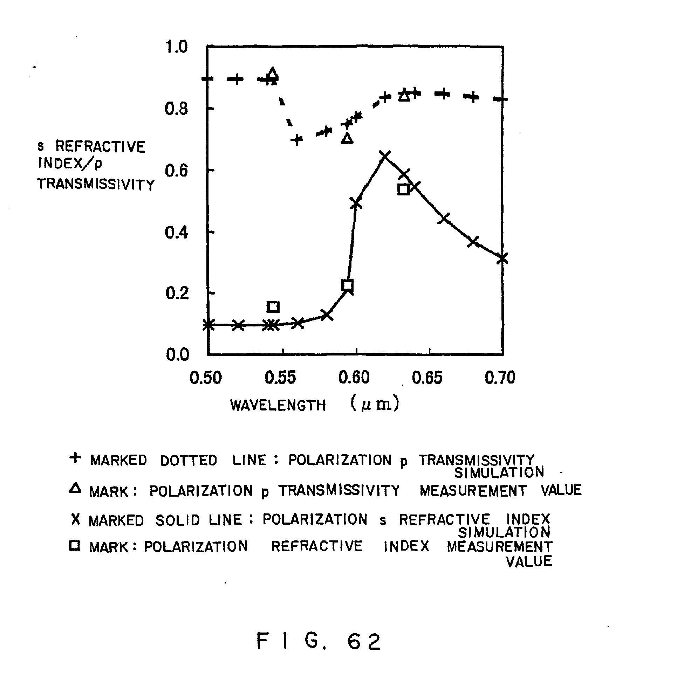

Fig. 61 shows the cross section of its dielectric grating (SEM picture). Polycarbonate is molded into a light guiding means, and a dielectric grating is copied on its surface. The grating period and groove depth of grating are 0.6µm and 0.32µm, respectively. Fig. 62 shows the polarization splitting characteristic of the dielectric grating. Dotted /solid lines indicate computer simulation, and $\triangle$/$\times$ marks indicate their actual measurement values. For the light source, a single wavelength LED light source emitting light with emission wavelengths of 550nm/600nm/630nm is used. The cross-section double refractive index distribution of the light guiding plate 1 meets condition 2. This corresponds to example 1 shown in Fig. 46.

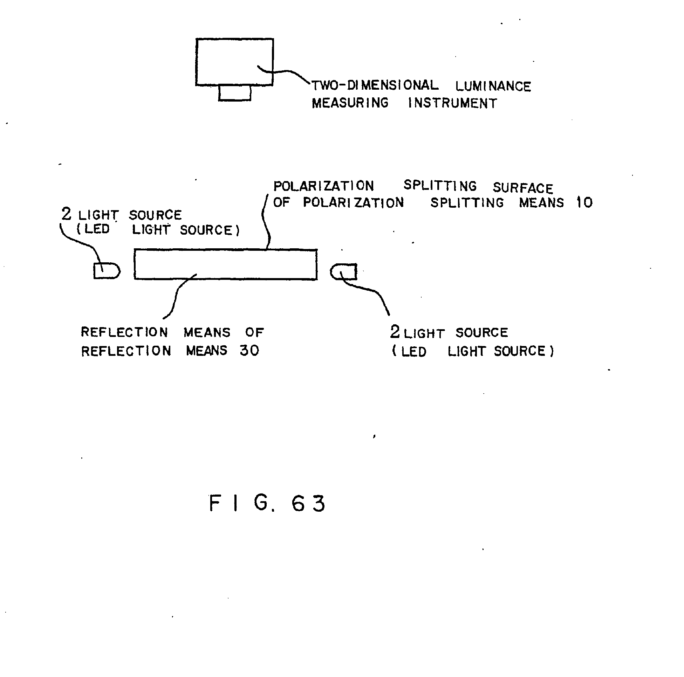

A luminance improvement ratio is measured using a light guiding plate 1 with such a structure as a text device. Fig. 63 shows the configuration of the test device for measuring a luminance improvement ratio. As shown in Fig. 63, a polarization splitting means 10, a reflection means 30 and a polarization converting means are formed on the front and back surfaces, and in the inside, respectively, of the light guiding plate 1. Light from the light source 2 (LED light source) is applied to both side surfaces of the light guiding plate 1.

The luminance of the light emitted from this light guiding plate 1 is improved 20% compared with that of the conventional PMMA resin light guiding plate in the same shape without a polarization splitting surface, and the evaluation indicates a practical use level (indicated by double-circle marks).

Next, example 2, which is another example of an actual device is described. Example 2 is another polarization splitting means.

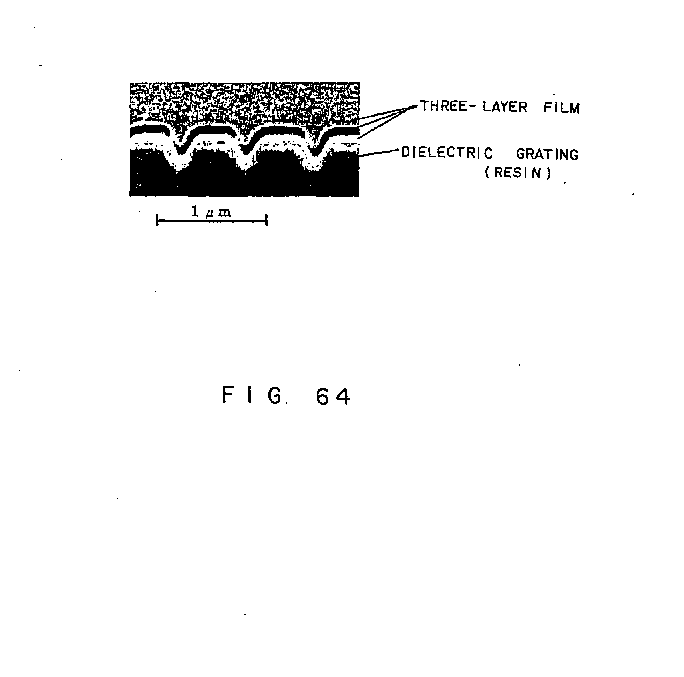

Fig. 64 shows the cross section of a dielectric grating having a three-layer film (SEM picture). A polycarbonate dielectric grating whose period is 0.6µm is formed as a light guiding means, and a three-layer film made of $TiO_2$, $SiO_2$ and $TiO_2$ is formed into a grating structure by evaporation using $SiO_2$ as a binder. For the light source, a white light source is used. The cross-section double-refractive index distribution meets condition 3. This corresponds to example 2 shown in Fig. 46.

A luminance improvement ratio was measured using a light guiding plate 1 with such a structure as a test device. The test device is shown in Fig. 63. Apolarization splitting means 10, a reflection means 30 and a polarization converting means are formed on the front and back surfaces, and in the inside, respectively, of the light guiding plate 1. Light from the white light source 2 (LED light source) is applied to both side surfaces of the light guiding plate 1. The luminance of the light emitted from this light guiding plate 1 is improved 60% compared with that of the conventional PMMA resin light guiding plate in the same shape, without a polarization splitting surface, and the evaluation indicates a practical use level (indicated by double-circle marks).

As described above, in the present invention, by returning polarized components that are prevented from transmitting a polarization plate, such as a liquid crystal panel, etc. (polarized component s) to inside a light guiding means by a polarization splitting means, being a grating structure formed on the surface of the light guiding means, and by inputting the polarized components to the polarization splitting means again by a reflection means, being a reflection plate, while converting its linear polarization direction by a polarization converting means, polarized components that can be inputted to a liquid crystal panel, can be extracted. Therefore, the polarized component of light (polarized components s) that conventionally cannot be effectively used can be converted into and used as the polarized component of light p. Thus, a light guiding plate in which the number of components, such as, emitting devices, etc., is reduced and whose power consumption is reduced, and a liquid crystal display device with such a light guiding plate can be realized.

**Claims**

1. A light guiding plate, comprising:

polarization splitting means for splitting input light into light to be transmitted and light to be reflected, based on its polarization direction;

reflection means for reflecting light;

polarization converting means for providing light to be transmitted with a phase difference in such a way as to meet a condition of $\theta_1+n\cdot180°$ ($30°\leq\theta_1\leq150°$, n: integer); and

light guiding means for holding the polarization converting means between the polarization splitting means and the reflection means and incorporating these means .

2. The light guiding plate according to claim 1, which provides light to be transmitted with a phase difference in such a way as to meet the condition of $\theta_2+n\cdot180°$ ($45°\leq\theta_2\leq135°$, n: integer) preferably, in 80% or more of an area of said polarization converting means.

3. The light guiding plate according to claim 2, which provides light to be transmitted with a phase difference in such a way as to meet the condition of $\theta_3+n\cdot180°$ ($60°\leq\theta_3\leq120°$, n: integer) more preferably, in 60% or more of an area of said polarization converting means.

4. The light guiding plate according to one of claims 1 through 3, wherein
said polarization splitting means is a grating structure composed of dielectric gratings formed by periodically repeating a transparent dielectric material.

5. The light guiding plate according to claim 4, wherein a cross section of the dielectric grating of the grating structure is formed by periodically repeating either a convex part whose cross section is a rectangle, a trapezoid, a triangle, a sine wave or a combination of a plurality of such convex parts.

6. The light guiding plate according to claim 5, wherein
the dielectric grating of the grating structure is formed by periodically repeating a convex part of a rectangle, a trapezoid, a triangle or a sine wave. Grating period and groove depth of grating are between 0.3 and 0.8µm, and between 0.2 and 0.5µm, respectively.

7. The light guiding plate according to claim 6, wherein
the convex part of the dielectric grating of the grating structure is composed of a plurality of shapes formed by combining a basic shape with a minute shape.

8. The light guiding plate according to one of claims 1 through 3, wherein said polarization splitting means is a grating structure formed by adding either a single surface layer made of a substance having a prescribed refractive index or a plurality of surface layers formed by piling substances each with a different refractive index between adjacent layers to the surface of a dielectric grating formed by periodically repeating a transparent dielectric material.

9. The light guiding plate according to claim 8, wherein
a cross section of the dielectric grating of the grating structure is formed by periodically repeating either a convex part whose cross section is a rectangle, a trapezoid, a triangle, a sine wave or a combination of a plurality of such convex parts.

10. The light guiding plate according to claim 9, wherein
the period and groove depth of the dielectric grating of the grating structure are between 0.3µm and 0.8µm and between 0.2µm and 0.5µm, respectively, and
a layer on the surface of the grating structure is formedby alternately piling a layer of titanium dioxide ($TiO_2$) or tantalum pentaoxide ($Ta_2O_5$), 50nm through 150nm thick and a layer of silicon dioxide ($SiO_2$) 70nm through 200nm thick.

11. The light guiding plate according to claim 10, wherein the grating structure comprises a silicon monoxide (SiO) layer, 0nm through 100nm thick, between the dielectric grating and the surface layer.

12. The light guiding plate according to claim 11, wherein

the convex part of the dielectric grating of the grating structure is composed of a plurality of shapes formed by combining a basic shape with a minute shape.

13. The light guiding plate according to one of claims 8 through 12, wherein
the grating structure comprises on a surface of the dielectric grating
a layer formed by piling a substance diluted by a solvent and repeating a process of eliminating the solvent one or more times by a spin coating method or a roll coating method or a layer formed by piling a single layer of a substance or a plurality of layers each having a different refractive index between adjacent layers.

14. The light guiding plate according to one of claims 1 through 3, wherein said polarization splitting means is a grating structure formed by adding a single surface layer of a substance having a prescribed refractive index or a plurality of surface layers formed by piling substances each having a different refractive index between adjacent layers, on a concave part of a dielectric grating formed by periodically piling a transparent dielectric material.

15. The light guiding plate according to claim 14, wherein
a cross section of the dielectric grating of the grating structure is formed by periodically repeating either a convex part whose cross section is a rectangle, a trapezoid, a triangle, a sine wave or a combination of a plurality of such convex parts.

16. The light guiding plate according to claim 15, wherein
the period and groove depth of the dielectric grating of the grating structure are between 0.3μm and 0.8μm and between 0.2μm and 0.5μm, respectively, and
a layer on the surface of the concave part of the grating structure is formed by alternately piling a layer of titanium dioxide ($TiO_2$) or tantalum pentaoxide ($Ta_2O_5$), 50nm through 150nm thick and a layer of silicon dioxide ($SiO_2$) 70nm through 200nm thick.

17. The light guiding plate according to claim 16, wherein the grating structure comprises a silicon monoxide (SiO) 0nm through 100nm thick between the dielectric grating and the surface layer.

18. The light guiding plate according to claim 17, wherein
the convex part of the dielectric grating of the grating structure is composed of a plurality of shapes formed by combining a basic shape with a minute shape.

19. The light guiding plate according to one of claims 14 through 18, wherein
the grating structure comprises on a surface of the dielectric grating
a surface layer formed by piling a single substance or a plurality of substances each having a different refractive index between adjacent layers, on the concave part diluted by a solvent, eliminating the solvent and further repeating a process of eliminating only the substance on the top in a convex part of the dielectric grating one or more times, by a spin coating method or a roll coating method or
a surface layer formed on the concave part by piling a single substance or aplurality of substances each having a different refractive index between adjacent layers and repeating a process of eliminating the substance on the top in the convex part one or more times, by an evaporation method, a sputtering method or an ion plating method.

20. The light guiding plate according to one of claims 1 through 3, wherein
said polarization splitting means is a grating structure composed of gratings formed by periodically repeating the convex part formed by piling substances each having a different refractive index between adjacent layers.

21. The light guiding plate according to claim 20, wherein a cross section of the dielectric grating of the grating structure is formed by periodically repeating either a convex part whose cross section is a rectangle, a trapezoid, a triangle, a sine wave or a combination of a plurality of such convex parts.

22. The light guiding plate according to claim 21, wherein
the grating structure is a grating formed by applying an emboss process to
a film formed by piling substances each having a different refractive index between adjacent layers, dilutedby a solvent and repeating aprocess of eliminating the solvent one or more times, by a spin coating method or a roll coating method, or
a film formed by piling substances each having a different refractive index between adjacent layers, by an evaporation method, a sputtering method or an ion plating method.

**23.** The light guiding plate according to one of claims 1 through 3, wherein
said polarization splitting means is a grating structure composed of metallic gratings formed by periodically piling a metallic material, on the surface of a dielectric grating formed by periodically piling a transparent dielectric material.

**24.** The light guiding plate according to claim 23, wherein
the metallic grating of the grating structure is made of a metallic thin film whose refractive index is 60% or more.

**25.** The light guiding plate according to claim 24, wherein
the metallic thin film of the metallic grating is a single compound of Mg, Se, Y, Ti, Cr, Mo, W, Mn, Fe, Co, Ni, Ru, Pt, Cu, Ag, Au, Zn, Al, In, Si, Ge, Te, Pb and Sn or an alloy of two or more of such elements.

**26.** The light guiding plate according to one of claims 23 through 25, wherein
a cross section of the dielectric grating of the grating structure is formed by periodically repeating either a convex part whose cross section is a rectangle, a trapezoid, a triangle, a sine wave or a combination of a plurality of such convex parts.

**27.** The light guiding plate according to claim 26, wherein
the dielectric grating of the grating structure is formed by periodically repeating a convex part whose cross section is a rectangle, a trapezoid, a triangle and a sine wave, and its period and groove depth are between $0\mu m$ and $0.4\mu m$ and between $0\mu m$ and $0.2\mu m$, respectively.

**28.** The light guiding plate according to claim 27, wherein
the convex part of the dielectric grating of the grating structure is composed of a plurality of shapes formed by combining a basic shape with a plurality of minute shapes.

**29.** The light guiding plate according to one of claims 1 through 3, wherein
said polarization splitting means is a grating structure provided a light guiding means, and a transparent substrate or a transparent film with a metallic grating formed by periodically repeating a metallic material.

**30.** The light guiding plate according to claim 23, wherein
the metallic grating of the grating structure is made of a metallic thin film whose refractive index is 60% or more.

**31.** The light guiding plate according to claim 24, wherein
the metallic thin film of the metallic grating is a single compound of Mg, Se, Y, Ti, Cr, Mo, W, Mn, Fe, Co, Ni, Ru, Pt, Cu, Ag, Au, Zn, Al, In, Si, Ge, Te, Pb and Sn or an alloy of two or more of such elements.

**32.** The light guiding plate according to claim 30 or 31, wherein
thickness of the metallic thin film, period T and width are $0.05\mu m$ or more, between $0.05\mu m$ and $0.25\mu m$ and in a range of 0.25T through 0.85T, respectively.

**33.** The light guiding plate according to one of claims 29 through 32, wherein
a foundation layer is formed between the light guiding means, a transparent substrate or the transparent film, and the metallic grating, and
a protection film is formed on the surfaces of both the metallic grating and the foundation layer.

**34.** The light guiding plate according to one of claims 29 through 33, wherein
the metallic grating is formed on the surface of the light guiding means, the transparent substrate, the transparent film or the foundation layer through a mask having a striped grating pattern, by an evaporation method, a sputtering method, an ion plating method or a dry edging method.

**35.** The light guiding plate according to one of claims 29 through 34 that has a grating structure in which a metallic grating made of a metallic thin film, is formed on the front side of a transparent film, wherein
said grating structure is formed by forming a metallic grating on the transparent film, forming the metallic grating into a minute pattern by expanding the transparent film in a direction of stripes and pasting the pattern on the light guiding means or the transparent substrate together with the transparent film.

**36.** The light guiding plate according to one of claims 1 through 35, wherein
said light guiding means is made of resin and said polarization converting means is double-refraction distribution.

**37.** The light guiding plate according to claim 36, wherein
the material of said light guiding means is acrylic resin, polycarbonate resin, acrylonitrile/styrene resin, epoxy resin or olefin resin.

**38.** The light guiding plate according to claim 36 or 37, wherein
internal double refraction is formed by an anisotropic skin layer.

**39.** The light guiding plate according to one of claims 36 through 38, wherein
said light guiding means made of resin has large orientation.

**40.** The light guiding plate according to one of claims 36 through 39, wherein
a resin that forms the light guiding means contains a prescribed amount of resin polymer having anisotropy different from that of the main material.

**41.** The light guiding plate according to claim 40, wherein
the resin polymer different from that of the main material is styrene beads or liquid crystal polymer.

**42.** The light guiding plate according to one of claims 1 through 41, wherein
said reflection means is provided for the entire surface or part of a surface of said light guiding means other than a surface through which light is inputted and a surface on which a polarization splitting means is formed.

**43.** The light guiding plate according to one of claims 1 through 42, wherein
part of said reflection means or said entire reflection means is a diffusive hologram composed of minute convex/concave parts, a volume-diffusive hologram or a speckle diffusive surface, and diffuses/reflects light toward said polarization splitting means.

**44.** The light guiding plate according to claim 43, wherein
a metallic reflection film is formed on the diffusive hologram, volume-diffusive hologram, or speckle diffusive surface of said reflection means.

**45.** The light guiding plate according to claims 43 or 44, wherein
one diffusive hologram of said reflection means branches one segment of input light into a plurality of segments of output light, and has phase difference distribution P(x) expressed as follows, assuming that phase difference distribution that converts input light having phase difference distribution $P_1(x)$ into the i-th output light, is $P_i(x)$.

$$\dot{P}(x) = \text{mod}[\sum_{j=2}^{k} a_j(x) \cdot \text{mod}[P_j(x) - P_1(x) + c_j, \pi] + \text{mod}[P_1(x) + c_1, \pi], m\pi]$$

$$\cdots (7)$$

( in the above equation, x, $\pi$, m, k, $a_j$, $c_j$ and mod [A, B] are a vector indicating a position in a diffusive hologram, a circle ratio, a natural number, an integer of 2 or more, a function that meets $0<a_j<1$, a constant and a function to indicate the remainder obtained when dividing A by B, respectively).

**46.** The light guiding plate according to claim 45, wherein
a surface shape D' (x) is expressed as follows in such a way that phase difference distribution of a diffusive hologram of said reflection means may become P(x)

$$D'(x) = -(1/2n_s) \cdot (\lambda/\pi) \cdot P(x) \tag{8}$$

(in the above equation, $n_s$ and $\lambda$ indicate a refractive index of a medium around a diffusive hologram and a wavelength, respectively).

**47.** The light guiding plate according to one of claims 1 through 42, wherein
said reflection means is made of metal.

**48.** The light guiding plate according to claim 47, wherein
the metal is a single compound of Mg, Se, Y, Ti, Cr, Mo, W, Mn, Fe, Co, Ni, Ru, Pt, Cu, Ag, Au, Zn, Al, In, Si, Ge, Te, Pb and Sn or an alloy of two or more of such elements.

**49.** The light guiding plate according to one of claims 1 through 42, wherein
said reflection means is made of a multi-layer dielectric film.

**50.** The light guiding plate according to claim 49, wherein
a metallic reflection film is formed on the multi-layer dielectric film.

**51.** The light guiding plate according to one of claims 1 through 42, wherein
said reflection means is a pattern formed by printing.

**52.** The light guiding plate according to one of claims 1 through 42, wherein
said reflection means is a scattering surface.

**53.** The light guiding plate according to one of claims 1 through 52, wherein
the transmissivity of said polarization splitting means increases as its position gets away from said light source.

**54.** The light guiding plate according to one of claims 1 through 53, wherein
the grating structure is formed in such a way that said polarization splitting means may become almost orthogonal to light inputted from said light source.

**55.** The light guiding plate according to one of claims 1 through 54, wherein
the refractive index of said polarization splitting means increases as its position gets away from said light source.

**56.** A Liquid crystal display device, comprising:

a light source;
a light guiding plate according to one of claims 1 through 55 which transmits one polarized component of two polarized components of light emitted from the light source, which are orthogonal to each other; and
a liquid crystal panel that polarized light emitted from the light guiding plate illuminates.

**57.** The liquid crystal display device according to claim 56, wherein
said liquid crystal panel comprises

a liquid crystal plate; and
a pair of polarization plates each of which is disposed on the front or back surfaces of this liquid crystal plate, and

said polarization means and polarization plate are disposed in such a way that polarization direction of polarized light that transmits through said polarization converting means and the polarization direction of polarized light transmits the polarization plate located between said liquid crystal panel and the light guiding plate may become orthogonal.

2 LIGHT SOURCE

POLARIZATION
DIRECTION p

POLARIZATION
DIRECTION s

1 0 POLARIZATION
SPLITTING MEANS

FORMING DIRECTION OF
GRATING STRUCTURE

POLARIZED
LIGHT p

POLARIZED
LIGHT s

3 0 REFLECTION MEANS

4 0 LIGHT GUIDING MEANS

2 0 POLARIZATION COVERTING MEANS

1 LIGHT GUIDING PLATE

F I G. 1

10 POLARIZATION
SPLITTING MEANS

30 REFLECTION
MEANS

40 LIGHT GUIDING
MEANS

20 POLARIZATION
COVERTING MEANS

1 LIGHT GUIDING PLATE

F I G. 2

EMITTED SPECTRUM

F I G. 3

F I G.  4

F I G. 5

F I G. 6

F I G. 7

F I G. 8

F I G. 9

F I G. 10

F I G. 11

F I G. 12

F I G. 13

F I G. 14

F I G. 15

F I G. 16

F I G. 17

(a)

(b)

FIG. 18

F I G. 19

F I G. 20

F I G. 21

F I G. 22

F I G. 23

119
118
117
116
115

F I G. 2 4

120

115

(a)

116

(b)

121

(c)

117

(d)

F I G. 25

119
118
117
116
122

F I G. 26

FIG. 27

(a)

123

(b)

121

(c)

116

(d)

116

F I G. 28

F I G. 29

119
118
117
116
125

F I G. 30

127

126

$p$

$d$

F I G. 31

F I G. 32

F I G. 33

F I G. 34

POLARIZATION
DIRECTION s

POLARIZATION
DIRECTION p

METALLIC THIN
FILM
(METALLIC GRATING)

131

d

b | a

p

130 TRANSPARENT
SUBSTRATE

F I G. 35

F I G. 36

134

133

132

135

132 TRANSPARENT SUBSTRATE
133 FOUNDATION LAYER
134 METALLIC THIN FILM
135 PROTECTION FILM
136 REFLECTION FILM

F I G. 37

METALLIC THIN
FILM
139 (METALLIC GRATING)

d

b | a

p

142 TRANSPARENT
FILM

137 TRANSPARENT
SUBSTRATE

F I G. 38

140

139

142

141

137

138

143

137 TRANSPARENT SUBSTRATE
138 FOUNDATION LAYER
139 METALLIC THIN FILM
140 PROTECTION FILM
141 ADHESIVES
142 TRANSPARENT FILM
143 REFLECTION FILM

F I G. 39

EXPANSION
DIRECTION

METALLIC THIN FILM 139
HAVING A PITCH GREATER
THAN A TARGETED ONE

EXPANSION
DIRECTION

FILM BASE
MATERIAL 144

(a)

METALLIC THIN FILM 139 HAVING
THE SAME PITCH AS A
TARGETED ONE

TRANSPARENT FILM 142

F I G 40

(b)

THE CASE WHERE A DOUBLE-REFRACTION PHASE DIFFERENCE PROVIDED BY DOUBLE REFRACTION IS BETWEEN 0° AND 30°

F I G. 41

THE CASE OF CONDITION 3 WHERE A DOUBLE-REFRACTION PHASE DIFFERENCE PROVIDED BY DOUBLE REFRACTION IS $90° \pm 30°$

# F I G. 42

THE CASE OF CONDITION 2 WHERE A DOUBLE-REFRACTION PHASE DIFFERENCE PROVIDED BY DOUBLE REFRACTION IS $90° \pm 45°$

F I G. 43

F I G. 44

OUTPUT DIRECTION
OF LIGHT

⇧

40 LIGHT GUIDING
MEANS

REFLECTION SURFACE
(PRINTEDPATTERN)
OF REFLECTION MEANS 30

F I G. 45

| CONDITION (DOUBLE REFRACTIVE INDEX) | POLARIZATION SPLITTING MEANS 10 | | LUMINANCE IMPROVEMENT RATIO | EVALUATION |
|---|---|---|---|---|
| CONDITION 1 (90° ±60° [40°]) | a | DIELECTRIC GRATING | 1.1 | △ |
| | b | DIELECTRIC GRATING + MULTI-LAYER FILM | 1.2 | △ |
| | c | DIELECTRIC GRATING + METALLIC GRATING | 1 | △ |
| CONDITION 1 (90° ±60° [60°]) | a | DIELECTRIC GRATING | 1.1 | ○ |
| | b | DIELECTRIC GRATING + MULTI-LAYER FILM | 1.4 | ○ |
| | c | METALLIC GRATING | 1.1 | ○ |
| CONDITION 2 (90° ±45° [70°]) | a | DIELECTRIC GRATING | 1.2 | ◎(EXAMPLE 1) |
| | b | DIELECTRIC GRATING + MULTI-LAYER FILM | 1.5 | ◎ |
| | c | METALLIC GRATING | 1.2 | ◎ |
| CONDITION 3 (90° ±30° [85°]) | a | DIELECTRIC GRATING | 1.3 | ◎ |
| | b | DIELECTRIC GRATING + MULTI-LAYER FILM | 1.6 | ◎(EXAMPLE 2) |
| | c | METALLIC GRATING | 1.2 | ◎ |
| UNMET CONDITION (LESS THAN 30°) | a | DIELECTRIC GRATING | — | × |
| | b | DIELECTRIC GRATING + MULTI-LAYER FILM | — | × |
| | c | METALLIC GRATING | — | × |
| CONVENTIONAL STRUCTURE (COMPARED) | NON ( PLANE ) | | 1 | — |

F I G. 46

POLARIZATION SPLITTING MEANS

2 LIGHT SOURCE

10

Rs1, Tp1 ↑ Pp1     Rs2, Tp2 ↗ Pp2

Ps1     Ps2

Pp01, Ps01     Pp02, Ps02

F I G. 47

10 POLARIZATION
SPLITTING MEANS

2 LIGHT SOURCE
(LINE-SHAPE
LIGHT SOURCE)

(a)

2 LIGHT SOURCE
(POINT-SHAPE
LIGHT SOURCE)

(b)

2

(c)

F I G. 48

POLARIZATION SURFACE OF
POLARIZATION SPLITTING MEANS 10

DIFFUSED/
REFLECTED

2
LIGHT
SOURCE

TOTAL
REFLECTION

PRINTED
PATTERN

REFLECTION SURFACE
OF REFLECTION MEANS
30

F I G. 49

LIGHT REFLECTED
UPWARD

LIGHT REFLECTED AT A
LOW ANGLE

INPUT LIGHT

3 0 REFLECTION
MEANS
( DIFFUSIVE HOLOGRAM )

F I G. 50

5 DIRECTIONS FOR
LIQUID CRYSTAL

40 LIGHT GUIDING
MEANS

2 SIDES FOR
LIGHT SOURCE

REFLECTION SURFACE
(PRINTED PATTERN)

30 REFLECTION MEANS
(DIFFUSIVE HOLOGRAM)

F I G. 51

EMITTED RANGE
OF LIGHT

5 DIRECTION FOR LIQUID
CRYSTAL 10
DIRECTION FOR
POLARIZATION
SPLITTING
MEANS

y DIRECTION

x DIRECTION

1 LIGHT GUIDING
PLATE

F I G. 52

53 POLARIZATION PLATE
52 LIQUID CRYSTAL PLATE
51 POLARIZATION PLATE
10 POLARIZATION SPLITTING MEANS

6 LIGHTING DEVICE
2 LIGHT SOURCE
40 LIGHT GUIDING MEANS
30 REFLECTION MEANS
1 LIGHT GUIDING PLATE

↔ AND • INDICATE POLARIZATION DIRECTION, AND • INDICATES THAT IT IS PERPENDICULAR TO THE PAPER SURFACE.

4 LIQUID CRYSTAL DISPLAY DEVICE

F I G. 53

FIG. 54

LIQUID CRYSTAL PANEL

PROTECTION FILM

PRISM SHEET

PRISM SHEET

DIFFUSION PLATE

LIGHT GUIDING PLATE

REFLECTION PLATE

⇧ : POLARIZED LIGHT p   ⬆ : POLARIZED LIGHT s

(a)

5 LIQUID CRYSTAL PANEL

1 LIGHT GUIDING PLATE

PROTECTION FILM

2

2

2 LIGHT SOURCE

4 LIQUID CRYSTAL DISPLAY DEVICE

(b)          F I G. 55

F I G. 56

5

600 GRATING
PORTION

450 LIGHT
GUIDING UNIT

200 LIGHT
SOURCE UNIT

2          2          2

F I G. 57

250 LIGHT COLLECTION UNIT
5
600
450

FIG. 58

F I G. 59

53

55.LIQUID CRYSTAL
SUBSTRATE

2

5A.LIQUID/COLOR
FILTER LAYER

600

450

F I G. 60

GRATING PERIOD    0.6 μm

RESIN

GROOVE DEPTH OF GRATING    0.32 μm

F I G. 61

+ MARKED DOTTED LINE : POLARIZATION p TRANSMISSIVITY
                                               SIMULATION
△ MARK : POLARIZATION p TRANSMISSIVITY MEASUREMENT VALUE
X MARKED SOLID LINE : POLARIZATION s REFRACTIVE INDEX
                                               SIMULATION
□ MARK : POLARIZATION REFRACTIVE INDEX MEASUREMENT
                                                    VALUE

F I G. 62

TWO-DIMENSIONAL LUMINANCE
MEASURING INSTRUMENT

POLARIZATION SPLITTING SURFACE
OF POLARIZATION SPLITTING MEANS 10

2 LIGHT SOURCE
(LED LIGHT SOURCE)

REFLECTION MEANS OF
REFLECTION MEANS 30

2 LIGHT SOURCE
(LED LIGHT SOURCE)

F I G. 6 3

THREE- LAYER FILM

DIELECTRIC GRATING
( RESIN )

1 μ m

F I G. 6 4

5' LIQUID CRYSTAL
PANEL

52a'

52b'

33f

34f

53' POLARIZATION
PLATE

31e

32e

33e

34e

52' LIQUID
CRYSTAL
PLATE

31d

32d

33d

34d

51' POLARIZATION
PLATE

31j

32j

33j

34j

33b

34b

30b'

3b

32b

30a'

3a'

6' LIGHTING
DEVICE

2' LIGHT
SOURCE

40' LIGHT
GUIDING
MEANS

30' REFLECTION
MEANS

←→ AND • INDICATE POLARIZATION
DIRECTION, AND • INDICATES THAT IT
IS PERPENDICULAR TO THE PAPER SURFACE.

F I G. 65

**76** PRISM SHEET FOR LIGHT COLLECTION

**5'** LIQUID CRYSTAL PANEL

**73** REFLECTOR FOR LIGHT SOURCE

**75** DIFFUSION PLATE

**74** REFLECTOR FOR LIGHT GUIDING PLATE

**2'** LIGHT SOURCE

**72** DIFFRACTIVE GRATING

**71** BACKLIGHT GUIDING PLATE

F I G. 66

F I G. 67

81 TRANSMISSIVE LIGHT
GUIDING PLATE

85 LIGHT REFLECTION
FILM

2' LIGHT
SOURCE

83 LIGHT
DIFFUSION
LAYER

84 TRANSMISSIVE
BASE MATERIAL

82 LIGHT DIFFUSIVE
FILM

F I G. 68

88 DIFFUSION PLATE  88a UNEVEN SURFACE  2' LIGHT SOURCE

86 LIGHT GUIDING PLATE  87 REFLECTION PROCESS  87a REFLECTION CUT  86a BACK SURFACE

F I G. 69

FIG. 70

95g LIGHT GUIDING PLATE

95b POLARIZATION PLATE

95a LIQUID CRYSTAL PLATE

95c POLARIZATION PLATE

95d LIQUID CRYSTAL PANEL

95e DIFFUSION PLATE

θ

95f HOLOGRAM

95h ¼ PLATE

2' LIGHT SOURCE

RIGHT-HANDED CIRCULARLY POLARIZED LIGHT

LEFT-HANDED CIRCULARLY POLARIZED LIGHT

95i REFLECTION PLATE

F I G. 71

96 b POLARIZATION PLATE
96 a LIQUID CRYSTAL DISPLAY PLATE
96d LIQUID CRYSTAL PANEL
96 c POLARIZATION PLATE
POLARIZED LIGHT P    POLARIZED LIGHT P
96 f LIQUID CRYSTAL LAYER
96 g POLARIZATION SPLITTING PRISM SHEET
POLARIZED LIGHT S
96 e TRANSMISSIVE SUPPORT
96 h QUARTER-WAVE PLATE
NATURAL LIGHT
96 i LIGHT GUIDING PLATE
96k LIGHTING DEVICE
96 j REFLECTION PLATE
2'
LIGHT SOURCE

F I G. 72

## INTERNATIONAL SEARCH REPORT

| International application No. |
| --- |
| PCT/JP01/11513 |

A. CLASSIFICATION OF SUBJECT MATTER
   Int.Cl$^7$  G02B6/00

According to International Patent Classification (IPC) or to both national classification and IPC

B. FIELDS SEARCHED

Minimum documentation searched (classification system followed by classification symbols)
   Int.Cl$^7$  G02B6/00, G02F1/1335-1/13357, G09F13/00-13/18,
         G09F9/00-9/46, F21V8/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP, 11-218760, A  (Nitto Denko Corp.),<br>10 August, 1999 (10.08.99),<br>(Family: none) | 1-3,42-44,<br>47-53,55-57<br>4-41,54<br>45,46 |
| X<br>Y<br>A | JP, 9-105929, A  (Asahi Glass Co., Ltd.),<br>22 April, 1997 (22.04.97),<br>(Family: none) | 1-3,42-44,<br>47-53,55-57<br>4-41,54<br>45,46 |
| P,X<br>P,Y<br>A | JP, 2001-281654, A  (Mitsubishi Chemical Corp.),<br>10 October, 2001 (10.10.01),<br>(Family: none) | 1-7,42-44,<br>47-57<br>8-41<br>45,46 |
| Y | EP, 778484, A2  (Canon K.K.),<br>11 June, 1997 (11.06.97),<br>& JP 9-218407 A          & US 6020944 A | 4-35 |

☐ Further documents are listed in the continuation of Box C.          ☐ See patent family annex.

| | |
| --- | --- |
| *    Special categories of cited documents:<br>"A"   document defining the general state of the art which is not<br>      considered to be of particular relevance<br>"E"   earlier document but published on or after the international filing<br>      date<br>"L"   document which may throw doubts on priority claim(s) or which is<br>      cited to establish the publication date of another citation or other<br>      special reason (as specified)<br>"O"   document referring to an oral disclosure, use, exhibition or other<br>      means<br>"P"   document published prior to the international filing date but later<br>      than the priority date claimed | "T"   later document published after the international filing date or<br>      priority date and not in conflict with the application but cited to<br>      understand the principle or theory underlying the invention<br>"X"   document of particular relevance; the claimed invention cannot be<br>      considered novel or cannot be considered to involve an inventive<br>      step when the document is taken alone<br>"Y"   document of particular relevance; the claimed invention cannot be<br>      considered to involve an inventive step when the document is<br>      combined with one or more other such documents, such<br>      combination being obvious to a person skilled in the art<br>"&"   document member of the same patent family |

| Date of the actual completion of the international search<br>   01 April, 2002 (01.04.02) | Date of mailing of the international search report<br>   09 April, 2002 (09.04.02) |
| --- | --- |
| Name and mailing address of the ISA/<br>   Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP01/11513

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 7-72475, A  (Asahi Glass Co., Ltd.),<br>17 March, 1995 (17.03.95),<br>(Family: none) | 4-35 |
| Y | JP, 10-125121, A  (Matsushita Electric Industrial Co., Ltd.),<br>15 May, 1998 (15.05.98),<br>(Family: none) | 36-41 |

Form PCT/ISA/210 (continuation of second sheet) (July 1998)